# EUROPÄISCHE PATENTSCHRIFT

(11) **EP 1 749 014 B1**
(45) Veröffentlichungstag und Bekanntmachung des Hinweises auf die Patenterteilung: **07.07.2010**
(21) Anmeldenummer: 05752624.6
(22) Anmeldetag: 14.05.2005
(51) Int. Cl.: C07F 1/12

(54) **METALLKOMPLEXE**
METAL COMPLEXES
COMPLEXES METALLIQUES

(30) Priorität: 19.05.2004 DE 102004024736
(43) Veröffentlichungstag der Anmeldung: 07.02.2007
(73) Patentinhaber: Merck Patent GmbH, 64293 Darmstadt (DE)
(72) Erfinder: STÖSSEL, Philipp, 60487 Frankfurt am Main (DE); BREUNING, Esther, 65527 Niedernhausen (DE)
(86) Internationale Anmeldenummer: PCT/EP2005/005309
(87) Internationale Veröffentlichungsnummer: WO 2005/113563

(56) Entgegenhaltungen:
- WO-A-99/15896
- LEHN JEAN-MARIE REGNOUF DE VAINS J-B: "Synthesis of macrobicyclic cryptates incorporating bithiazole, bisimidazole and bipyrimidine binding subunits" TETRAHEDRON LETTERS, ELSEVIER SCIENCE PUBLISHERS, AMSTERDAM, NL, Bd. 30, Nr. 17, 1989, Seiten 2209-2212, XP002956338 ISSN: 0040-4039
- DATABASE CHEMIDPLUS [Online] National Library of Medicine; 9. September 2004 (2004-09-09), "Struktur von Phenanthroline" XP002340553 gefunden im SIS-NLM Database accession no. RN: 12678-01-2

## Beschreibung

Metallorganische Verbindungen, speziell Verbindungen der d⁸-Metalle, werden in naher Zukunft in einer Reihe verschiedenartiger Anwendungen, die im weitesten Sinne der Elektronikindustrie zugerechnet werden können, Einsatz als funktionelle Materialien finden. Bei den auf organischen Komponenten basierenden organischen Elektrolumineszenzvorrichtungen bzw. den organischen lichtemittierenden Dioden (OLEDs) (z. B. US 4539507, US 5151629) ist die Markteinführung bereits erfolgt, wie die Autoradios der Firma Pioneer und die Mobiltelefone der Firmen Pioneer und SNMD mit "organischem Display" belegen. Weitere derartige Produkte stehen kurz vor der Einführung. Dennoch sind hier noch deutliche Verbesserungen nötig, um diese Displays zu einer echten Konkurrenz zu den derzeit marktbeherrschenden Flüssigkristallanzeigen (LCD) zu machen.

Eine Entwicklung, die sich in den letzten Jahren abzeichnet, ist der Einsatz metallorganischer Komplexe, die Phosphoreszenz statt Fluoreszenz zeigen (M. A. Baldo et al., Appl. Phys. Lett. 1999, 75, 4-6). Aus theoretischen Spin-statistischen Gründen ist unter Verwendung metallorganischer Verbindungen als Phosphoreszenzemitter eine bis zu vierfache Energie- und Leistungseffizienz möglich. Ob sich diese Entwicklung durchsetzen wird, hängt davon ab, ob entsprechende Device-Kompositionen gefunden werden, die diese Vorteile (Triplett-Emission = Phosphoreszenz gegenüber Singulett-Emission = Fluoreszenz) auch in den OLEDs umsetzen können. Als wesentliche Bedingungen sind hier insbesondere eine hohe operative Lebensdauer und eine hohe thermische Stabilität, sowohl beim Betrieb, wie auch beim Aufdampfen, zu nennen. Von besonderem Interesse ist dies, vor dem Hintergrund der Seltenheit der Metalle, bei Ruthenium-, Osmium-, Rhodium-; Iridium-, Gold- und Platin-Verbindungen, um deren ressourcenschonende Nutzung zu ermöglichen.

Phosphoreszierende OLEDs zeigen bislang unter anderem folgende Schwachpunkte:
1. Die operative Lebensdauer ist in vielen Fällen noch deutlich zu gering, was einer Markteinführung von (phosphoreszierenden) OLEDs entgegensteht.
2. Viele der bekannten Metallkomplexe besitzen eine geringe thermische Stabilität. Diese führt bei Vakuumdeposition der Metallkomplexe zwangsläufig immer zur Freisetzung organischer Pyrolyseprodukte, die zum Teil schon in geringen Mengen die operative Lebensdauer der OLEDs erheblich verringern. Insbesondere aber auch bei der Reinigung der Metallkomplexe durch Sublimation und beim Aufdampfen durch Vakuumverfahren wäre es wünschenswert, deutlich temperaturstabilere Komplexe zur Verfügung zu haben, da die Zersetzung zu großen Verlusten der Komplexe führt.
3. Viele Komplexe, die als Phosphoreszenzemitter eingesetzt werden sollen, insbesondere rot emittierende Komplexe, sind stark oxidationsempfindlich. Dadurch erschwert sich die Handhabung beträchtlich, da sowohl bei der Synthese, wie auch bei der Reinigung und bei allen weiteren Verarbeitungsschritten bei der Deviceherstellung unter strengem Ausschluss von Sauerstoff gearbeitet werden muss. Hier wäre es wünschenswert, weniger empfindliche Komplexe zur Verfügung zu haben.
4. Viele in der Literatur aufgeführten Metallkomplexe, die in OLEDs bislang Verwendung finden, sind homoleptische, (pseudo)oktaedrische Komplexe, bestehend aus einem Zentralmetall koordiniert an drei zweizähnige Liganden. Komplexe dieses Bautyps können in zwei isomeren Formen, dem meridionalen und dem facialen Isomeren, auftreten. Häufig ist eines der beiden Isomeren thermodynamisch nur wenig bevorzugt. Dies führt dazu, dass unter bestimmten Bedingungen, beispielsweise einer bestimmten Sublimationstemperatur, das eine oder das andere Isomer oder gar Gemische anfallen. Dies ist nicht erwünscht, da sich die beiden Isomeren oft deutlich in ihren physikalischen Eigenschaften (Emissionsspektrum, Ladungstransporteigenschaften, etc.) unterscheiden und somit die Eigenschaften einer OLED schon bei geringen Änderungen des Herstellungsprozesses deutlich voneinander abweichen können.

Es bestand daher ein Bedarf an alternativen Verbindungen, die die oben genannten Schwachpunkte nicht aufweisen, den bekannten Metallkomplexen jedoch in Bezug auf Effizienz und Emissionsfarbe mindestens gleichwertig sind.

Überraschend wurde nun gefunden, dass Kryptate hervorragende und den Stand der Technik übertreffende Eigenschaften bei der Verwendung in organischen elektronischen Bauteilen, insbesondere als Triplett-Emitter, aufweisen. Dies betrifft insbesondere die thermische Stabilität und die Lebensdauer. Diese Verbindungen sind Gegenstand der vorliegenden Erfindung. Die unten genauer ausgeführte Klasse der metallorganischen Kryptate und deren Verwendung in elektrooptischen Komponenten ist neu, ihre effiziente Darstellung und Verfügbarkeit als Reinstoffe ist hierfür aber von großer Bedeutung.

Aus WO 99/15896 sind Seltenerdmetallkryptate für biologische Anwendungen bekannt. Metallorganische Kryptate mit direkten Metall-Kohlenstoff-Bindungen oder die Anwendung der Kryptate in elektronischen Vorrichtungen werden nicht offenbart.

Gegenstand der Erfindung sind metallorganische Kryptate gemäß Formel (1), 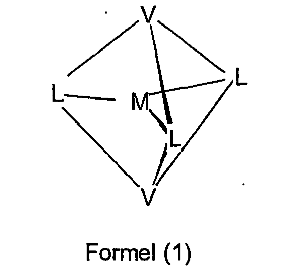 enthaltend mindestens ein Metall M, koordiniert an einen Kryptanden K gemäß Formel (2), 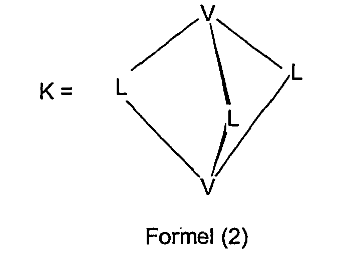 wobei V eine verbrückende Einheit ist, gleich oder verschieden bei jedem Auftreten, enthaltend 1 bis 80 Atome, die die drei Teilliganden L, die gleich oder verschieden bei jedem Auftreten sein können, kovalent miteinander verbindet; die drei Teilliganden L werden durch Formel (3) beschrieben, 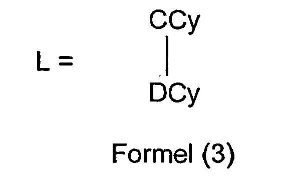 wobei DCy eine substituierte oder unsubstituierte cyclische Gruppe ist, die mindestens ein Donoratom im Ring oder exocyclisch gebunden enthält, über welches die cyclische Gruppe DCy an das Metall gebunden ist, und CCy eine substituierte oder unsubstituierte cyclische Gruppe ist, die mindestens ein Kohlenstoffatom enthält, über welches die cyclische Gruppe CCy an das Metall gebunden ist; die Gruppen DCy und CCy sind über eine kovalente Bindung miteinander verbunden und können zusätzlich über Substituenten miteinander verknüpft sein und so ein polycyclisches, aliphatisches oder aromatisches Ringsystem aufspannen.

Unter einer metallorganischen Verbindung im Sinne dieser Erfindung wird eine Verbindung verstanden, die mindestens eine direkte Metall-Kohlenstoff-Bindung aufweist.

Unter einem Kryptat im Sinne dieser Erfindung wird eine Verbindung zwischen einem Kryptanden und einem Metallion verstanden, in der das Metallion von den Brücken des komplexbildenden Kryptanden dreidimensional umgeben ist. Unter einem Kryptanden im Sinne dieser Erfindung soll ein makropolycyclischer Ligand verstanden werden, insbesondere ein Ligand, in dem zwei Brückenkopfatome bzw. Brückenkopfgruppen durch drei Brücken verbunden sind, die jeweils in der Lage sind, an ein Metallatom bzw. -ion zu koordinieren.

Die cyclischen Gruppen DCy und CCy, die Heterocyclen oder im Falle von CCy auch Homocyclen sein können, können gesättigt, ungesättigt oder aromatisch sein. Bevorzugt sind die Gruppen aromatisch.

Bevorzugt sind erfindungsgemäße Verbindungen gemäß Formel (1), dadurch gekennzeichnet, dass diese nicht geladen, d. h. elektrisch neutral, sind.

Bevorzugt sind erfindungsgemäße Verbindungen gemäß Formel (1), dadurch gekennzeichnet, dass mindestens einer der Teilliganden L, bevorzugt mindestens zwei der Teilliganden L und besonders bevorzugt alle drei Teilliganden L einfach negativ geladen sind.

Bevorzugt sind erfindungsgemäße Verbindungen gemäß Formel (1), dadurch gekennzeichnet, dass alle Teilliganden L innerhalb eines Kryptanden K gleich sind.

Ebenfalls bevorzugt sind erfindungsgemäße Verbindungen gemäß Formel (1), dadurch gekennzeichnet, dass mindestens zwei Teilliganden L verschieden voneinander sind.

Bevorzugt sind erfindungsgemäße Verbindungen gemäß Formel (1), dadurch gekennzeichnet, dass die verbrückende Einheit V als verknüpfendes Atom ein Element der 3., 4., 5. oder 6. Hauptgruppe oder einen 3- bis 6-gliedrigen Homo- oder Heterocyclus enthält.
Die verbrückende Einheit V kann neutral, einfach negativ geladen oder einfach positiv geladen sein. Dabei wird die Ladung von V bevorzugt so gewählt, dass ein neutraler Komplex entsteht. So sind z. B. zwei neutrale verbrückende Einheiten V bevorzugt, wenn es sich um ein dreiwertiges Metallion M³⁺ und drei einfach negative Teilliganden L handelt. Weiterhin sind eine neutrale und eine einfach negative verbrückende Einheit V bevorzugt, wenn es sich um ein vierwertiges Metallion M⁴⁺ und drei einfach negative Teilliganden L handelt. Weiterhin sind zwei einfach negative verbrückende Einheiten V bevorzugt, wenn es sich um ein fünfwertiges Metallion M⁵⁺ und drei einfach negative Teilliganden L handelt. Weiterhin sind eine neutrale und eine einfach positive verbrückende Einheit V bevorzugt, wenn es sich um ein zweiwertiges Metallion M²⁺ und drei einfach negative Teilliganden L handelt. Weiterhin sind zwei einfach positive verbrückende Einheiten V bevorzugt, wenn es sich um ein einwertiges Metallion M⁺ und drei einfach negative Teilliganden L handelt.

Bevorzugt sind erfindungsgemäße Verbindungen gemäß Formel (1), dadurch gekennzeichnet, dass der Kryptand K gemäß Formel (4) eine faciale Koordination am Metall M erzeugt:

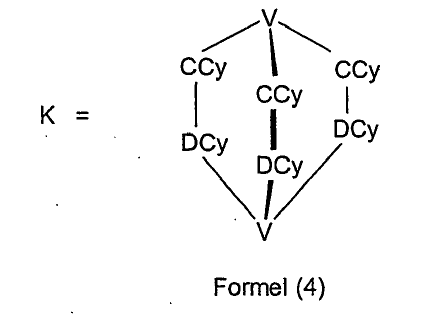

Ebenfalls bevorzugt sind erfindungsgemäße Verbindungen gemäß Formel (1), dadurch gekennzeichnet, dass der Kryptand K gemäß Formel (5) eine meridionale Koordination am Metall M erzeugt:

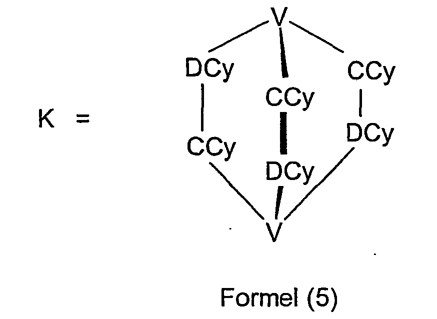

Faciale bzw. meridionale Koordination im Sinne dieser Anmeldung beschreibt die Umgebung des Metalls M mit den sechs Donoratomen. Eine faciale Koordination liegt vor, wenn drei identische Donoratome eine Dreiecksfläche im (pseudo)oktaedrischen Koordinationspolyeder und drei identische, aber von den ersten verschiedene Donoratome eine andere Dreiecksfläche im (pseudo)oktaedrischen Koordinationspolyeder besetzen. Bei einer merdionalen Koordination besetzen drei identische Donoratome den einen Meridian im (pseudo)oktaedrischen Koordinationspolyeder und drei identische, aber von den ersten verschiedene Donoratome den anderen Meridian im (pseudo)oktaedrischen Koordinationspolyeder. Dies ist im Folgenden am Beispiel der Koordination von drei N-Donoratomen und drei C-Donoratomen gezeigt (Schema 1). Da sich diese Beschreibung auf Donoratome bezieht und nicht auf die Cyclen CCy und DCy, die diese Donoratome bereitstellen, können die drei Cyclen CCy und die drei Cyclen DCy bei jedem Auftreten gleich oder verschieden sein und trotzdem einer facialen oder meridionalen Koordination im Sinne dieser Anmeldung entsprechen. Als identische Donoratome werden solche verstanden, die aus den gleichen Elementen (z. B. Stickstoff) bestehen, unabhängig ob diese Elemente in unterschiedliche, gegebenenfalls cyclische Strukturen eingebaut sind.

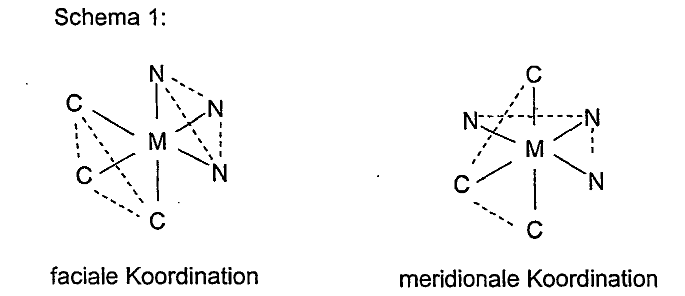

Bevorzugt sind metallorganische Kryptate gemäß den Verbindungen (1) bis (4) mit facialer Koordinationsgeometrie am Metall, 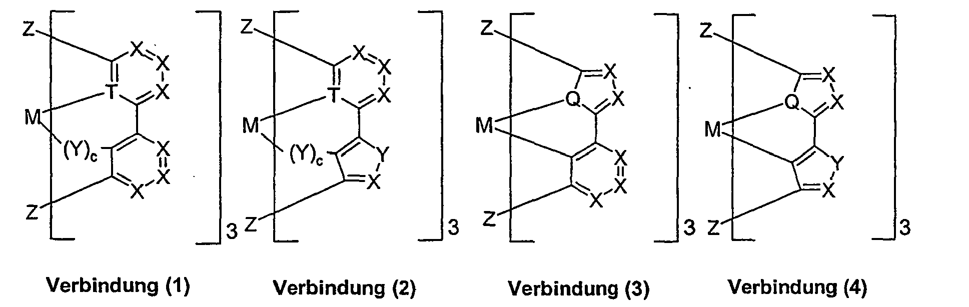 wobei die Symbole und Indizes folgende Bedeutung haben:
- M: ist bei jedem Auftreten gleich oder verschieden ein Hauptgruppenmetallion, ein Übergangsmetallion oder ein Lanthanoid- Ion;
- Q: ist gleich oder verschieden bei jedem Auftreten O, S, Se, Te oder N;
- T: ist gleich oder verschieden bei jedem Auftreten N, P oder C;
- X: ist gleich oder verschieden bei jedem Auftreten CR, N oder P;
- Y: ist gleich oder verschieden bei jedem Auftreten NR¹, O, S, Se, Te, SO, SeO, TeO, SO₂, SeO₂, TeO₂, R¹PO;
- Z: ist gleich oder verschieden bei jedem Auftreten B, BR , B(CR₂)₃, RB(CR₂)₃⁻, B(O)₃, RB(O)₃⁻, B(CR₂CR₂)₃, RB(CR₂CR₂)₃⁻, B(CR₂O)₃, RB(CR₂O)₃⁻, B(OCR₂)₃, RB(OCR₂)₃⁻, Al(O)₃, RAl(O)₃⁻, Al(OCR₂)₃, RAl(OCR₂)₃⁻ , CR, CO⁻, CNR¹₂, RC(CR₂)₃, RC(O)₃, RC(CR₂CR₂)₃, RC(CR₂O)₃, RC(OCR₂)₃, RC(SiR₂)₃, RC(SiR₂CR₂)₃, RC(CR₂SiR₂)₃, RC(SiR₂SiR₂)₃, cis,cis-1,3,5-Cyclohexyl, 1,3,5-(CR₂)₃C₆H₃, SiR, RSi(CR₂)₃, RSi(O)₃, RSi(CR₂CR₂)₃, RSi(OCR₂)₃, RSi(CR₂O)₃, RSi(SiR₂)₃, RSi(SiR₂CR₂)₃, RSi(CR₂SiR₂)₃, RSi(SiR₂SiR₂)₃, N, NO, NR⁺, N(CR₂)₃, RN(CR₂)₃⁺, N(C=O)₃, N(CR₂CR₂)₃, RN(CR₂CR₂)⁺, P, PO, PS, PSe, PTe, P(O)₃, PO(O)₃, P(OCR₂)₃, PO(OCR₂)₃, P(CR₂)₃, PO(CR₂)₃, P(CR₂CR₂)₃, PO(CR₂CR₂)₃, As, AsO, AsS, AsSe, AsTe, As(O)₃, AsO(O)₃, As(OCR₂)₃, AsO(OCR₂)₃, As(CR₂)₃, AsO(CR₂)₃. As(CR₂CR₂)₃, AsO(CR₂CR₂)₃, Sb, SbO, SbS, SbSe, SbTe, Sb(O)₃, SbO(O)₃, Sb(OCR₂)₃, SbO(OCR₂)₃, Sb(CR₂)₃, SbO(CR₂)₃, Sb(CR₂CR₂)₃, SbO(CR₂CR₂)₃, Bi, BiO, BiS, BiSe, BiTe, Bi(O)₃, BiO(O)₃, Bi(OCR₂)₃, BiO(OCR₂)₃, Bi(CR₂)₃, BiO(CR₂)₃, Bi(CR₂CR₂)₃, BiO(CR₂CR₂)₃, S⁺, S(CR₂)₃⁺, S(CR₂CR₂)₃⁺, Se⁺, Se(CR₂)₃⁺, Se(CR₂CR₂)₃⁺, Te⁺,Te(CR₂)₃⁺, Te(CR₂CR₂)₃⁺;
- R: ist gleich oder verschieden bei jedem Auftreten H, F, Cl, Br, I, OH, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -R¹C=CR¹- -C≡C-, Si(R¹)₂, Ge(R¹)₂, Sn(R¹)₂, C=O, C=S, C=Se, C=NR¹, -O-, -S-, -NR¹- oder -CONR¹- ersetzt sein können und wobei ein oder mehrere H-Atome durch F ersetzt sein können, oder ein aromatisches oder heteroaromatisches Ringsystem mit 1 bis 14 C-Atomen, das durch einen oder mehrere, nicht-aromatische Reste R substituiert sein kann, wobei zwei oder mehrere Substituenten R, sowohl am selben Ring als auch an den beiden unterschiedlichen Ringen zusammen wiederum ein weiteres mono- oder polycyclisches, aliphatisches oder aromatisches und/oder benzoannelliertes Ringsystem aufspannen können;
- R¹: ist gleich oder verschieden bei jedem Auftreten H oder ein aliphatischer oder aromatischer Kohlenwasserstoffrest mit 1 bis 20 C-Atomen;
- c: ist gleich oder verschieden bei jedem Auftreten 0 oder 1 mit der Maßgabe, dass c = 0 ist, wenn in dem entsprechenden Teilliganden das Symbol T für N oder P steht.

Darüber hinaus sind ebenfalls bevorzugt die Verbindungen (5) bis (8) mit meridionaler Koordinationsgeometrie am Metall, 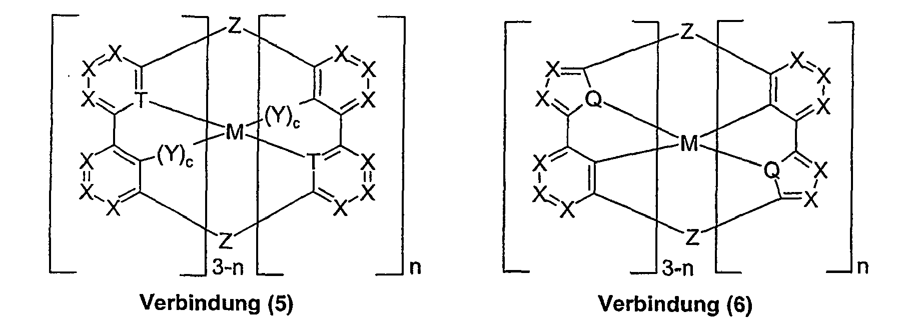 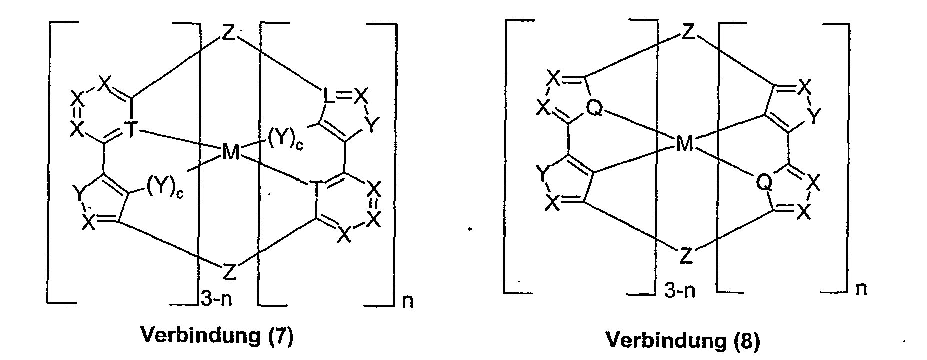 wobei die Symbole und Indizes M, Q, T, X, Y, Z, R, R¹ und c die oben angegebenen Bedeutungen haben und n gleich 1 oder 2 ist.

Ein weiterer Gegenstand der Erfindung sind Verbindungen, die gleichzeitig unterschiedliche Teilliganden L aufweisen, d. h. gemischte Ligandensysteme. Diese werden durch die Verbindungen (9) bis (26) beschrieben: 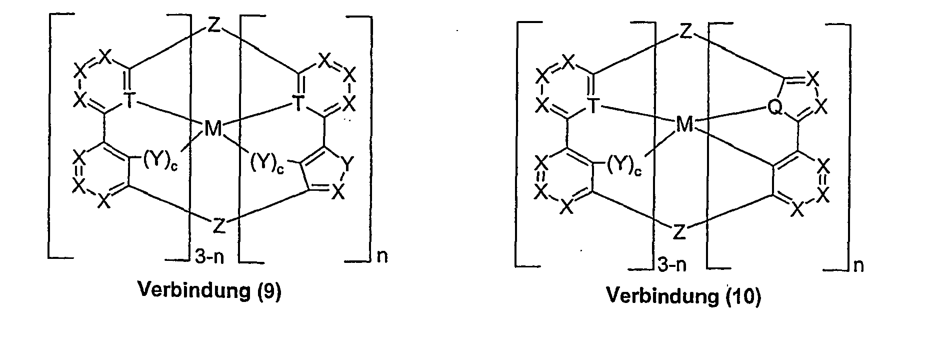 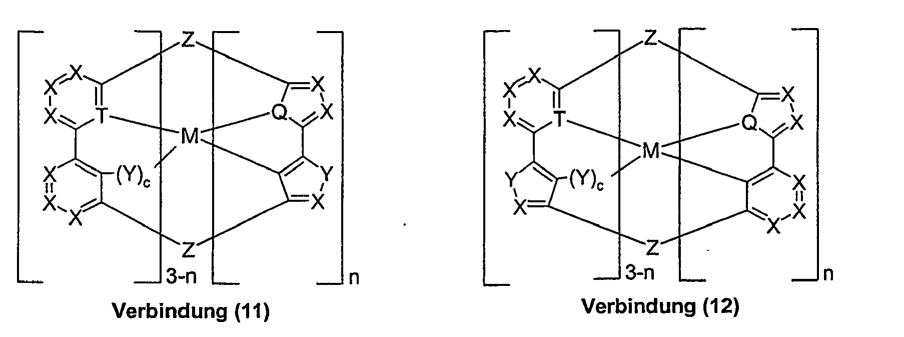 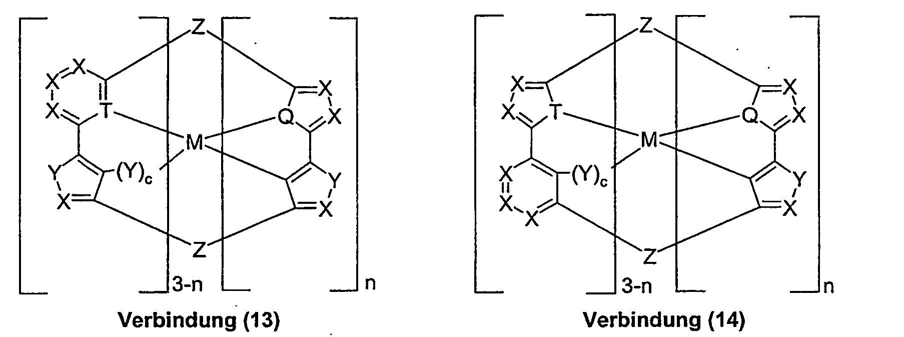 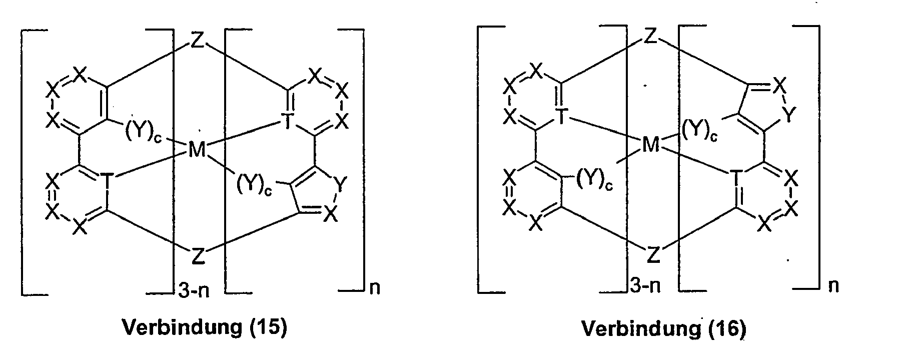 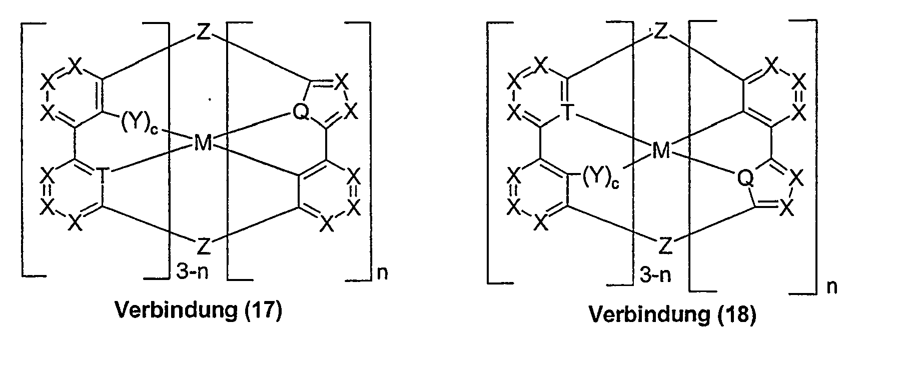 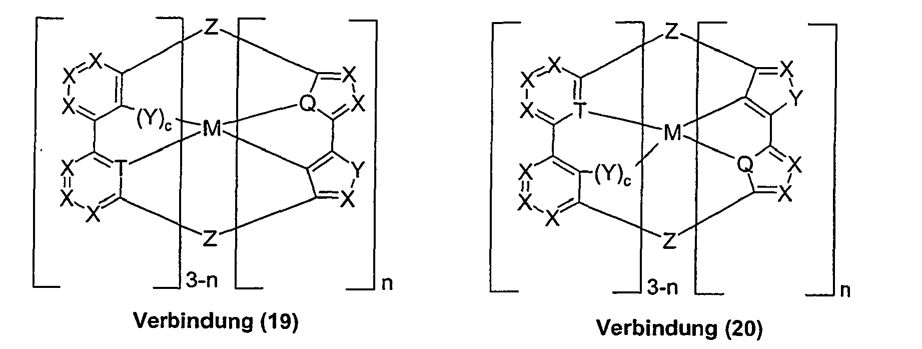 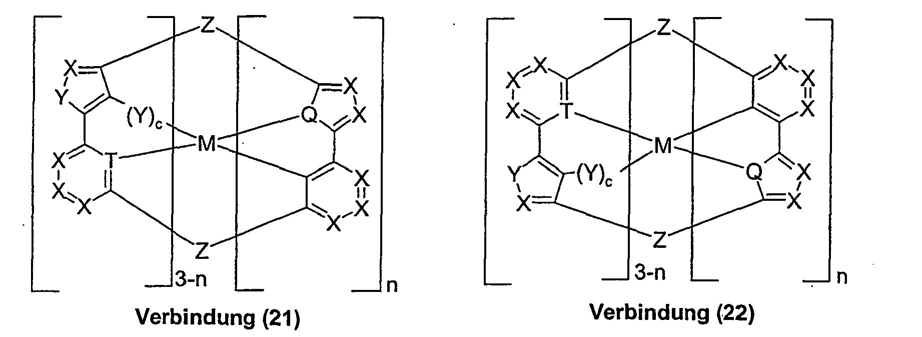 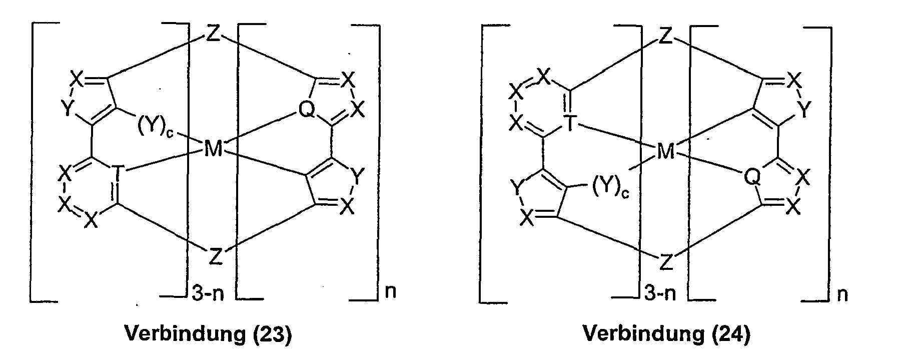 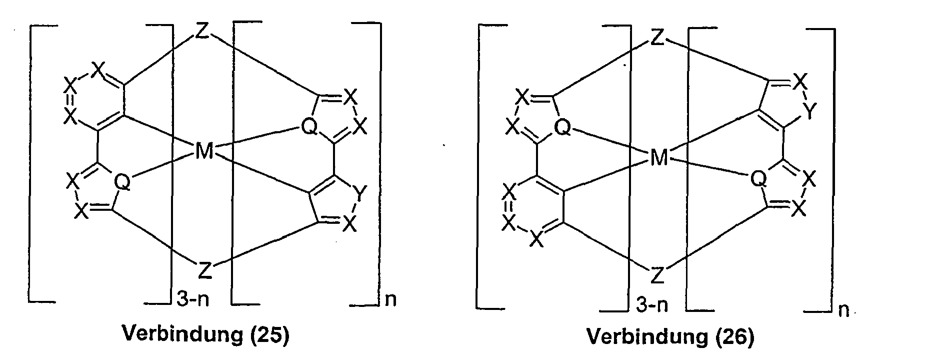 wobei die Symbole und Indizes M, Q, T, X, Y, Z, R, R¹, c und n die oben angegebenen Bedeutungen haben.

Besonders bevorzugt sind erfindungsgemäße Verbindungen (1) bis (26), bei denen M bei jedem Auftreten gleich oder verschieden ein Übergangsmetallion darstellt, ganz besonders bevorzugt Wolfram, Rhenium, Ruthenium, Osmium, Rhodium, Iridium, Palladium, Platin oder Gold.

Weiterhin besonders bevorzugt sind erfindungsgemäße Verbindungen (1) bis (26), bei denen Q bei jedem Auftreten gleich oder verschieden O, S oder Se darstellt, ganz besonders bevorzugt O oder S.

Weiterhin besonders bevorzugt sind erfindungsgemäße Verbindungen (1) bis (26), bei denen T bei jedem Auftreten gleich oder verschieden N oder P darstellt, ganz besonders bevorzugt N.

Weiterhin besonders bevorzugt sind erfindungsgemäße Verbindungen (1) bis (26), bei denen X bei jedem Auftreten gleich oder verschieden CR oder N darstellt.

Weiterhin besonders bevorzugt sind erfindungsgemäße Verbindungen (1) bis (26), bei denen Z bei jedem Auftreten gleich oder verschieden B, BR⁻, B(CR₂)₃, RB(CR₂)₃⁻, B(O)₃, RB(O)₃-, B(OCR₂)₃, RB(OCR₂)₃⁻, Al(O)₃, RAl(O)₃⁻, Al(OCR₂)₃, RAl(OCR₂)₃⁻ , CR, CNR¹₂, RC(CR₂)₃, RC(O)₃, RC(CR₂CR₂)₃, RC(CR₂O)₃, RC(OCR₂)₃, SiR, RSi(CR₂)₃, RSi(O)₃, RSi(CR₂CR₂)₃, RSi(OCR₂)₃, RSi(CR₂O)₃, N, NO, NR⁺, N(CR₂)₃, RN(CR₂)₃⁺, N(C=O)₃, N(CR₂CR₂)₃, RN(CR₂CR₂)⁺, P, PO, P(O)₃, PO(O)₃, P(OCR₂)₃, PO(OCR₂)₃, S⁺, S(CR₂)₃⁺, S(CR₂CR₂)₃⁺ darstellt, ganz besonders bevorzugt B(O)₃, RB(O)₃⁻, B(OCR₂)₃, RB(OCR₂)₃-, Al(O)₃, RAl(O)₃⁻, Al(OCR₂)₃, RAl(OCR₂)₃⁻, P(O)₃, P(OCR₂)₃, RC(CR₂)₃, RSi(O)₃, N(CR₂)₃, RN(CR₂)₃⁺.

Weiterhin besonders bevorzugt sind erfindungsgemäße Verbindungen (1) bis (26), bei denen Y gleich oder verschieden bei jedem Auftreten O, S oder NR¹ darstellt, ganz besonders bevorzugt O oder S.

Weiterhin besonders bevorzugt sind erfindungsgemäße Verbindungen (1) bis (26), bei denen R gleich oder verschieden bei jedem Auftreten H, F, Cl, Br, I, CN, eine geradkettige, verzweigte oder cyclische Alkyl- oder Alkoxygruppe mit 1 bis 6 C-Atomen oder eine Aryl- oder Heteroarylgruppe mit 3 bis 8 C-Atomen darstellt, die durch einen oder mehrere, nicht-aromatische Reste R substituiert sein kann, wobei zwei oder mehrere Substituenten R, sowohl am selben Ring als auch an den beiden unterschiedlichen Ringen zusammen wiederum ein weiteres mono- oder polycyclisches, aliphatisches, aromatisches und/oder benzoannelliertes Ringsystem aufspannen können.

Weiterhin besonders bevorzugt sind erfindungsgemäße Verbindungen (1) bis (26), bei denen der Index c bei jedem Auftreten gleich 0 ist.

Ebenfalls Gegenstand der vorliegenden Erfindung sind die Kryptanden gemäß den Verbindungen (27) bis (52), die die Liganden der erfindungsgemäßen Kryptate (1) bis (26) darstellen: 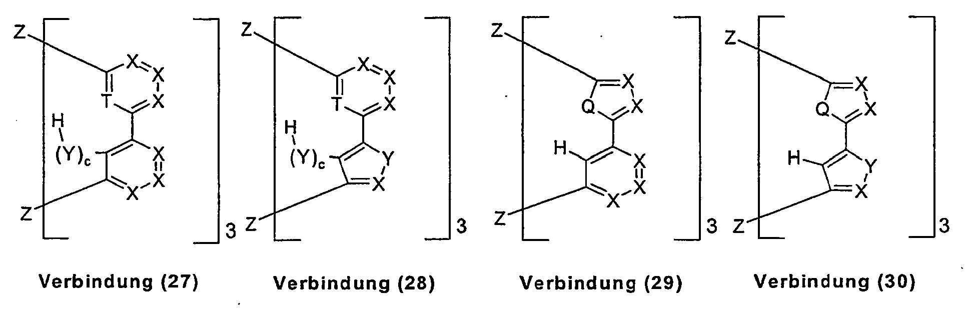 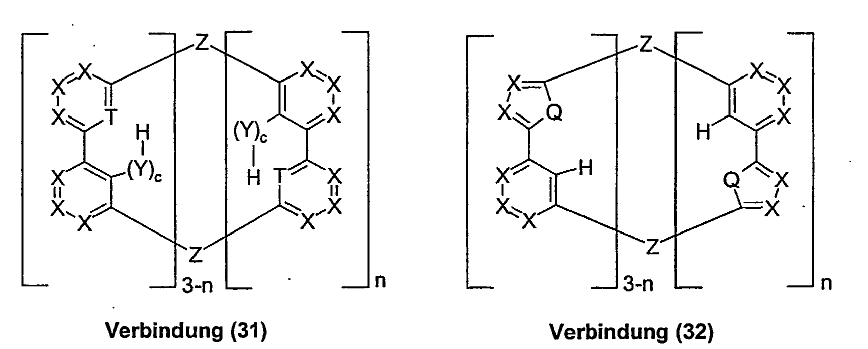 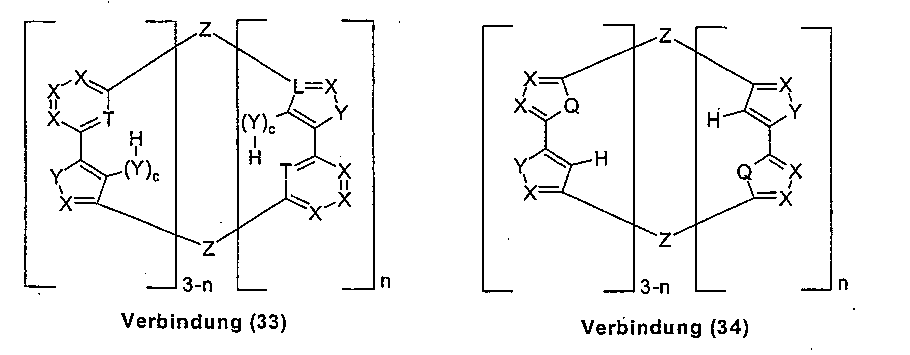 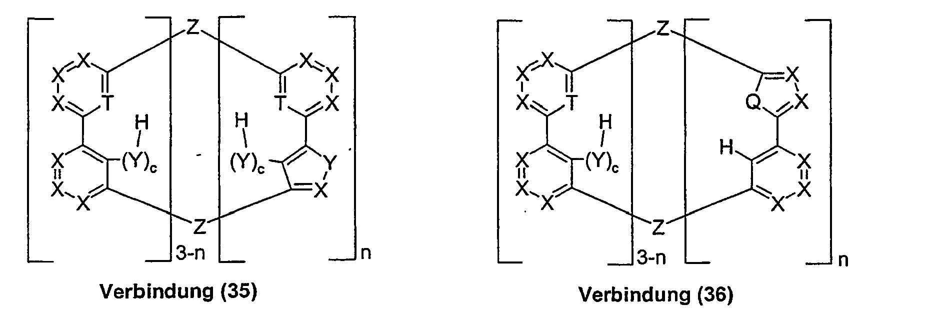 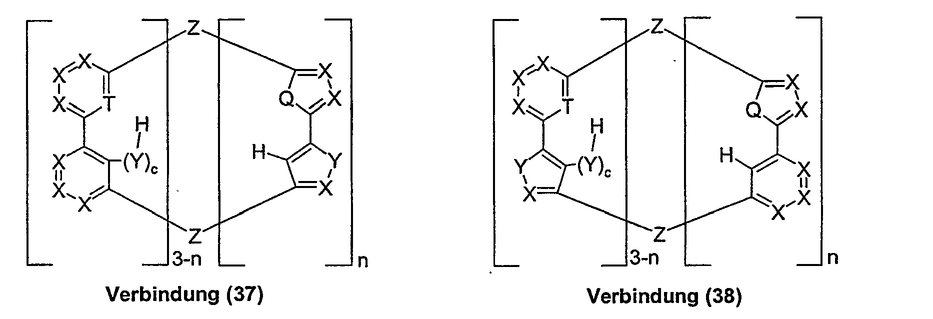 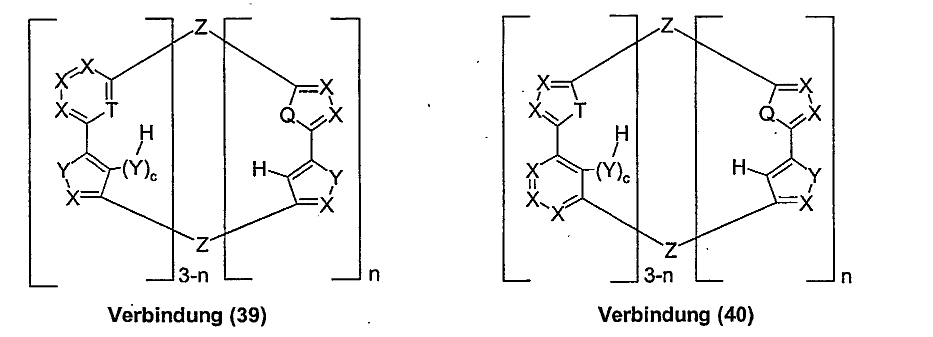 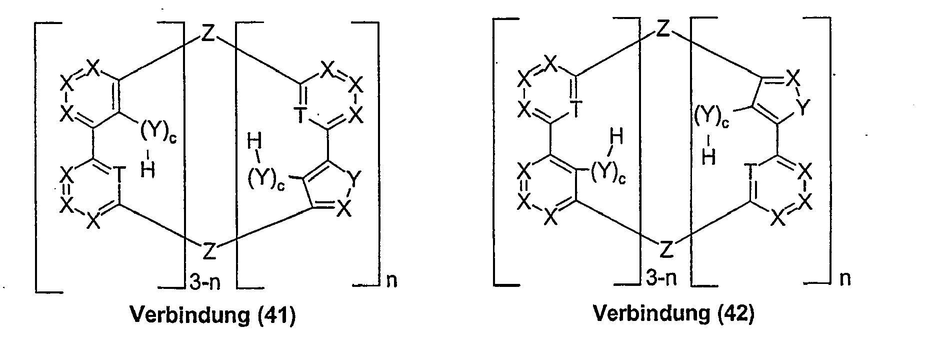 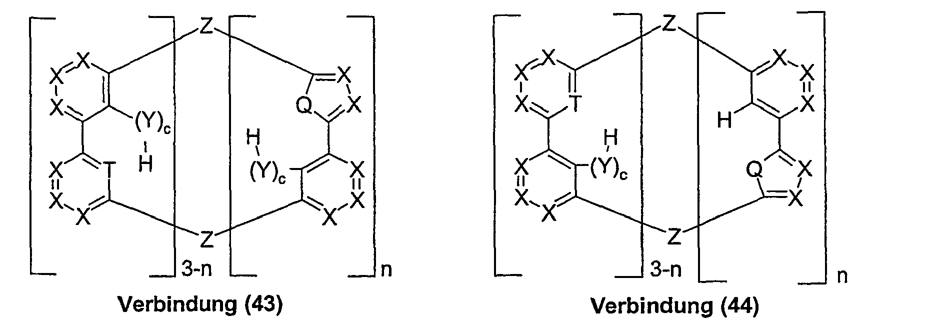 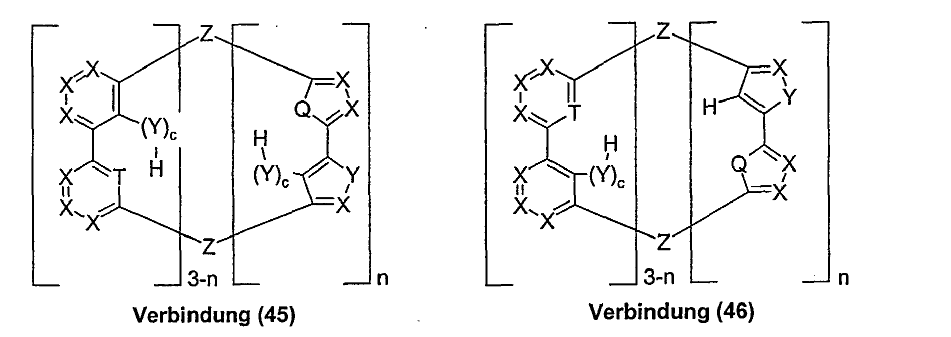 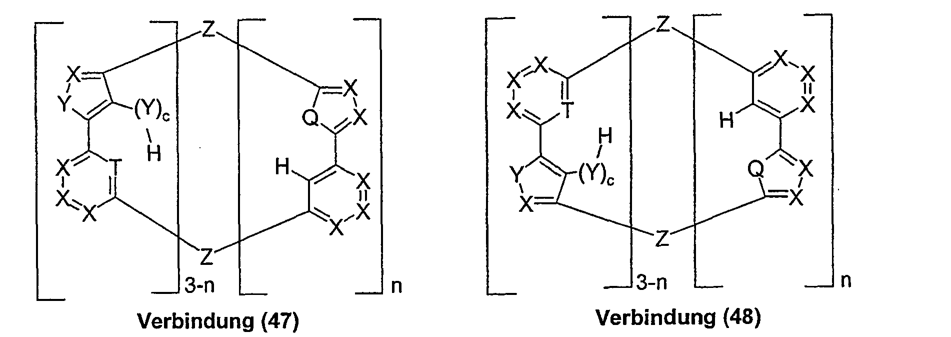 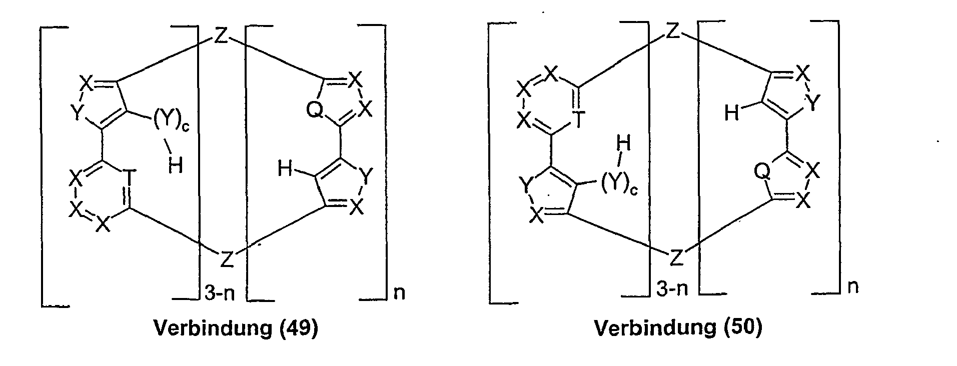 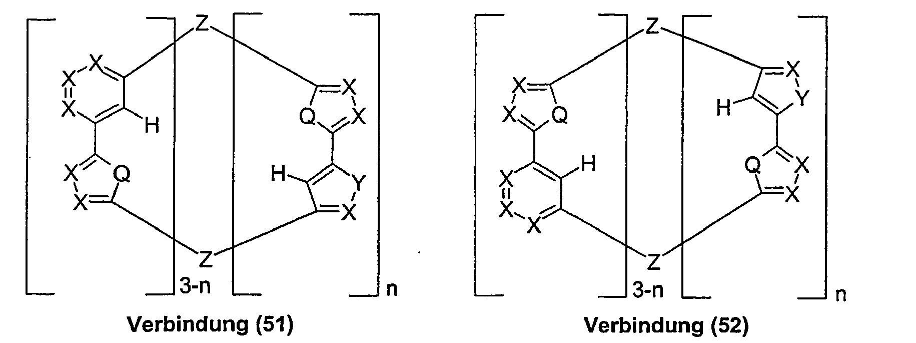 wobei die Symbole und Indizes Q, T, X, Y, Z, R, R¹, c, n die oben angegebenen Bedeutungen haben.

Die erfindungsgemäßen Verbindungen (1) bis (26) sind prinzipiell durch verschiedene Verfahren herstellbar, wobei sich jedoch die im Folgenden beschriebenen Verfahren als besonders gut geeignet herausgestellt haben.

Daher ist ein weiterer Gegenstand der vorliegenden Erfindung ein Verfahren zur Herstellung der Verbindungen (1) bis (26) durch Umsetzung der Kryptanden gemäß Verbindungen (27) bis (52) bzw. Vorstufen dieser Kryptanden mit Metallalkoholaten gemäß Verbindung (53), mit Metallketoketonaten gemäß Verbindung (54) oder Metallhalogeniden gemäß Verbindung (55), 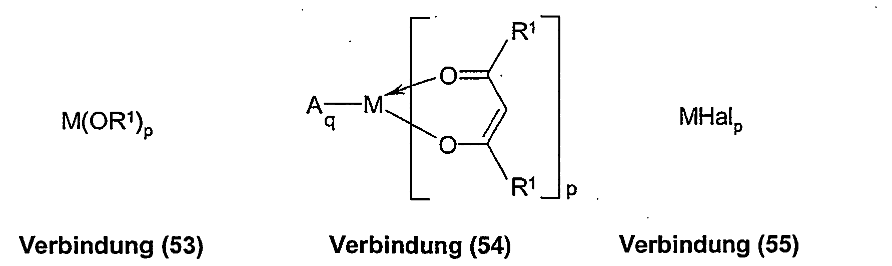 wobei für die Symbole und Indizes gilt:
- M: ist bei jedem Auftreten gleich oder verschieden ein Hauptgruppenmetallion, ein Übergangsmetallion oder ein Lanthanoid-Ion;
- Hal: ist bei jedem Auftreten gleich oder verschieden F, Cl, Br oder I;
- A: ist bei jedem Auftreten gleich oder verschieden ein neutraler oder monoanionischer, einzähniger oder zweizähniger Ligand, beispielsweise ein Halogenid;
- p: ist bei jedem Auftreten gleich oder verschieden 1, 2, 3, 4 oder 5, wobei p in Verbindung (53) und (55) die Wertigkeit des Metalls M angibt;
- q: ist bei jedem Auftreten gleich oder verschieden 0, 1, 2, 3 oder 4, bevorzugt 0, 1 oder 2;
dabei kann die Verbindung (54) auch geladen sein und noch ein Gegenion enthalten; die weiteren Symbole und Indizes haben dieselbe Bedeutung, wie oben angegeben.

Die Synthese kann beispielsweise thermisch, photochemisch oder durch Mikrowellenstrahlung aktiviert werden. Die Synthese derartiger tris-ortho-metallierter Metallkomplexe ist allgemein in WO 02/060910, WO 04/085469 und WO 04/108738 beschrieben.

In einem bevorzugten Syntheseverfahren wird der Kryptand gemäß Verbindungen (27) bis (52) mit Metallverbindungen, wie durch Verbindungen (53), (54) und (55) beschrieben, umgesetzt. Diese Synthesemethode ist schematisch in Schema 2 dargestellt:

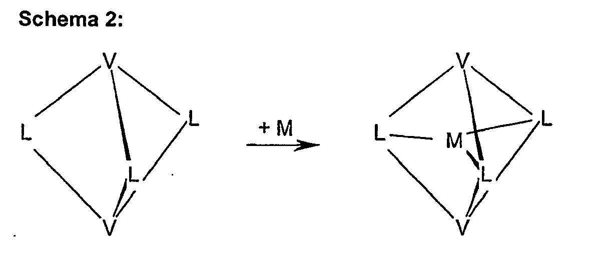

Als weiteres bevorzugtes Syntheseverfahren der erfindungsgemäßen Kryptate hat sich die Templatsynthese erwiesen. Dazu werden Metallverbindungen, wie oben durch Verbindungen (53), (54) und (55) beschrieben, mit einer einfachen, makrocyclischen oder polypodalen Vorstufe der Liganden (27) bis (52) umgesetzt, wobei sich die Ligandenvorstufe vom Liganden dadurch ableitet, dass sie keine oder nur eine statt zwei verbrückende Einheiten V bzw. Z enthält oder dass sie nur zwei statt drei Teilliganden L enthält. Entsprechende polypodale Ligandensysteme und Komplexe sind beispielsweise in WO 04/081017 beschrieben. In einem zweiten Syntheseschritt wird dann in einer komplexanalogen Reaktion, also einer Reaktion am Metallkomplex, die zweite verbrückende Einheit V bzw. Z eingeführt, bzw. es werden beide verbrückenden Einheiten V bzw. Z gebildet, bzw. es wird der dritte Teilligand L eingeführt und mit den verbrückenden Einheiten V bzw. Z verknüpft. Diese Synthesemethoden haben den Vorteil, dass durch die bereits erfolgte Komplexbildung die drei Teilliganden L bereits in einer räumlich bevorzugten Anordnung vorliegen, die einen einfachen Ringsschluss zur Einführung von V bzw. Z bzw. zur Verknüpfung des dritten Teilliganden ermöglicht, was unter Verwendung des nicht komplexierten polypodalen Liganden nur unter großem technischen Aufwand und in schlechten Ausbeuten möglich ist. Diese Synthesemethoden sind schematisch in Schema 3 dargestellt.
Besonders bevorzugt ist die Synthese, ausgehend vom entsprechenden polypodalen Liganden.

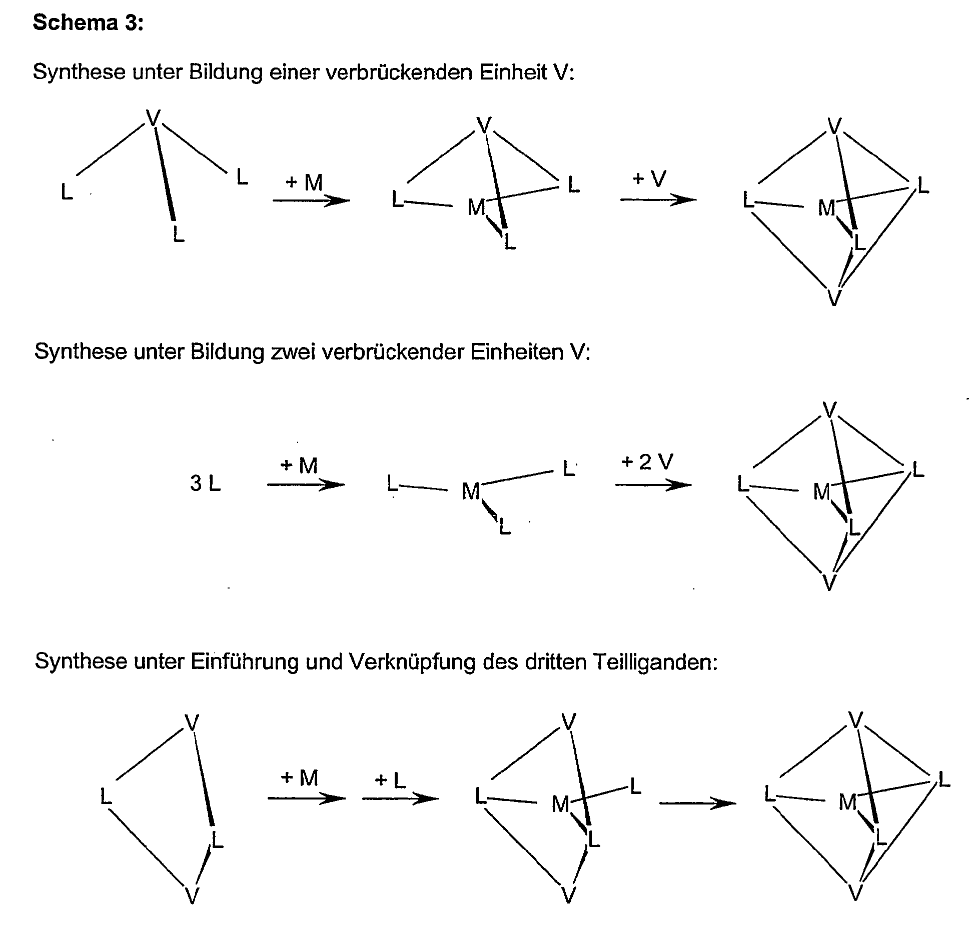

Durch diese Verfahren lassen sich die Komplexe leicht in hoher Reinheit erhalten, bevorzugt in einer Reinheit von > 99 %, ermittelt durch ¹H-NMR oder HPLC.

Mit den hier erläuterten Synthesemethoden lassen sich unter anderem die im Folgenden abgebildeten Beispiele für Verbindungen (1) bis (26) herstellen.

| | | |
|---|---|---|
| 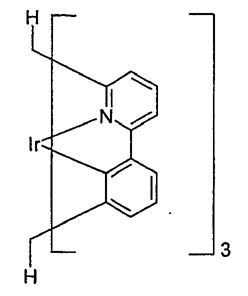 | 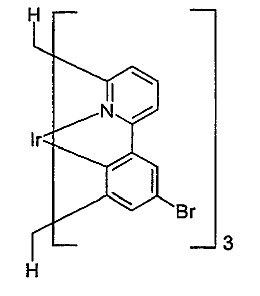 | 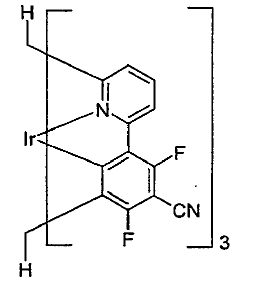 |
| Beispiel 1 | Beispiel 2 | Beispiel 3 |
| 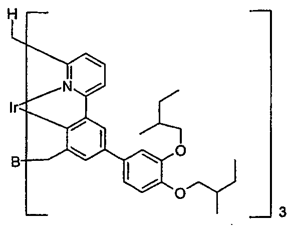 | 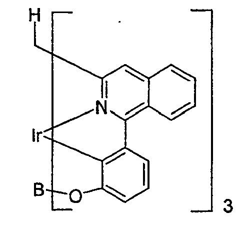 | 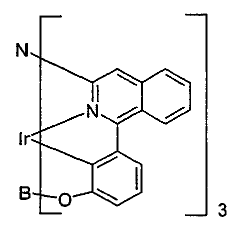 |
| Beispiel 4 | Beispiel 5 | Beispiel 6 |
| 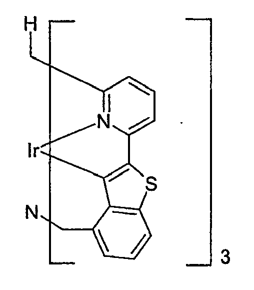 | 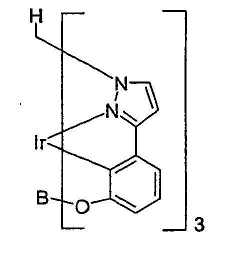 | 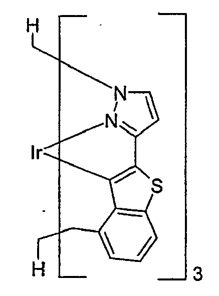 |
| Beispiel 7 | Beispiel 8 | Beispiel 9 |
| 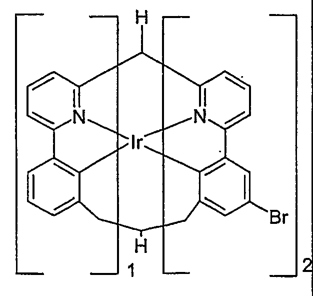 | 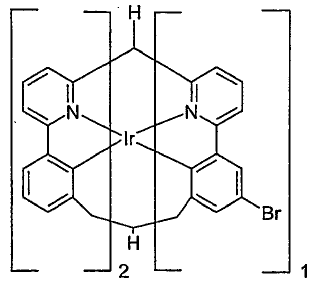 | 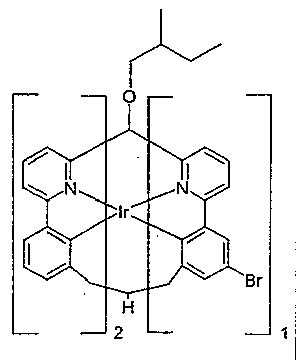 |
| Beispiel 10 | Beispiel 11 | Beispiel 12 |
| 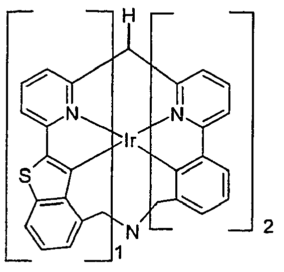 | 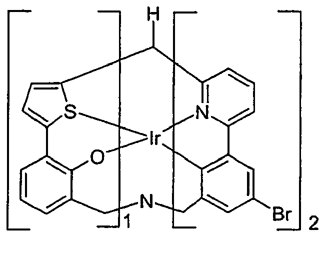 | 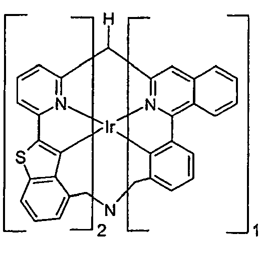 |
| Beispiel 13 | Beispiel 14 | Beispiel 15 |
| 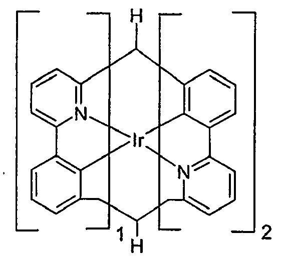 | 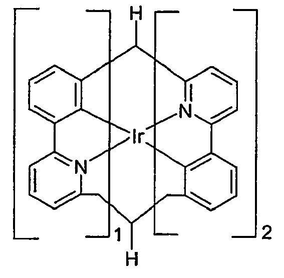 | 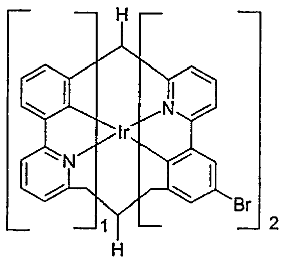 |
| Beispiel 16 | Beispiel 17 | Beispiel 18 |
| 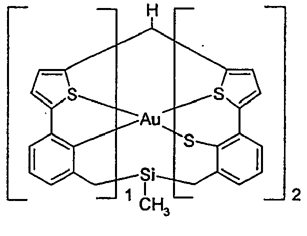 | 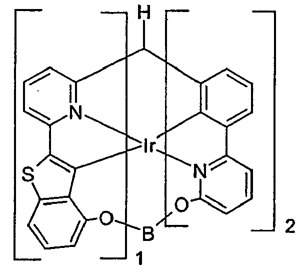 | 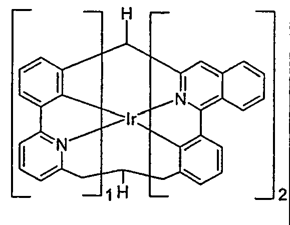 |
| Beispiel 19 | Beispiel 20 | Beispiel 21 |
| 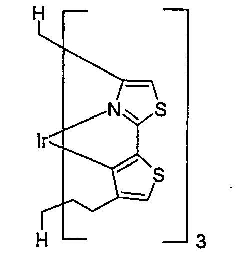 | 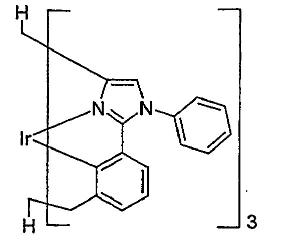 | 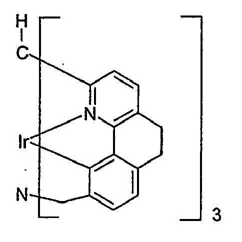 |
| Beispiel 22 | Beispiel 23 | Beispiel 24 |
| 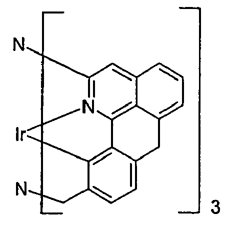 | 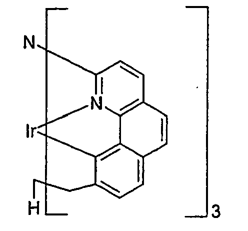 | 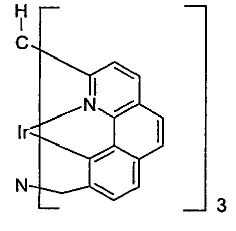 |
| Beispiel 25 | Beispiel 26 | Beispiel 27 |
| 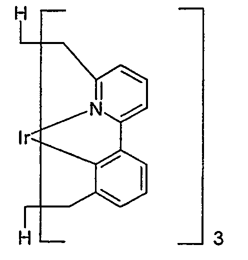 Beispiel 28 | 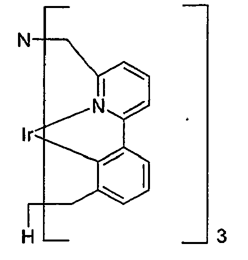 Beispiel 29 | 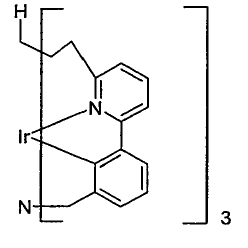 Beispiel 30 |
| 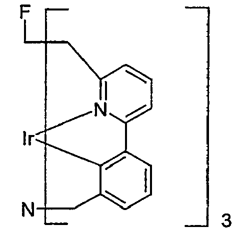 | 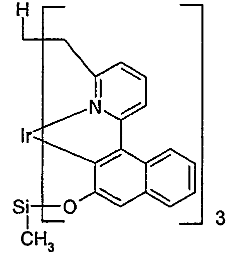 | 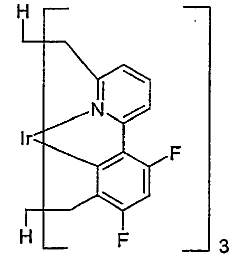 |
| Beispiel 31 | Beispiel 32 | Beispiel 33 |
| 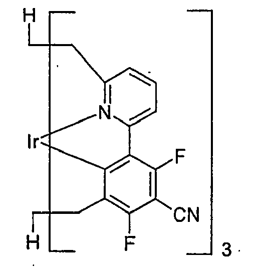 | 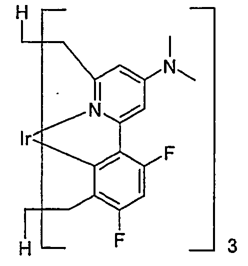 | 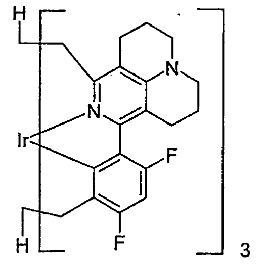 |
| Beispiel 34 | Beispiel 35 | Beispiel 36 |
| 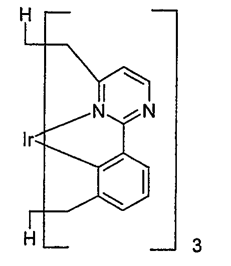 | 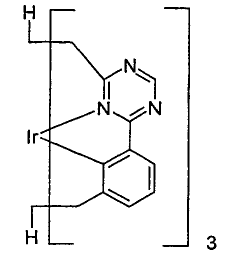 | 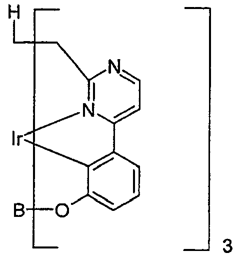 |
| Beispiel 37 | Beispiel 38 | Beispiel 39 |
| 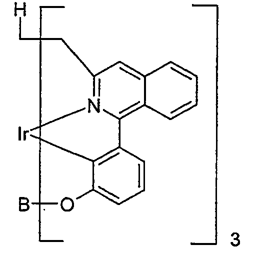 | 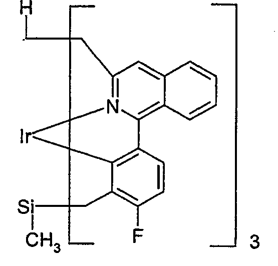 | 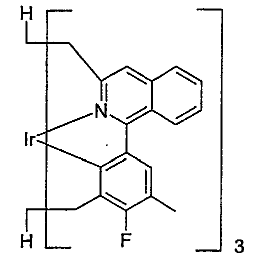 |
| Beispiel 40 | Beispiel 41 | Beispiel 42 |
| 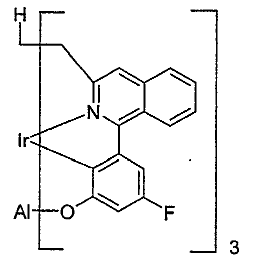 | 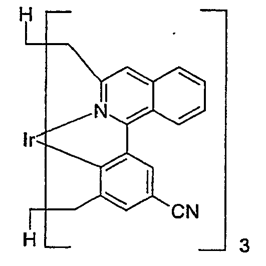 | 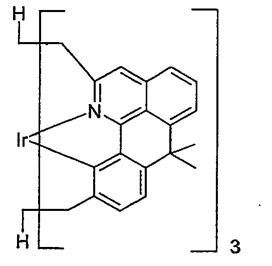 |
| Beispiel 43 | Beispiel 44 | Beispiel 45 |
| 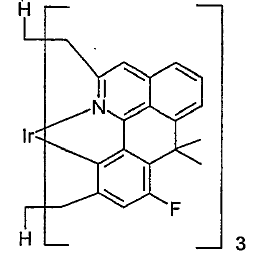 | 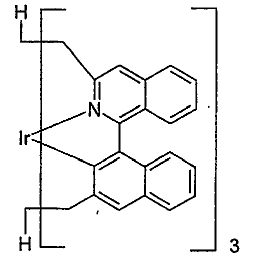 | 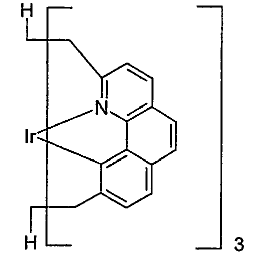 |
| Beispiel 46 | Beispiel 47 | Beispiel 48 |
| 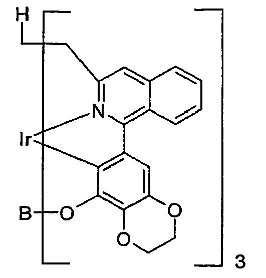 | 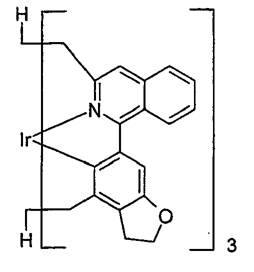 | 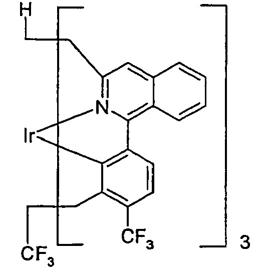 |
| Beispiel 49 | Beispiel 50 | Beispiel 51 |
| 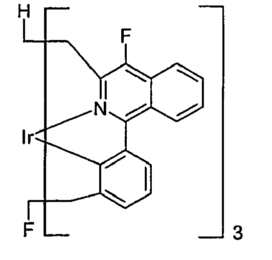 | 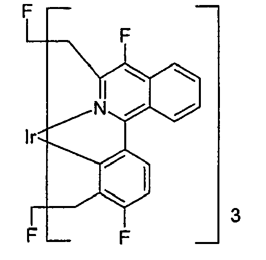 | 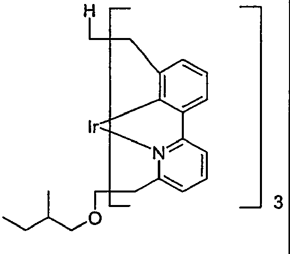 |
| Beispiel 52 | Beispiel 53 | Beispiel 54 |
| 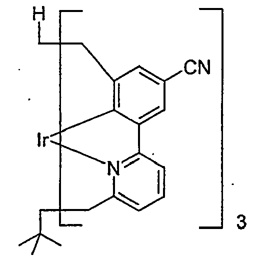 | 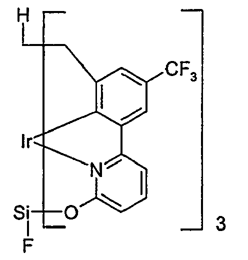 | 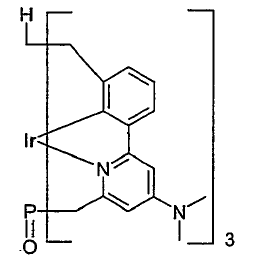 |
| Beispiel 55 | Beispiel 56 | Beispiel 57 |
| 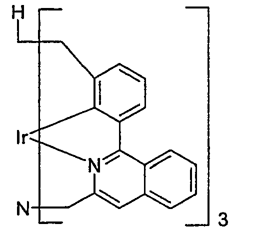 | 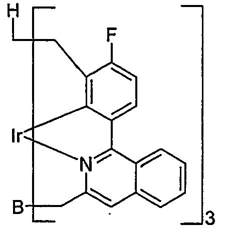 | 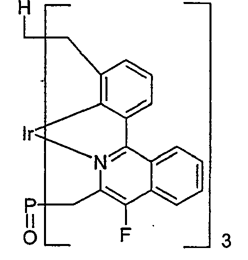 |
| Beispiel 58 | Beispiel 59 | Beispiel 60 |
| 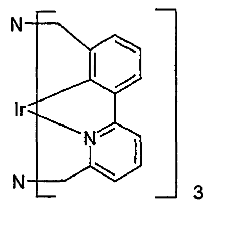 | 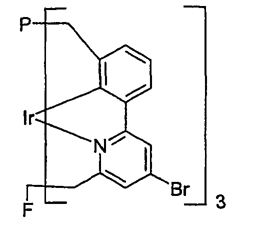 | 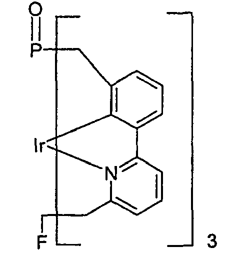 |
| Beispiel 61 | Beispiel 62 | Beispiel 63 |
| 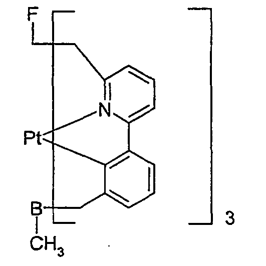 | 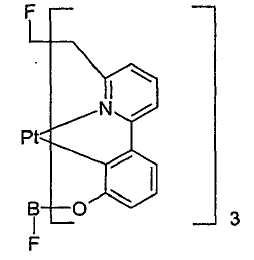 | 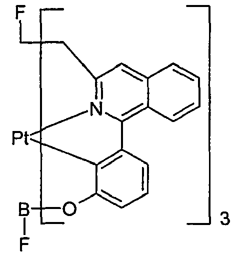 |
| Beispiel 64 | Beispiel 65 | Beispiel 66 |

Die oben beschriebenen erfindungsgemäßen Verbindungen, z. B. Verbindungen gemäß den Beispielen 10, 11, 12, 14 und 18, können auch als Comonomere zur Erzeugung konjugierter, teilkonjugierter oder nicht-konjugierter Polymere oder als Kern von Dendrimeren, z. B. Verbindungen gemäß den Beispielen 2 und 62, Verwendung finden. Die entsprechende Polymerisation erfolgt dabei bevorzugt über die Halogenfunktionalität. So können sie u. a. in lösliche Polyfluorene (z. B. gemäß EP 842208, WO 00/22026), Poly-spirobifluorene (z. B. gemäß EP 707020, EP 894107), Poly-para-phenylene (z. B. gemäß WO 92/18552), Poly-dihydrophenanthrene (z. B. gemäß WO 05/014689), Poly-phenanthrene (z. B. gemäß der nicht offen gelegten Anmeldung DE 102004020298.2), Polycarbazole (z. B. gemäß WO 04/070772, WO 04/113468), Polyvinylcarbazole, Polythiophene (z. B. gemäß EP 1028136), Silan-haltige Polymere (z. B. der nicht offen gelegten Anmeldung DE 102004023278.4) oder auch Copolymere aus mehreren dieser Einheiten einpolymerisiert werden.

Weiterer Gegenstand der Erfindung sind somit konjugierte, teilkonjugierte und nicht-konjugierte Polymere oder Dendrimere, enthaltend ein oder mehrere Kryptate gemäß Formel (1) bzw. Verbindungen (1) bis (26), wobei ein oder mehrere der oben definierten Substituenten R eine Bindung zum Polymer oder Dendrimer darstellen. Weiterhin können die erfindungsgemäßen Metallkomplexe auch funktionalisiert und so zu erweiterten Metallkomplexen umgesetzt werden. Hier ist als Beispiel die Funktionalisierung mit Arylboronsäuren gemäß SUZUKI oder mit Aminen gemäß HARTWIG-BUCHWALD zu nennen.

Die oben beschriebenen erfindungsgemäßen Verbindungen, Polymere oder Dendrimere finden Verwendung als aktive Komponenten in elektronischen Bauteilen, wie z. B. organischen Leuchtdioden (OLEDs), organischen integrierten Schaltungen (O-ICs), organischen Feld-Effekt-Transistoren (OFETs), organischen Dünnfilmtransistoren (OTFTs), organischen Solarzellen (O-SCs), organischen optischen Detektoren oder organischen Laserdioden (O-Laser).

Aktive Komponenten sind beispielsweise Ladungsinjektions- oder Ladungstransportmaterialien, Ladungsblockiermaterialien und Emissionsmaterialien. Besonders bevorzugt werden die Verbindungen als Emissionsmaterialien eingesetzt.

Gegenstand der Erfindung ist also weiterhin die Verwendung organometallischer Kryptate gemäß Formel (1) in elektronischen Bauteilen, besonders bevorzugt ist die Verwendung von Verbindungen (1) bis (26).

Weiterhin Gegenstand der Erfindung sind organische elektronische Bauteile, wie z. B. organische integrierte Schaltungen (O-ICs), organische Feld-Effekt-Transistoren (OFETs), organische Dünnfilmtransistoren (OTFTs), organische Solarzellen (O-SCs), organische optische Detektoren oder organische Laserdioden (O-Laser), insbesondere aber organische Leuchtdioden (OLEDs), enthaltend ein oder mehrere Kryptate. Bevorzugt sind organische elektronische Bauteile, enthaltend ein oder mehrere organometallische Kryptate gemäß Formel (1). Besonders bevorzugt sind organische elektronische Bauteile, enthaltend ein oder mehrere Kryptate gemäß Verbindungen (1) bis (26), wobei die oben genannten Bevorzugungen für die Verbindungen (1) bis (26) auch für die elektronischen Bauteile gelten.

Die Verbindungen zeichnen sich durch folgende Vorteile aus:
1. Im Gegensatz zu vielen Metallkomplexen gemäß dem Stand der Technik, die der teilweisen oder vollständigen pyrolytischen Zersetzung bei Sublimation unterliegen, weisen die erfindungsgemäßen Verbindungen eine hohe thermische Stabilität auf. Dies führt bei Verwendung in entsprechenden Vorrichtungen zu einer deutlichen Erhöhung der operativen Lebensdauer.
2. Die erfindungsgemäßen Verbindungen sind reproduzierbar in verlässlicher, hoher Reinheit herstellbar und weisen keine Chargenschwankungen auf. Weiterhin lassen sie sich problemlos und ohne erkennbare Zersetzung zur Reinigung oder zur Herstellung der elektronischen Vorrichtung sublimieren. Durch die hohe thermische Stabilität der Komplexe wird deren ressourcenschonender Einsatz möglich.
3. Die erfindungsgemäßen Verbindungen, eingesetzt in Elektrolumineszenzvorrichtungen, führen zu hohen Effizienzen und zu steilen Strom-Spannungs-Kurven.
4. Die erfindungsgemäßen Verbindungen weisen gute, zum Teil exzellente Löslichkeit in organischen Lösemitteln auf. Damit lassen sich diese Materialien leichter aus Lösung reinigen, beispielsweise durch Umkristallisation, Chromatographie, etc., und sie sind auch aus Lösung durch Beschichtungs- oder Drucktechniken verarbeitbar. Auch bei der üblichen Verarbeitung durch Verdampfen ist diese Eigenschaft von Vorteil, da so die Reinigung der Anlagen bzw. der eingesetzten Schattenmasken erheblich erleichtert wird.
5. Die erfindungsgemäßen Verbindungen weisen eine höhere Sauerstoffstabilität auf als Komplexe gemäß dem Stand der Technik. Die technische Handhabung dieser Komplexe ist dadurch deutlich vereinfacht.

Die vorliegende Erfindung wird durch die folgenden Beispiele näher erläutert, ohne sie darauf beschränken zu wollen. Der Fachmann kann aus den Schilderungen ohne erfinderisches Zutun weitere erfindungsgemäße Kryptate herstellen und diese in organischen elektronischen Vorrichtungen verwenden.

### Beispiele:

Die nachfolgenden Synthesen wurden, sofern nicht anders angegeben, unter einer Schutzgasatmosphäre durchgeführt. Die Edukte wurden von ALDRICH bzw. ABCR (Lösemittel, 3-Brombenzylbromid, Bromwasserstoff in Eisessig, Zink, 2-Brom-6-methoxypyridin, Pyridiniumhydrochlorid, Boran - 1 M in THF, Natriumdichlorodiacetylacetonatoiridium(III)) bezogen. 3-Brombenzylphosphoniumbromid (Organikum, 19. Auflage, 1993, Johann Ambrosius Barth Verlagsgesellschaft, Edition Deutscher Verlag der Wissenschaften, Leipzig, Berlin, Heidelberg, S. 215) und Bis(3-brombenzyl)keton (H. Sauriat-Dorizon et al., J. Org. Chem., 2003, 68, 2, 240.) wurden nach Literaturmethoden dargestellt.

### Beispiel 1: 1,1,2-Tris(3-brombenzyl)ethen

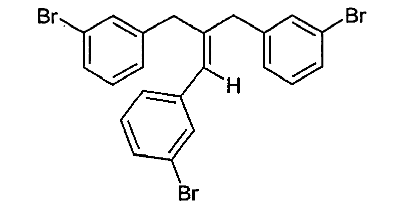

Eine Suspension von 7.2 g (300 mmol) Natriumhydrid in 2000 mL Toluol wurde mit 164.2 g (320 mmol) 3-Brombenzyl-triphenylphosphoniumbromid versetzt. Dieses Gemisch wurde 3 h bei 80 °C gerührt. Anschließend wurde tropfenweise mit einer Lösung von 110.4 g (300 mmol) Bis(3-brombenzyl)keton in 500 mL Toluol versetzt und weitere 48 h bei 80 °C gerührt. Nach Erkalten der Reaktionsmischung wurde vom entstandenen Niederschlag abgesaugt. Der Niederschlag wurde mit 100 mL Toluol gewaschen, die vereinigten organische Phasen wurden zur Trockene eingeengt. Der Rückstand wurde in 1000 mL n-Hexan aufgenommen, das Hexan wurde abdekantiert und der Rückstand erneut zweimal mit je 300 mL n-Hexan extrahiert. Die vereinigten Hexanphasen wurden auf ein Volumen von ca. 500 mL eingeengt und über 200 g Aluminiumoxid (Aktivitätsstufe 4) filtriert. Das Filtrat wurde eingeengt, wobei das Produkt als fahlgelbes Öl verblieb. Die Ausbeute bei einer Reinheit von ca. 97 % betrug 152.3 g (292 mmol), entsprechend 97.4 % d. Th. ¹H-NMR (CDCl₃): δ [ppm] = 7.42-7.34 (m, 4H), 7.30-7.22 (m, 2H), 7.19-7.14 (m, 4H), 7.08-7.00 (m, 2H), 6.49 (s, 1H, CH), 3.47 (s, 2H, CH₂), 3.32 (s, 2H, CH₂):

### Beispiel 2: Tris(3-brombenzyl)brommethan

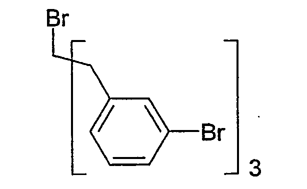

Eine Lösung von 140.7 g (270 mmol) 1,1,2-Tris(3-brombenzyl)ethen in 1000 mL Eisessig wurde tropfenweise mit 500 mL einer 30 Gew.%-igen Lösung von Bromwasserstoff in Eisessig versetzt. Nach 48 h Rühren bei Raumtemperatur wurde der farblose Niederschlag abgesaugt, zweimal mit je 200 mL Eisessig gewaschen und anschließend im Vakuum getrocknet. Die Ausbeute bei einer Reinheit von ca. 97 % betrug 157.2 g (261 mmol), entsprechend 96.7 % d. Th.
¹H-NMR (CDCl₃): δ [ppm] = 7.45 (s, 3H, H-2), 7.42 (d, ³J_{HH} = 8.0 Hz, 3H, H-4), 7.22 (d, ³J_{HH} = 8.0 Hz, 3H, H-6), 7.18 (dd, ³J_{HH} = 8.0 Hz, ³J_{HH} = 8.0 Hz, 3H, H-5), 3.04 (s, 6H CH₂).

### Beispiel 3: Tris(3-brombenzyl)methan

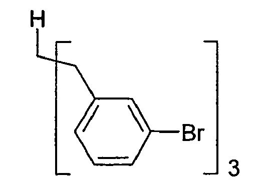

Eine Suspension von 150.5 g (250 mmol) Tris(3-brombenzyl)brommethan und 163.5 g (2.5 mol) Zinkstaub in 2000 mL Eisessig wurde 6 h bei 50 °C gerührt. Nach Erkalten wurde die Reaktionsmischung über Kieselgel filtriert (Vorsicht: Der Filterrückstand ist pyrophor!). Das Filtrat wurde am Vakuum vom Eisessig befreit, und der Rückstand wurde in 1000 mL Dichlormethan aufgenommen. Nach Waschen der Dichlormethanphase mit Wasser (2 x 500 mL), Trocknen über Natriumsulfat /Natriumhydrogencarbonat und Einengen wurde der Rückstand durch Aufnehmen in 500 mL Toluol und azeotropes Abdestillieren des Toluos von letzten Wasserspuren befreit. Die Ausbeute bei einer Reinheit von ca. 97 % betrug 122.9 g (235 mmol), entsprechend 94.0 % d. Th..
¹H-NMR (CDCl₃): δ [ppm] = 7.29 (d, ³J_{HH} = 8.0 Hz, 3H, H-4), 7.19 (s, 3H, H-2), 7.10 (dd, ³J_{HH} = 8.0 Hz, ³J_{HH} = 8.0 Hz, 3H, H-5), 6.97 (d, ³J_{HH} = 8.0 Hz, 3H, H-6), 2.46 (d, ³JHH = 7.0 Hz, 6H, CH₂), 2.19 (sep., ³J_{HH} = 7.0 Hz, 1H, CH).

### Beispiel 4: Tris(benzyl-3-boronsäure)methan

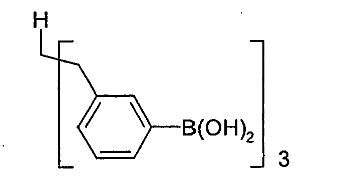

Aus einer Lösung von 120.3 g (230 mmol) Tris(3-brombenzyl)methan und 5.4 ml (69 mmol) 1,2-Dichlorethan in 1000 mL THF und 18.6 g (765 mmol) Magnesium (angeätzt mit einem Körnchen Jod) wurde das entsprechende Grignardreagenz dargestellt. Das Grignardreagenz wurde während 1 h in eine auf -78 °C gekühlte Mischung von 111.5 mL (995 mmol) Trimethylborat und 600 mL THF getropft, wobei die Temperatur-60 °C nicht überschritt. Nach langsamem (ca. 12 h) Erwärmen des Reaktionsgemisches auf RT wurde ein Gemisch von 80 mL konz. HCl und 400 mL Wasser zugesetzt. Nach 30 min. Rühren wurde die organische Phase abgetrennt und mit 500 mL ges. Kochsalzlösung gewaschen. Die organische Phase wurde zur Trockne eingeengt. Der ölige Rückstand wurde aus 400 mL Acetonitril und 1000 mL Wasser in der Siedehitze umkristallisiert. Die Ausbeute bei einer Reinheit von ca. 97 % betrug 81.1 g (194 mmol), entsprechend 84.3 % d. Th..
¹H-NMR (DMSO): δ [ppm] = 7.97 (br. s, 6H, OH), 7.61 (d, ³J_{HH} = 7.6 Hz, 3H, H-4), 7.57 (s, 3H, H-2), 7.26 (dd, ³J_{HH} = 7.6 Hz, ³J_{HH} = 7.6 Hz, 3H, H-5), 7.16 (d, ³J_{HH} = 7.6 Hz, 3H, H-6), 2.47 (d, ³J_{HH} = 6.7 Hz, 6H, CH₂), 2.28 (sep., ³J_{HH} = 6.7 Hz, 1H, CH).

### Beispiel 5: Tris(3-(6-methoxy-2-pyridyl)benzyl)methan

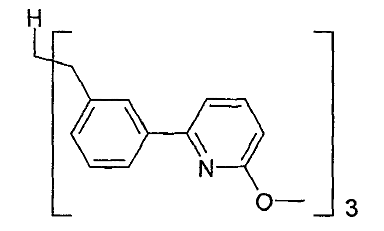

Eine entgaste Suspension von 4.18 g (10 mmol) Tris(benzyl-3-boronsäure)methan, 5.5 mL (45 mmol) 2-Brom-6-methoxypyridin und 9.54 g (90 mmol) Natriumcarbonat in einem Gemisch aus 120 mL 1,2-Dimethoxyethan, 30 mL Ethanol und 90 mL Wasser wurde mit 347 mg (0.3 mmol) Tetrakis(triphenylphosphino)palladium(0) versetzt und 48 h unter Rückfluss erhitzt. Nach Erkalten wurde die Reaktionsmischung mit 500 mL Dichlormethan versetzt und fünfmal mit 500 mL Wasser gewaschen. Chromatographie der über Natriumsulfat getrockneten und eingeengten organischen Phase über Kieselgel mit Hexan:Ethylacetat (1:1) ergab 5.0 g (8.3 mmol), entsprechend 83.1 % d. Th., eines fahlgelben Öls.
¹H-NMR (CDCl₃): δ [ppm] = 7.78 (m, 6H), 7.65 (m, 6H), 7.35 (dd, ³J_{HH} = 8.0 Hz, ³J_{HH} = 8.0 Hz, 3H), 7.21-7.14 (m, 6H), 3.92 (s, 9H, CH₃), 2.76 (d, ³J_{HH} = 7.0 Hz, 6H, CH₂), 2.52 (sep., ³J_{HH} = 7.0 Hz, 1H, CH).

### Beispiel 6: Tris(3-(6-hydroxy-2-pyridyl)benzyl)methan

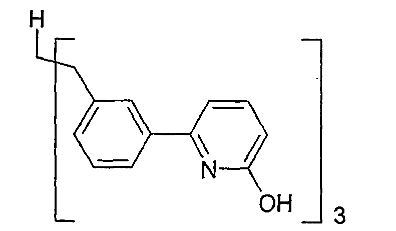

Ein Gemisch aus 4.9 g (8.0 mmol) Tris(3-(6-methoxy-2-pyridyl)benzyl)methan und 7.4 g (64 mmol) Pyridiniumhydrochlorid wurde 3 h auf 190 °C erhitzt. Nach Erkalten wurde das Gemisch in 200 mL Wasser aufgenommen und mit 1 N Kaliumhydroxidlösung auf pH = 7.7 eingestellt. Die wässrige Phase wurde fünfmal mit 200 mL Dichlormethan extrahiert. Die organische Phase wurde über Magnesiumsulfat getrocknet und über eine kurze Fritte mit Kieselgel filtriert. Nach Entfernen des Lösungsmittels wurde der Rückstand aus tert-Butyl-methylether:n-Heptan (1:2) umkristallisiert. Die Ausbeute bei einer Reinheit von ca. 97 % betrug 3.8 g (6.7 mmol), entsprechend 83.8 % d. Th..
¹H-NMR (CDCl₃): δ [ppm] = 11.44 (br. s, 3H), 7.88 (m, 6H), 7.70 (m, 6H), 7.39 (dd, ³J_{HH} = 8.0 Hz, ³J_{HH} = 8.0 Hz, 3H), 7.26-7.13 (m, 6H), 2.78 (d, ³J_{HH} = 7.0 Hz, 6H, CH₂), 2.51 (sep., ³J_{HH} = 7.0 Hz, 1H, CH).

### Beispiel 7: Mono[tris(3-(6-hydroxy-2-pyridyl)benzyl)methan]-iridium(III)

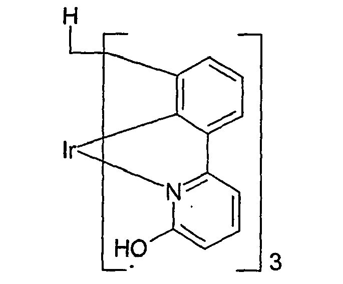

Eine Suspension von 2.83 g (5 mmol) Tris(3-(6-hydroxy-2-pyridyl)benzyl)methan und 2.42 g (5 mmol) Natriumdichlorodiacetylacetonatoiridium(III) in 100 mL Triethylenglykol wurde 40 h bei 220 °C Ölbadtemperatur gerührt. Nach Erkalten der Reaktionsmischung auf 60 °C wurde diese in ein Gemisch aus 100 mL 5N Salzsäure und 500 mL Ethanol gegossen und die so entstandene Suspension 1 h nachgerührt. Dann wurde vom gelben, mikrokristallinen Feststoff abgesaugt (P3). Dieser wurde dreimal mit je 50 mL eines Gemischs aus 100 mL 5N Salzsäure und 500 mL Ethanol, je dreimal mit 50 mL eines Wasser-Ethanol-Gemisch (1:1, v:v) und abschließend dreimal mit je 50 mL Ethanol gewaschen und im Vakuum getrocknet. Die Ausbeute bei einer Reinheit von ca. 99.5 % betrug 1.84 g (2.4 mmol), entsprechend 48.8 % d. Th.
MS (FAB): m/e = 755.

### Beispiel 8: Synthese des Kryptats K1

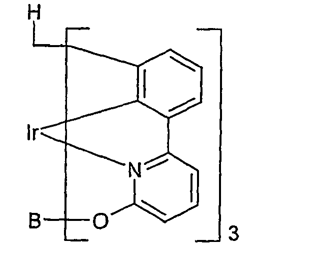

Eine Suspension von 1.51 g (2 mmol) Mono[tris(3-(6-hydroxy-2-pyridyl)benzyl)methan]-iridium(III) in 300 mL THF wurde tropfenweise mit 5 mL einer 1M Lösung von Boran in THF versetzt und 24 h bei Raumtemperatur gerührt. Nach Zugabe von 5 mL Ethanol wurde die Suspension auf 30 mL Volumen eingeengt und mit weiteren 100 mL Ethanol versetzt. Die gelbe Niederschlag wurde abgesaugt (P3), fünfmal mit 30 mL Ethanol gewaschen, im Vakuum getrocknet, aus DMF umkristallisiert und im Hochvakuum (p = 5 x 10⁻⁵ mbar) bei 420 °C sublimiert. Die Ausbeute bei einer Reinheit von 99.9 % n. HPLC betrug 1.19 g (1.5 mmol), entsprechend 76.7 % d. Th.
MS (FAB): m/e = 763.

### Beispiel 9: Vergleich der thermischen Stabilität

Das in Beispiel 8 beschriebene Kryptat (Molgewicht 762.7 g/mol) wurde im Vakuum (p = 5 x 10⁻⁵ mbar) bei 420 °C sublimiert. Die Sublimation verlief rückstandsfrei und ohne Anzeichen von Zersetzung, überprüft mit HPLC. Lagerversuche bei 400 °C für 160 h in abgeschmolzenen Ampullen ergaben ebenfalls keinen Hinweis auf eine thermisch induzierte Zersetzung des Kryptats nach Beispiel 8.
Im Vergleich dazu besitzt der analoge, nicht kryptatische Iridiumkomplex Ir(PPy)₃ (fac-Tris(2-(2-pyridinyl)phenyl)iridium, CAS: 94928-86-6, Vergleichsbeispiel nach Stand der Technik, Molgewicht = 654.8 g/mol) eine deutlich geringere Stabilität. Die Sublimation dieses Komplexes mit einer Anfangsreinheit nach ¹H-NMR und HPLC von größer 99.9 % bei T = 360 °C und p = 5 x 10⁻⁵ mbar ergab nach 2 h:
- ca. 5 Gew.-% einer Iridiumhaltigen Asche,
- ca. 94 Gew.% eines gelben Sublimats,
- Spuren eines organischen Kondensats, enthaltend unter anderem 2-Phenylpyridin, bestimmt nach ¹H-NMR.

Das gelbe Sublimat war nicht einheitlich. Es bestand nach ¹H-NMR und HPLC-Analkytik aus einem Gemisch verschiedener Spezies. Die Reinheit betrug etwa 99.6 % an Ir(PPy)₃. Lagerversuche bei 340 °C für 160 h führten zu einer weitgehenden Zersetzung des Komplexes nach Stand der Technik.

Diese Ergebnisse zeigen, dass des erfindungsgemäße Kryptat nach Beispiel 8 eine ausgezeichnete Langzeitstabilität aufweist und daher für den industriellen Einsatz bestens geeignet ist. Insbesondere ist die Stabilität des erfindungsgemäßen Kryptats nach Beispiel 8 deutlich höher als die des Vergleichskomplexes gemäß dem Stand der Technik.

## Patentansprüche

1. Metallorganische Kryptate gemäß Formel (1), 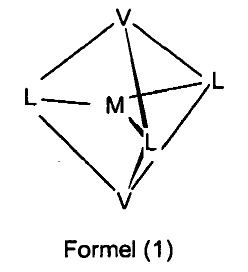 enthaltend mindestens ein Metall M, koordiniert an einen Kryptanden K gemäß Formel (2), 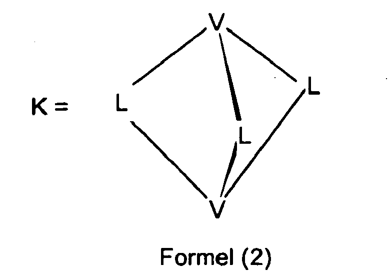 wobei V eine verbrückende Einheit ist, gleich oder verschieden bei jedem Auftreten, enthaltend 1 bis 80 Atome, die die drei Teilliganden L, die gleich oder verschieden bei jedem Auftreten sein können, kovalent miteinander verbindet; die drei Teilliganden L werden durch die Formel (3) beschrieben, 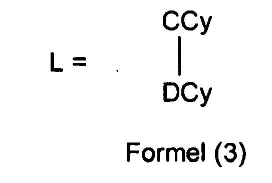 wobei DCy eine substituierte oder unsubstituierte cyclische Gruppe ist, die mindestens ein Donoratom im Ring oder exocyclisch gebunden enthält, über welches die cyclische Gruppe DCy an das Metall gebunden ist, und CCy eine substituierte oder unsubstituierte cyclische Gruppe ist, die mindestens ein Kohlenstoffatom enthält, über welches die cyclische Gruppe CCy an das Metall gebunden ist; die Gruppen DCy und CCy sind über eine kovalente Bindung miteinander verbunden und können zusätzlich über Substituenten miteinander verknüpft sein und so ein polycyclisches, aliphatisches oder aromatisches Ringsystem aufspannen.

2. Metallorganische Kryptate gemäß Anspruch 1, **dadurch gekennzeichnet, dass** diese elektrisch neutral sind.

3. Metallorganische Kryptate gemäß Anspruch 1 und/oder 2, **dadurch gekennzeichnet, dass** alle drei Teilliganden L im Komplex einfach negativ geladen sind.

4. Metallorganische Kryptate gemäß einem oder mehreren der Ansprüche 1 bis 3, **dadurch gekennzeichnet, dass** alle Teilliganden L innerhalb eines Kryptanden K gleich sind.

5. Metallorganische Kryptate gemäß einem oder mehreren der Ansprüche 1 bis 3, **dadurch gekennzeichnet, dass** mindestens zwei Teilliganden L verschieden voneinander sind.

6. Metallorganische Kryptate gemäß einem oder mehreren der Ansprüche 1 bis 5, **dadurch gekennzeichnet, dass** die verbrückende Einheit V als verknüpfendes Atom ein Element der 3., 4., 5. oder 6. Hauptgruppe oder einen 3- bis 6-gliedrigen Homo- oder Heterocyclus enthält und neutral, einfach negativ geladen oder einfach positiv geladen ist.

7. Metallorganische Kryptate gemäß einem oder mehreren der Ansprüche 1 bis 6, **dadurch gekennzeichnet, dass** der Kryptand K gemäß Formel (4) eine faciale Koordination am Metall M erzeugt:

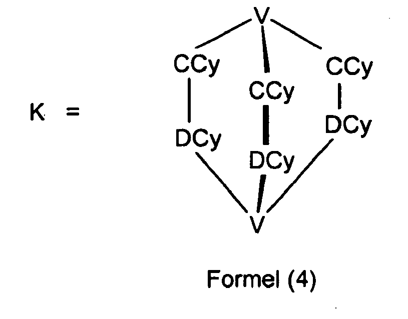

8. Metallorganische Kryptate gemäß einem oder mehreren der Ansprüche 1 bis 6, **dadurch gekennzeichnet, dass** der Kryptand K gemäß Formel (5) eine meridionale Koordination am Metall M erzeugt:

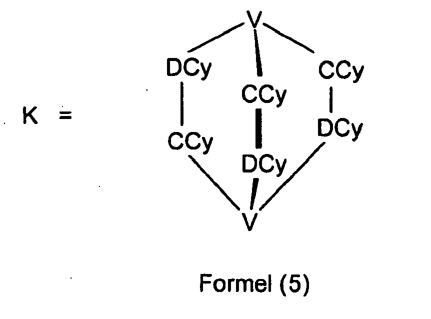

9. Metallorganische Kryptate gemäß einem oder mehreren der Ansprüche 1 bis 8 mit facialer Koordinationsgeometrie am Metall gemäß den Verbindungen (1) bis (4), 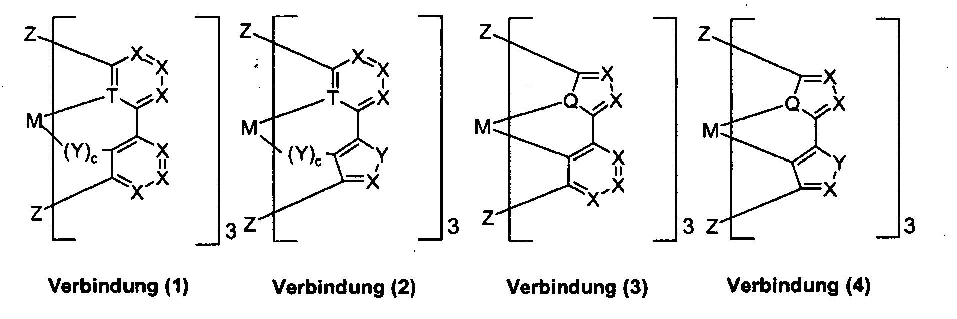 wobei die Symbole und Indizes folgende Bedeutung haben:
M ist bei jedem Auftreten gleich oder verschieden ein Hauptgruppenmetallion, ein Übergangsmetallion oder ein Lanthanoid-Ion;
Q ist gleich oder verschieden bei jedem Auftreten O, S, Se, Te oder N;
T ist gleich oder verschieden bei jedem Auftreten N, P oder C;
X ist gleich oder verschieden bei jedem Auftreten CR, N oder P;
Y ist gleich oder verschieden bei jedem Auftreten NR¹, O, S, Se, Te, SO, SeO, TeO, SO₂, SeO₂, TeO₂, R¹PO;
Z ist gleich oder verschieden bei jedem Auftreten B, BR⁻, B(CR₂)₃, RB(CR₂)₃⁻, B(O)₃, RB(O)₃⁻, B(CR₂CR₂)₃, RB(CR₂CR₂)₃⁻, B(CR₂O)₃, RB(CR₂O)₃⁻, B(OCR₂)₃, RB(OCR₂)₃⁻, Al(O)₃, RAl(O)₃-, Al(OCR₂)₃, RAl(OCR₂)₃-, CR, CO⁻, CNR¹₂, RC(CR₂)₃, RC(O)₃, RC(CR₂CR₂)₃, RC(CR₂O)₃, RC(OCR₂)₃, RC(SiR₂)₃, RC(SiR₂CR₂)₃, RC(CR₂SiR₂)₃. RC(SiR₂SiR₂)₃, cis,cis-1,3,5-Cyclohexyl, 1,3,5-(CR₂)₃C₆H₃, SiR, RSi(CR₂)₃, RSi(O)₃, RSi(CR₂CR₂)₃, RSi(OCR₂)₃, RSi(CR₂O)₃, RSi(SiR₂)₃, RSi(SiR₂CR₂)₃. RSi(CR₂SiR₂)₃, RSi(SiR₂SiR₂)₃, N, NO, NR⁺, N(CR₂)₃, RN(CR₂)₃⁺, N(C=O)₃, N(CR₂CR₂)₃, RN(CR₂CR₂)⁺, P, PO, PS, PSe, PTe, P(O)₃, PO(O)₃, P(OCR₂)₃, PO(OCR₂)₃, P(CR₂)₃, PO(CR₂)₃, P(CR₂CR₂)₃, PO(CR₂CR₂)₃, As, AsO, AsS, AsSe, AsTe, As(O)₃, AsO(O)₃, As(OCR₂)₃, AsO(OCR₂)₃, As(CR₂)₃, AsO(CR₂)₃, As(CR₂CR₂)₃, AsO(CR₂CR₂)₃, Sb, SbO, SbS, SbSe, SbTe, Sb(O)₃, SbO(O)₃, Sb(OCR₂)₃, SbO(OCR₂)₃, Sb(CR₂)₃, SbO(CR₂)₃, Sb(CR₂CR₂)₃, SbO(CR₂CR₂)₃, Bi, BiO, BiS, BiSe, BiTe, Bi(O)₃, BiO(O)₃, Bi(OCR₂)₃, BiO(OCR₂)₃, Bi(CR₂)₃, BiO(CR₂)₃, Bi(CR₂CR₂)₃, BiO(CR₂CR₂)₃, S⁺, S(CR₂)₃⁺, S(CR₂CR₂)₃⁺, Se⁺, Se(CR₂)₃⁺, Se(CR₂CR₂)₃⁺, Te⁺, Te(CR₂)₃⁺, Te(CR₂CR₂)₃⁺;
R ist gleich oder verschieden bei jedem Auftreten H, F, Cl, Br, I, OH, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -R¹C=CR¹-, -C≡C-, Si(R¹)₂, Ge(R¹)₂, Sn(R¹)₂, C=O, C=S, C=Se, C=NR¹, -O-, -S-, -NR¹- oder -CONR¹- ersetzt sein können und wobei ein oder mehrere H-Atome durch F ersetzt sein können, oder ein aromatisches oder heteroaromatisches Ringsystem mit 1 bis 14 C-Atomen, das durch einen oder mehrere, nicht-aromatische Reste R substituiert sein kann, wobei zwei oder mehrere Substituenten R, sowohl am selben Ring als auch an den beiden unterschiedlichen Ringen zusammen wiederum ein weiteres mono- oder polycyclisches, aliphatisches oder aromatisches und/oder benzoannelliertes Ringsystem aufspannen können;
R¹ ist gleich oder verschieden bei jedem Auftreten H oder ein aliphatischer oder aromatischer Kohlenwasserstoffrest mit 1 bis 20 C-Atomen;
c ist gleich oder verschieden bei jedem Auftreten 0 oder 1 mit der Maßgabe, dass c = 0 ist, wenn in dem entsprechenden Teilliganden das Symbol T für N oder P steht.

10. Metallorganische Kryptate gemäß einem oder mehreren der Ansprüche 1 bis 8 mit meridionaler Koordinationsgeometrie am Metall gemäß Verbindungen (5) bis (8), 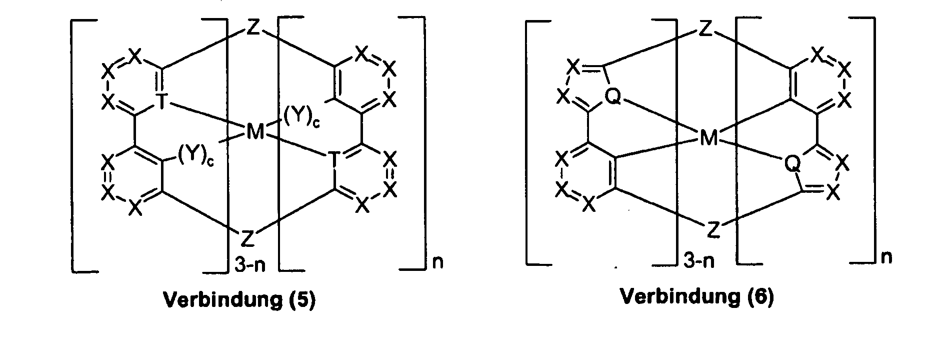 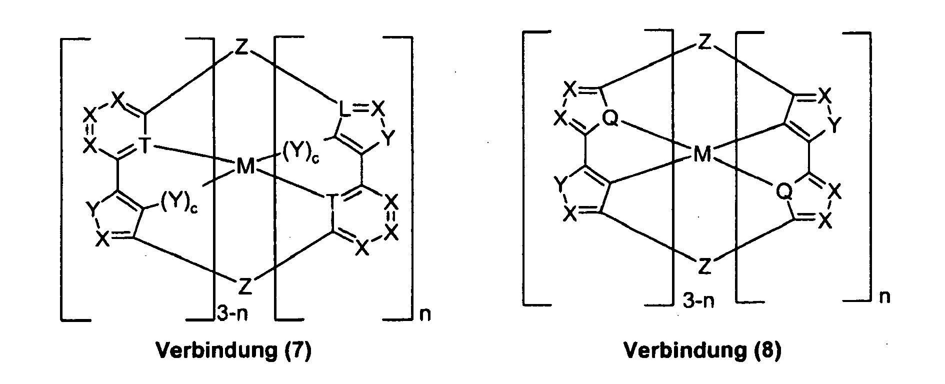 wobei die Symbole und Indizes M, Q, T, X, Y, Z, R, R¹ und c die unter Anspruch 9 angegebenen Bedeutungen haben und n gleich 1 oder 2 ist.

11. Metallorganische Kryptate gemäß einem oder mehreren der Ansprüche 1 bis 8 gemäß Verbindungen (9) bis (26): 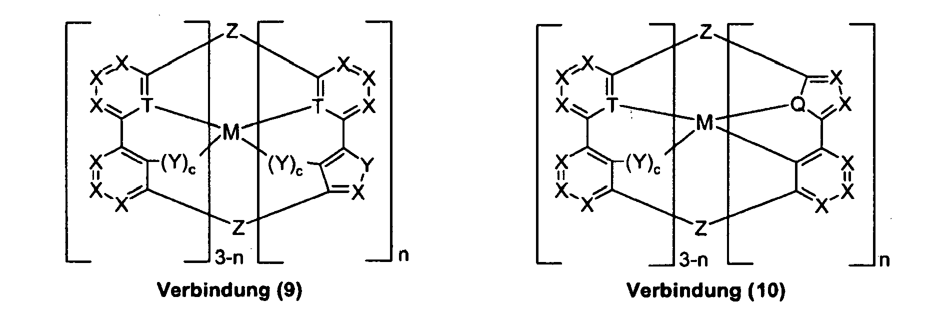 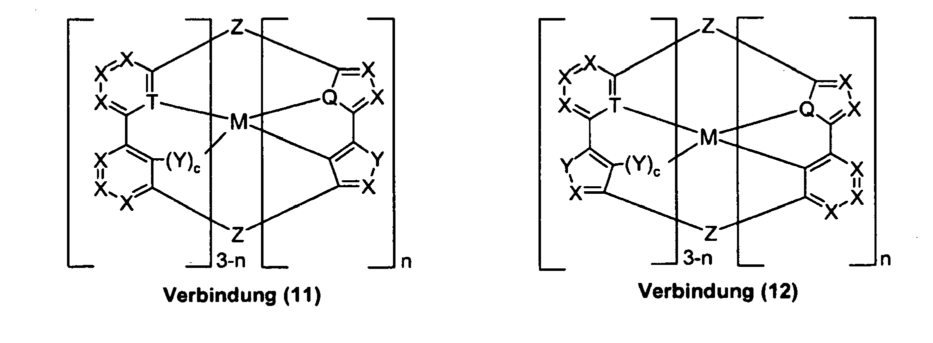 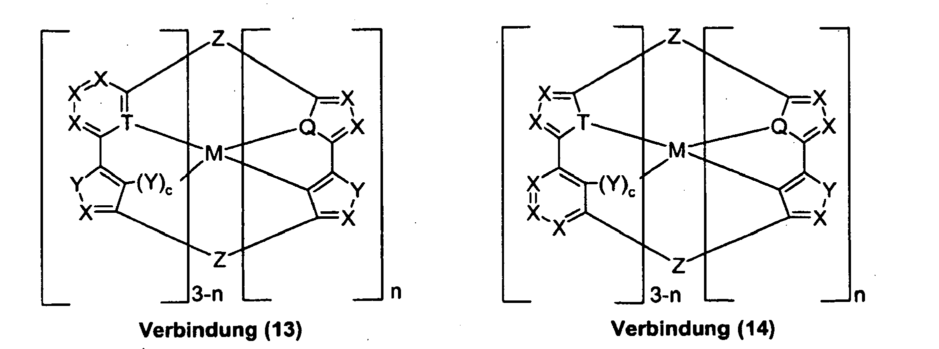 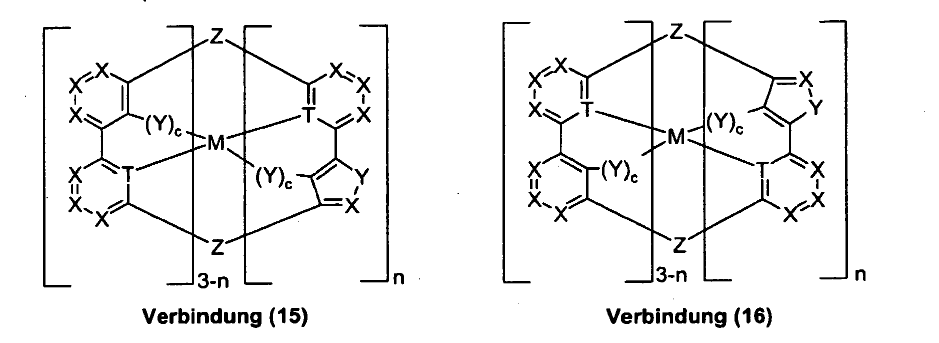 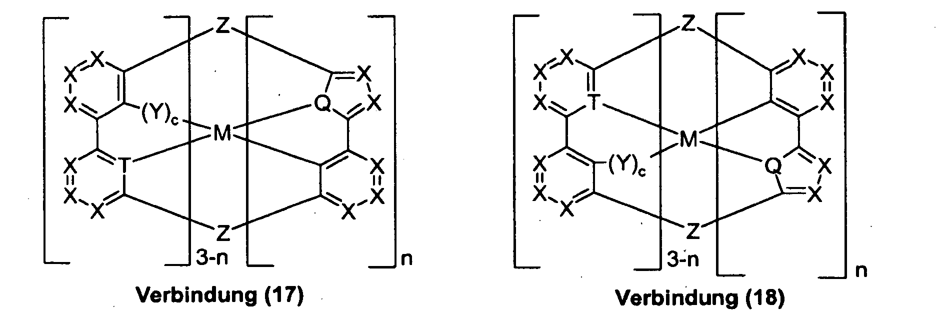 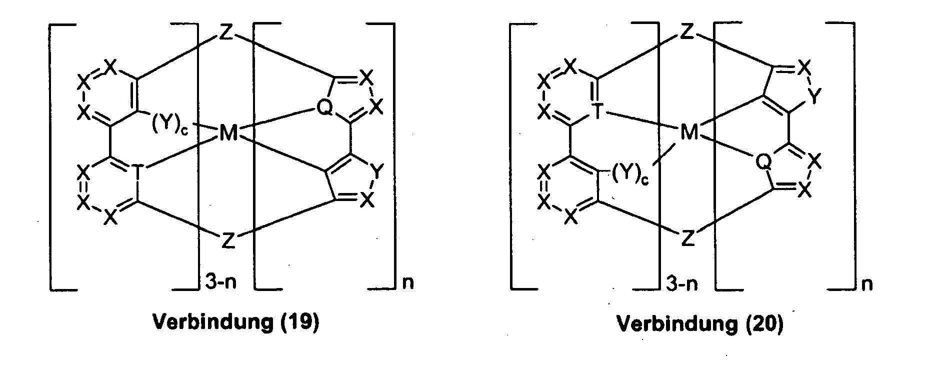 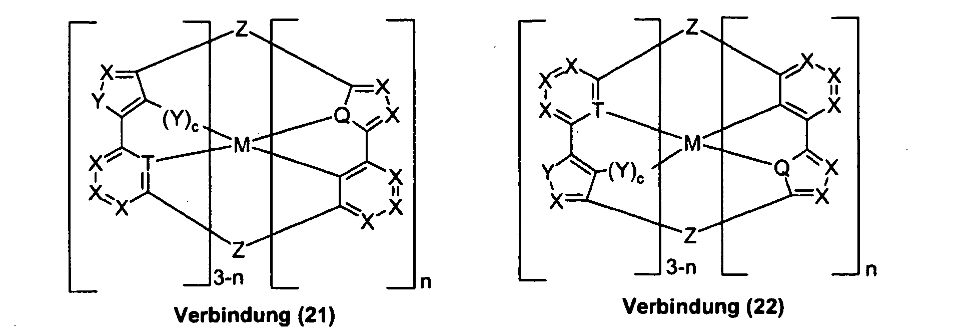 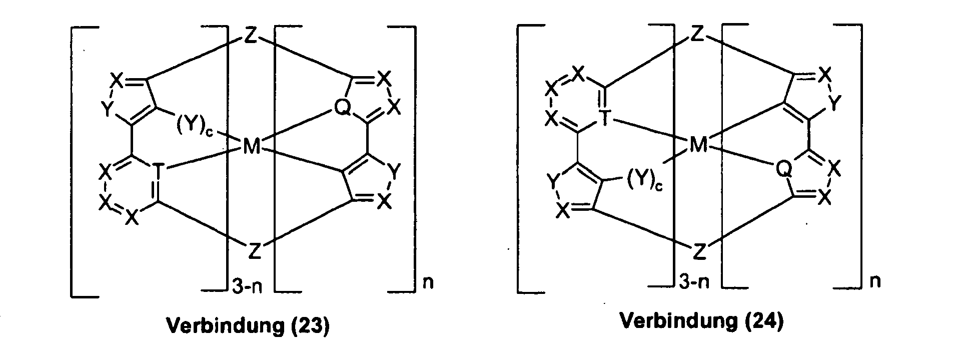 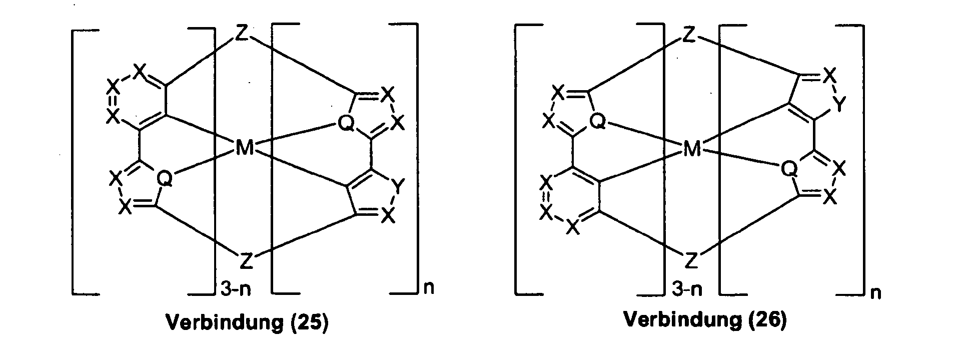 wobei die Symbole und Indizes M, Q, T, X, Y, Z, R, R¹, c und n die unter Anspruch 9 und 10 angegebenen Bedeutungen haben.

12. Metallorganische Kryptate gemäß einem oder mehreren der Ansprüche 9 bis 11, **dadurch gekennzeichnet, dass** M bei jedem Auftreten gleich oder verschieden ein Übergangsmetallion darstellt.

13. Metallorganische Kryptate gemäß einem oder mehreren der Ansprüche 9 bis 12, **dadurch gekennzeichnet, dass** Q bei jedem Auftreten gleich oder verschieden O, S oder Se darstellt.

14. Metallorganische Kryptate gemäß einem oder mehreren der Ansprüche 9 bis 13, **dadurch gekennzeichnet, dass** T bei jedem Auftreten gleich oder verschieden N oder P darstellt.

15. Metallorganische Kryptate gemäß einem oder mehreren der Ansprüche 9 bis 14, **dadurch gekennzeichnet, dass** X bei jedem Auftreten gleich oder verschieden CR oder N darstellt.

16. Metallorganische Kryptate gemäß einem oder mehreren der Ansprüche 9 bis 15, **dadurch gekennzeichnet, dass** Z bei jedem Auftreten gleich oder verschieden B, BR⁻, B(CR₂)₃, RB(CR₂)₃⁻, B(O)₃, RB(O)₃⁻, B(OCR₂)₃, RB(OCR₂)₃⁻, Al(O)₃, RAl(O)₃⁻, Al(OCR₂)₃, RAl(OCR₂)₃⁻, CR, CNR¹₂, RC(CR₂)₃, RC(O)₃, RC(CR₂CR₂)₃, RC(CR₂O)₃, RC(OCR₂)₃, SiR, RSi(CR₂)₃, RSi(O)₃, RSi(CR₂CR₂)₃, RSi(OCR₂)₃, RSi(CR₂O)₃, N, NO, NR⁺, N(CR₂)₃, RN(CR₂)₃⁺, N(C=O)₃, N(CR₂CR₂)₃, RN(CR₂CR₂)⁺, P, PO, P(O)₃, PO(O)₃, P(OCR₂)₃, PO(OCR₂)₃, S⁺, S(CR₂)₃⁺, S(CR₂CR₂)₃⁺ darstellt.

17. Metallorganische Kryptate gemäß einem oder mehreren der Ansprüche 9 bis 16, **dadurch gekennzeichnet, dass** Y bei jedem Auftreten gleich oder verschieden O, S oder NR¹ darstellt.

18. Metallorganische Kryptate gemäß einem oder mehreren der Ansprüche 9 bis 17, **dadurch gekennzeichnet, dass** der Index c bei jedem Auftreten gleich 0 ist.

19. Konjugierte, teilkonjugierte oder nicht-konjugierte Polymere und Dendrimere, enthaltend ein oder mehrere metallorganische Kryptate gemäß einem oder mehreren der Ansprüche 1 bis 18, wobei ein oder mehrere der Substituenten R eine Bindung zum Polymer oder Dendrimer darstellen.

20. Polymere gemäß Anspruch 19, **dadurch gekennzeichnet, dass** es sich um lösliche Polyfluorene, Poly-spirobifluorene, Poly-para-phenylene, Polycarbazole, Poly-dihydrophenanthrene, Poly-phenanthrene, Polyvinylcarbazole, Polythiophene, Silan-haltige Polymere oder Copolymere aus mehreren dieser Einheiten handelt.

21. Kryptanden gemäß Verbindungen (27) bis (52), die die Liganden der Kryptate (1) bis (26) gemäß Anspruch 9 bis 18 darstellen: 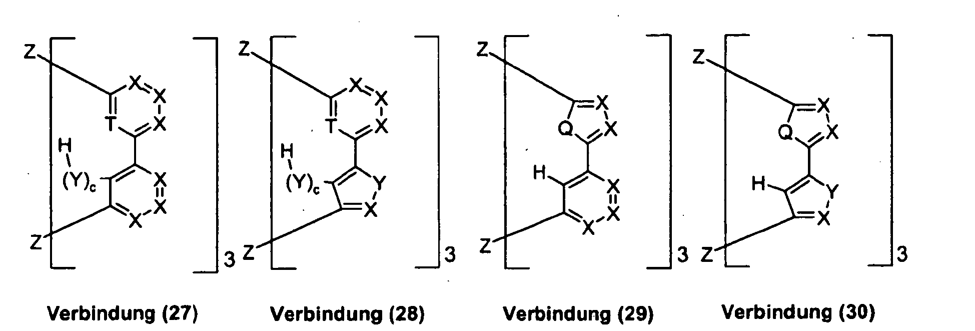 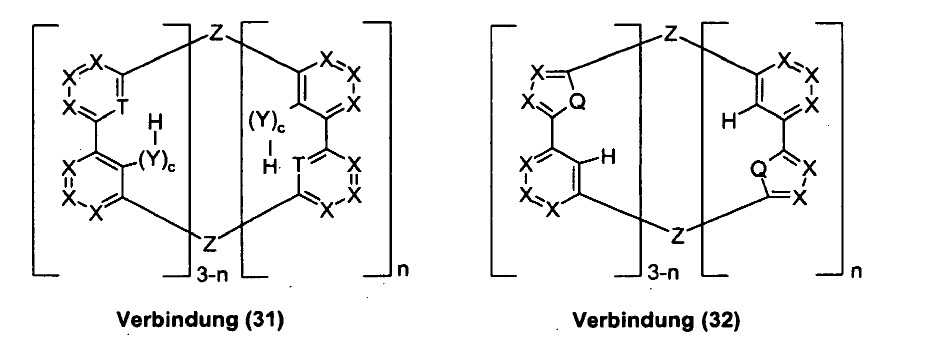 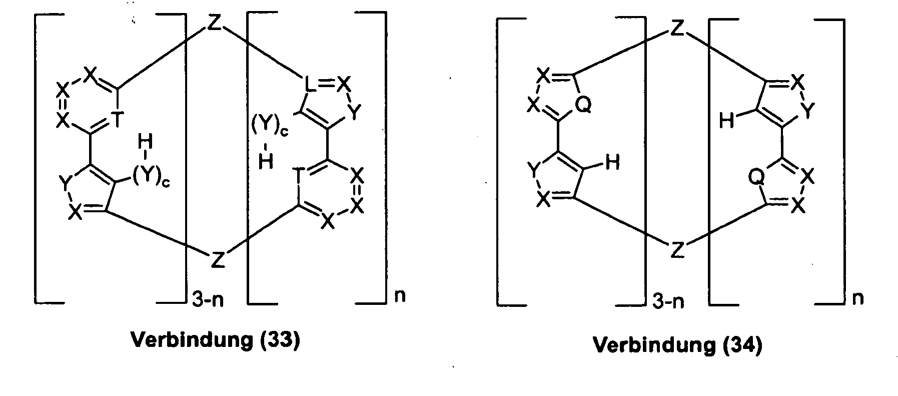 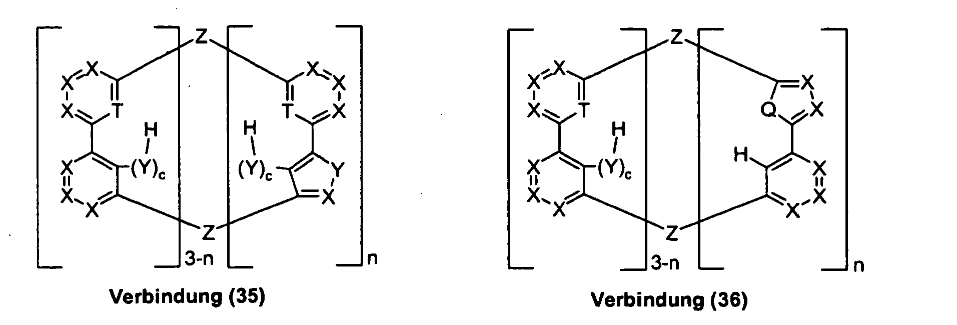 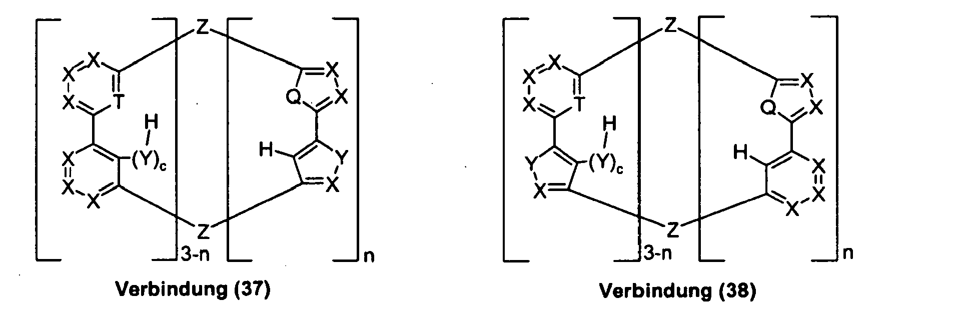 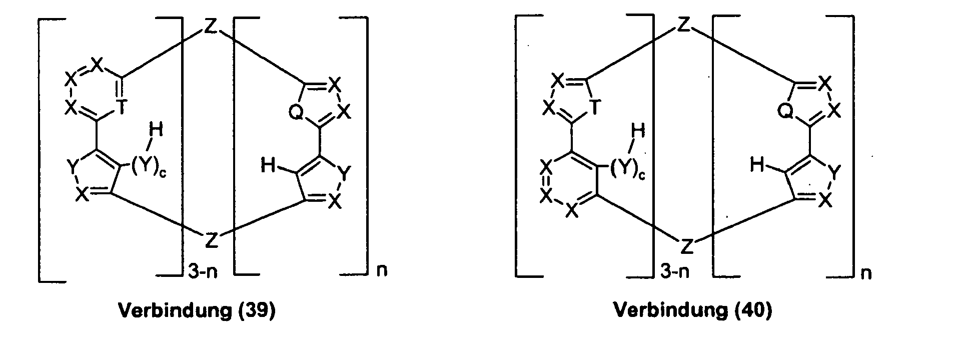 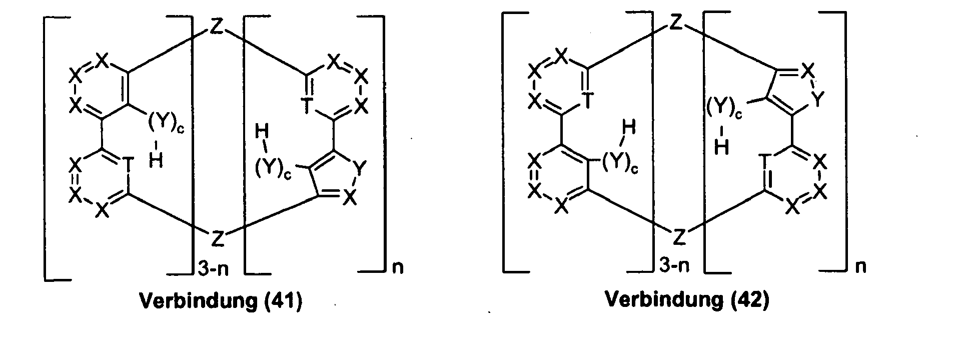 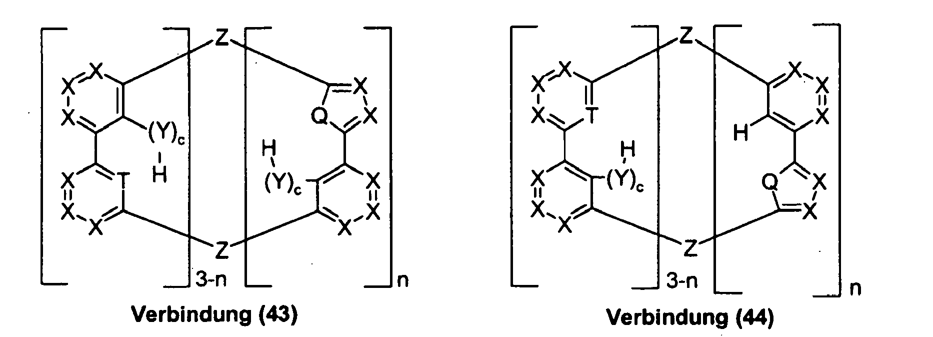 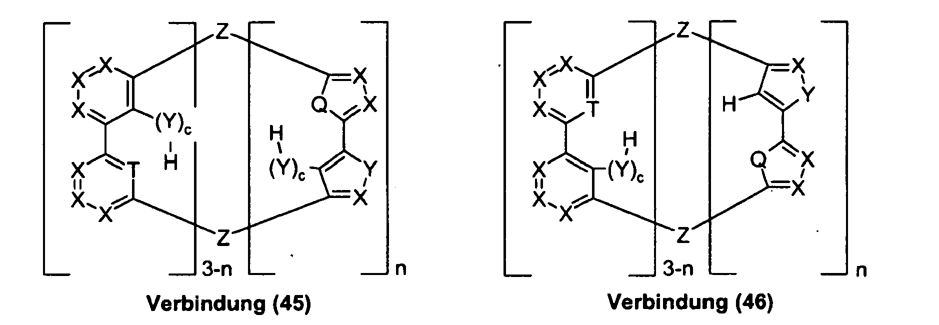 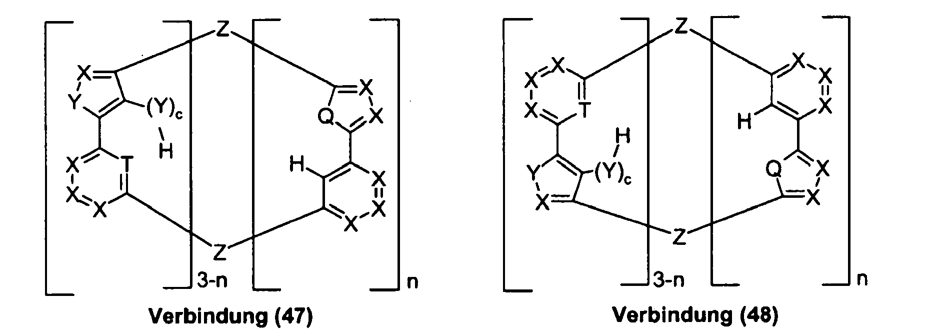 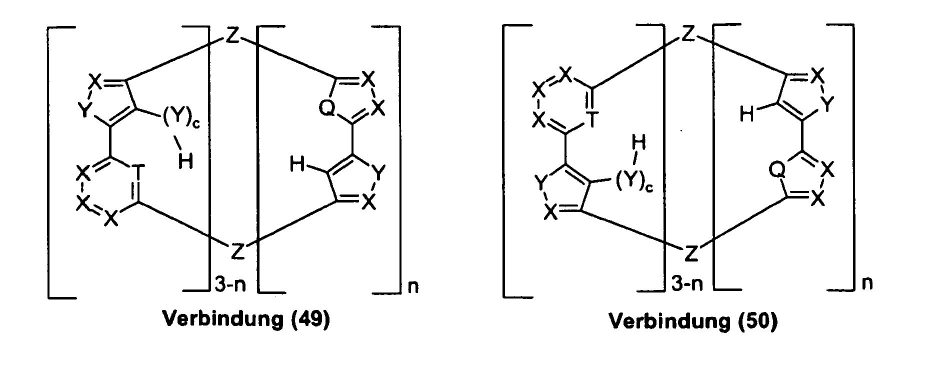 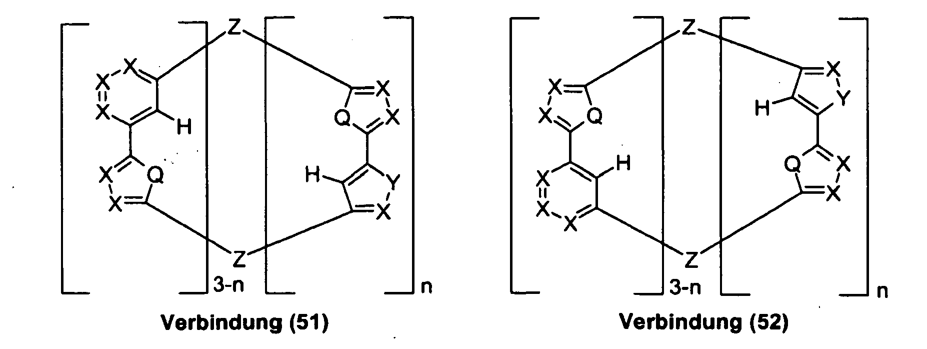 wobei die Symbole und Indizes Q, T, X, Y, Z, R, R¹, c, n die unter Anspruch 9 und 10 angegebenen Bedeutungen haben.

22. Verfahren zur Herstellung metallorganischer Kryptate gemäß einem oder mehreren der Ansprüche 1 bis 18 durch Umsetzung der Kryptanden gemäß Anspruch 21 oder Vorstufen dieser Kryptanden mit Metallalkoholaten gemäß Verbindung (53), mit Metallketoketonaten gemäß Verbindung (54) oder Metallhalogeniden gemäß Verbindung (55), 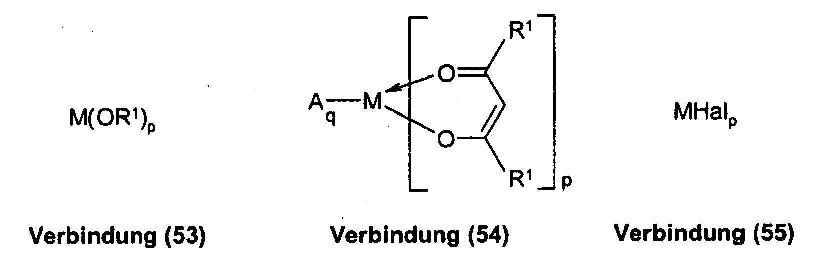 wobei für die Symbole und Indizes gilt:
M ist bei jedem Auftreten gleich oder verschieden ein Hauptgruppenmetallion, ein Übergangsmetallion oder ein Lanthanoid-Ion;
Hal ist bei jedem Auftreten gleich oder verschieden F, Cl, Br oder I;
A ist bei jedem Auftreten gleich oder verschieden ein neutraler oder monoanionischer, einzähniger oder zweizähniger Ligand;
p ist bei jedem Auftreten gleich oder verschieden 1, 2, 3, 4 oder 5, wobei p in Verbindung (53) und (55) die Wertigkeit des Metalls M angibt;
q ist bei jedem Auftreten gleich oder verschieden 0, 1, 2, 3 oder 4;
dabei kann die Verbindung (54) auch geladen sein und noch ein Gegenion enthalten; die weiteren Symbole und Indizes haben dieselbe Bedeutung, wie unter Anspruch 9 und 10 angegeben.

23. Verfahren gemäß Anspruch 22, **dadurch gekennzeichnet, dass** eine polypodale Vorstufe des Kryptanden im Komplexierungsschritt eingesetzt und in einem zweiten Syntheseschritt die zweite verbrückende Einheit V bzw. Z eingeführt wird: 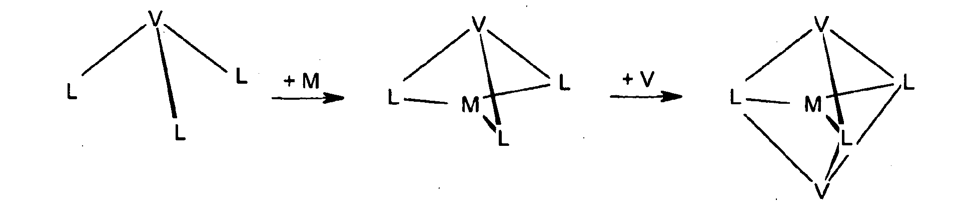 oder dass eine einfache Vorstufe des Kryptanden eingesetzt wird und beide verbrückenden Einheiten V bzw. Z gebildet werden: 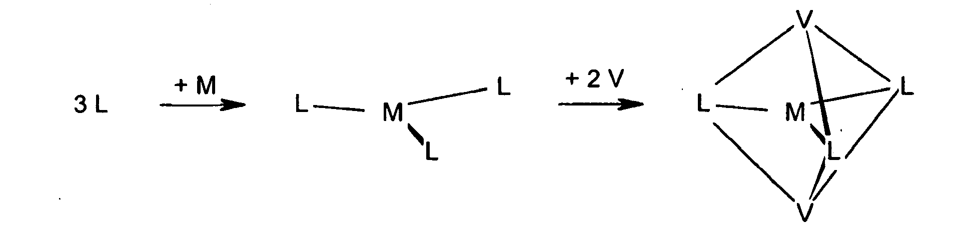 oder dass eine makrocyclische Vorstufe des Kryptanden eingesetzt wird und der dritte Teilligand L eingeführt und mit den verbrückenden Einheiten V bzw. Z verknüpft wird:

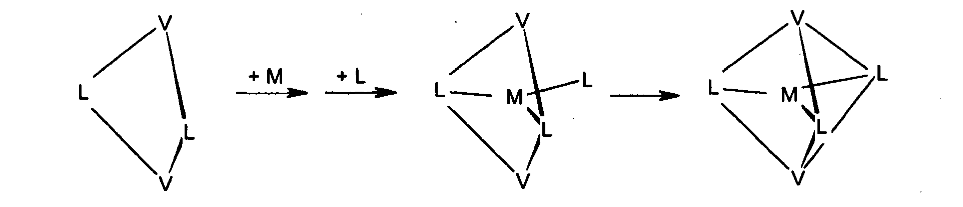

24. Verwendung von Kryptaten in elektronischen Bauteilen.

25. Verwendung von Kryptaten, Polymeren oder Dendrimeren gemäß einem oder mehreren der Ansprüche 1 bis 20 in organischen elektronischen Bauteilen.

26. Organische elektronische Bauteile, enthaltend ein oder mehrere Kryptate, **dadurch gekennzeichnet, dass** die Kryptate durch einen oder mehrere der Ansprüche 1 bis 20 beschrieben werden.

27. Organische elektronische Bauteile gemäß Anspruch 26, **dadurch gekennzeichnet, dass** es sich um organische Leuchtdioden (OLEDs), organische integrierte Schaltungen (O-ICs), organische Feld-Effekt-Transistoren (OFETs), organische Dünnfilmtransistoren (OTFTs), organische Solarzellen (O-SCs), organische optische Detektoren oder organische Laserdioden (O-Laser) handelt.

## Claims

1. Organometallic cryptates of the formula (1) 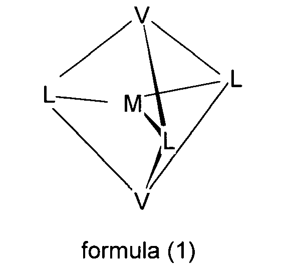 containing at least one metal M coordinated to a cryptand K of the formula (2) 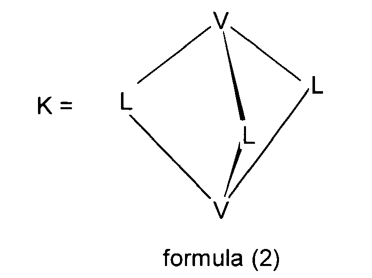 where V is a bridging unit, identically or differently on each occurrence, containing 1 to 80 atoms which covalently bonds the three part-ligands L, which may be identical or different on each occurrence, to one another; the three part-ligands L are described by the formula (3) 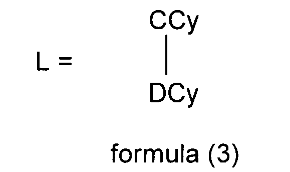 where DCy is a substituted or unsubstituted cyclic group which contains at least one donor atom in the ring or exocyclically bonded, via which atom the cyclic group DCy is bonded to the metal, and CCy is a substituted or unsubstituted cyclic group which contains at least one carbon atom, via which the cyclic group CCy is bonded to the metal; the groups DCy and CCy are bonded to one another via a covalent bond and may additionally be linked to one another via substituents and thus define a polycyclic, aliphatic or aromatic ring system.

2. Organometallic cryptates according to Claim 1, **characterised in that** they are electrically neutral.

3. Organometallic cryptates according to Claim 1 and/or 2, **characterised in that** all three part-ligands L in the complex are singly negatively charged.

4. Organometallic cryptates according to one or more of Claims 1 to 3, **characterised in that** all part-ligands L within a cryptand K are identical.

5. Organometallic cryptates according to one or more of Claims 1 to 3, **characterised in that** at least two part-ligands L are different from one another.

6. Organometallic cryptates according to one or more of Claims 1 to 5, **characterised in that** the bridging unit V contains, as linking atom, an element from main group 3, 4, 5 or 6 or a 3- to 6-membered homo- or heterocycle and is neutral, singly negatively charged or singly positively charged.

7. Organometallic cryptates according to one or more of Claims 1 to 6, **characterised in that** the cryptand K of the formula (4) produces a facial coordination at the metal M:

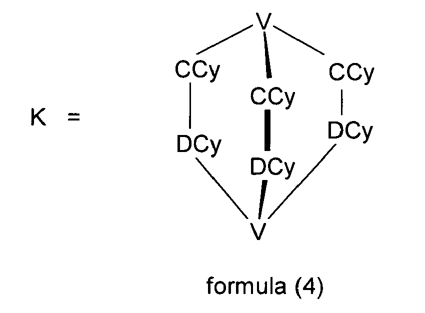

8. Organometallic cryptates according to one or more of Claims 1 to 6, **characterised in that** the cryptand K of the formula (5) produces a meridional coordination at the metal M:

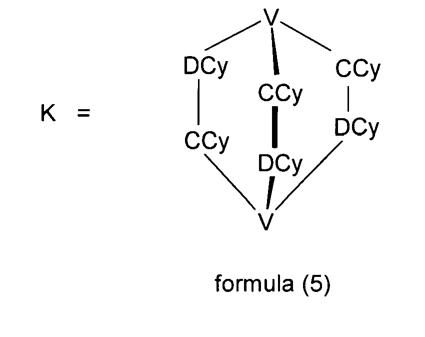

9. Organometallic cryptates according to one or more of Claims 1 to 8 with facial coordination geometry at the metal as described by compounds (1) to (4) 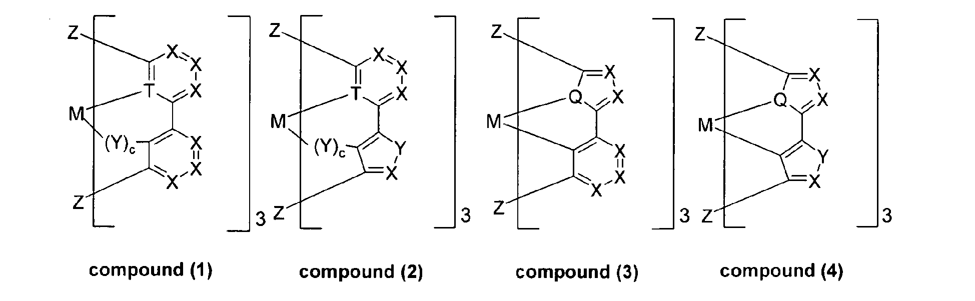 where the symbols and indices have the following meaning:
M is on each occurrence, identically or differently, a main-group metal ion, a transition-metal ion or a lanthanoid ion;
Q is, identically or differently on each occurrence, O, S, Se, Te or N;
T is, identically or differently on each occurrence, N, P or C;
X is, identically or differently on each occurrence, CR, N or P;
Y is, identically or differently on each occurrence, NR¹, O, S, Se, Te, SO, SeO, TeO, SO₂, SeO₂, TeO₂, R¹PO;
Z is, identically or differently on each occurrence, B, BR⁻, B(CR₂)₃, RB(CR₂)₃ , B(O)₃, RB(O)₃⁻, B(CR₂CR₂)₃, RB(CR₂CR₂)₃ , B(CR₂O)₃, RB(CR₂O)₃-, B(OCR₂)₃, RB(OCR₂)₃⁻, Al(O)₃, RAl(O)₃⁻, Al(OCR₂)₃, RAl(OCR₂)₃⁻, CR, CO⁻, CNR¹₂, RC(CR₂)₃, RC(O)₃, RC(CR₂CR₂)₃, RC(CR₂O)₃, RC(OCR₂)₃, RC(SiR₂)₃, RC(SiR₂CR₂)₃, RC(CR₂SiR₂)₃, RC(SiR₂SiR₂)₃, cis,cis-1,3,5-cyclohexyl, 1,3,5-(CR₂)₃C₆H₃, SiR, RSi(CR₂)₃, RSi(O)₃, RSi(CR₂CR₂)₃, RSi(OCR₂)₃, RSi(CR₂O)₃, RSi(SiR₂)₃, RSi(SiR₂CR₂)₃, RSi(CR₂SiR₂)₃, RSi(SiR₂SiR₂)₃, N, NO, NR⁺, N(CR₂)₃, RN(CR₂)₃⁺, N(C=O)₃, N(CR₂CR₂)₃, RN(CR₂CR₂)⁺, P, PO, PS, PSe, PTe, P(O)₃, PO(O)₃, P(OCR₂)₃, PO(OCR₂)₃, P(CR₂)₃, PO(CR₂)₃, P(CR₂CR₂)₃, PO(CR₂CR₂)₃, As, AsO, AsS, AsSe, AsTe, As(O)₃, AsO(O)₃, As(OCR₂)₃, AsO(OCR₂)₃, As(CR₂)₃, AsO(CR₂)₃, As(CR₂CR₂)₃, AsO(CR₂CR₂)₃, Sb, SbO, SbS, SbSe, SbTe, Sb(O)₃, SbO(O)₃, Sb(OCR₂)₃, SbO(OCR₂)₃, Sb(CR₂)₃, SbO(CR₂)₃, Sb(CR₂CR₂)₃, SbO(CR₂CR₂)₃, Bi, BiO, BiS, BiSe, BiTe, Bi(O)₃, BiO(O)₃, Bi(OCR₂)₃, BiO(OCR₂)₃, Bi(CR₂)₃, BiO(CR₂)₃, Bi(CR₂CR₂)₃, BiO(CR₂CR₂)₃, S⁺, S(CR₂)₃⁺, S(CR₂CR₂)₃⁺, Se⁺, Se(CR₂)₃⁺, Se(CR₂CR₂)₃⁺, Te⁺, Te(CR₂)₃⁺, Te(CR₂CR₂)₃⁺;
R is, identically or differently on each occurrence, H, F, Cl, Br, I, OH, NO₂, CN, a straight-chain, branched or cyclic alkyl or alkoxy group having 1 to 20 C atoms, in which one or more non-adjacent CH₂ groups may be replaced by -R¹C=CR¹-, -C≡C-, Si(R¹)₂, Ge(R¹)₂, Sn(R¹)₂, C=O, C=S, C=Se, C=NR¹, -O-, -S-, -NR¹- or -CONR¹- and in which one or more H atoms may be replaced by F, or an aromatic or heteroaromatic ring sys- tem having 1 to 14 C atoms, which may be substituted by one or more non-aromatic radicals R, where two or more substituents R, both on the same ring and also on the two different rings, together may in turn define a further mono- or polycyclic, aliphatic or aromatic and/or benzo-fused ring system;
R¹ is, identically or differently on each occurrence, H or an aliphatic or aroma- tic hydrocarbon radical having 1 to 20 C atoms;
c is, identically or differently on each occurrence, 0 or 1, with the proviso that c = 0 if the symbol T in the corresponding part-ligand stands for N or P.

10. Organometallic cryptates according to one or more of Claims 1 to 8 with meridional coordination geometry at the metal as described by compounds (5) to (8) 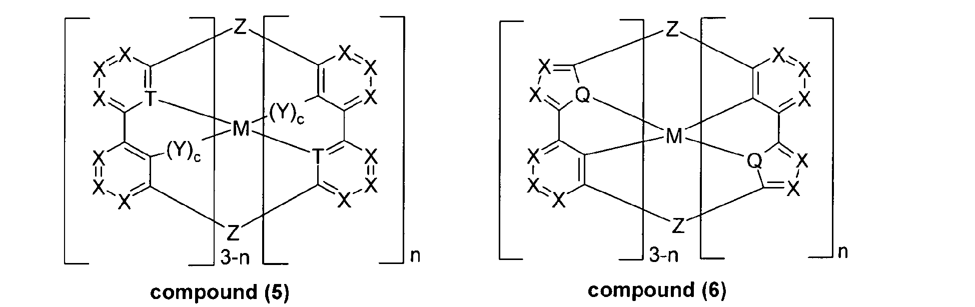 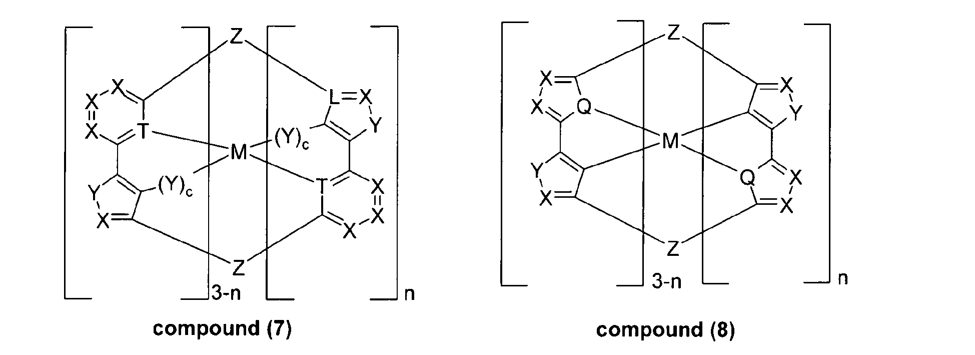 where the symbols and indices M, Q, T, X, Y, Z, R, R¹ and c have the meanings indicated under Claim 9, and n is equal to 1 or 2.

11. Organometallic cryptates according to one or more of Claims 1 to 8 as described by compounds (9) to (26): 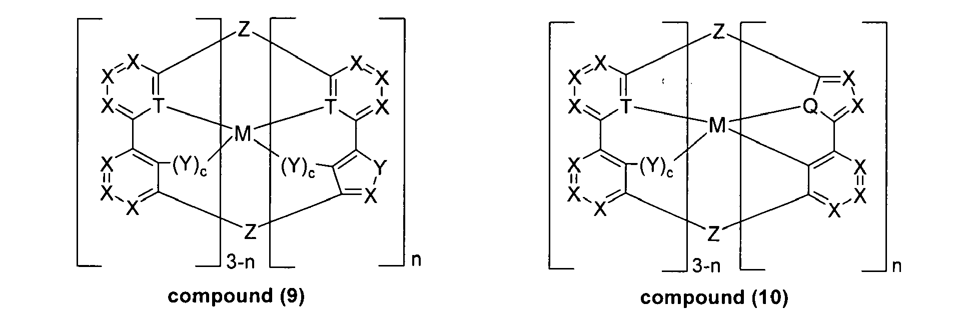 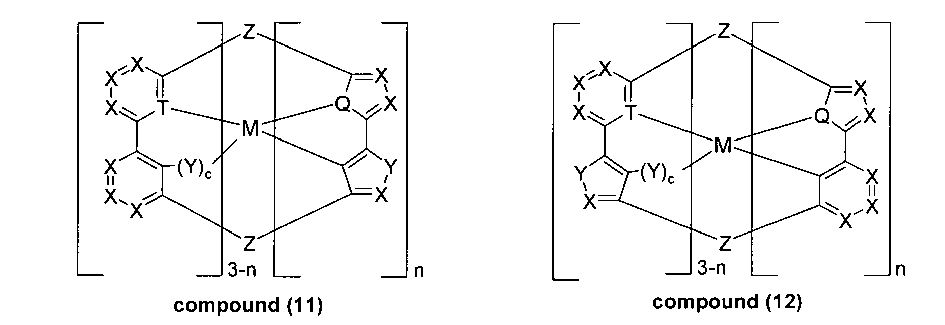 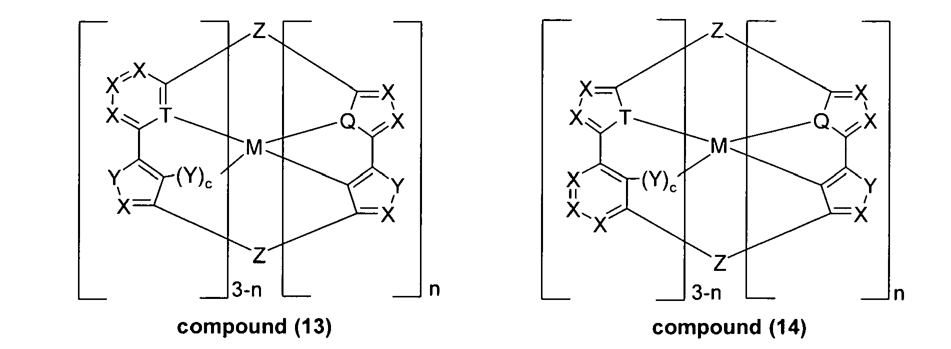 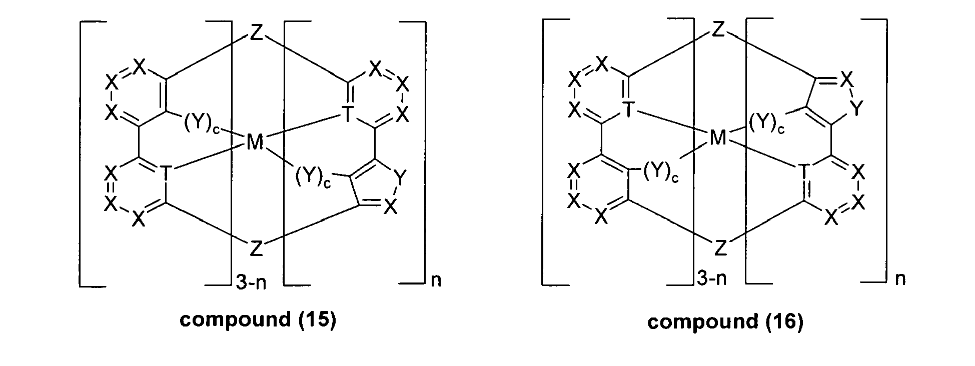 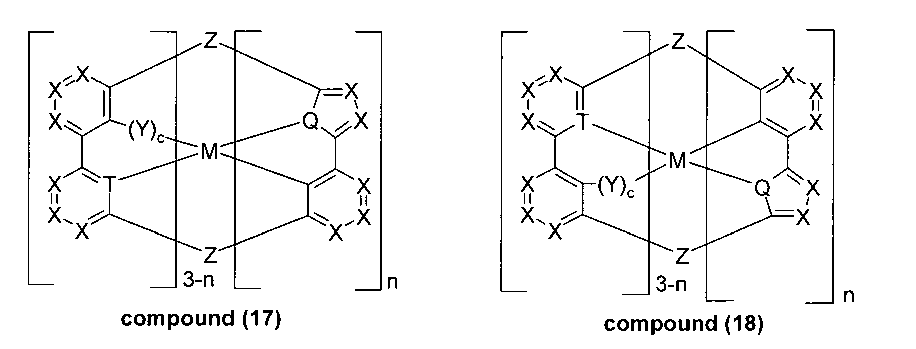 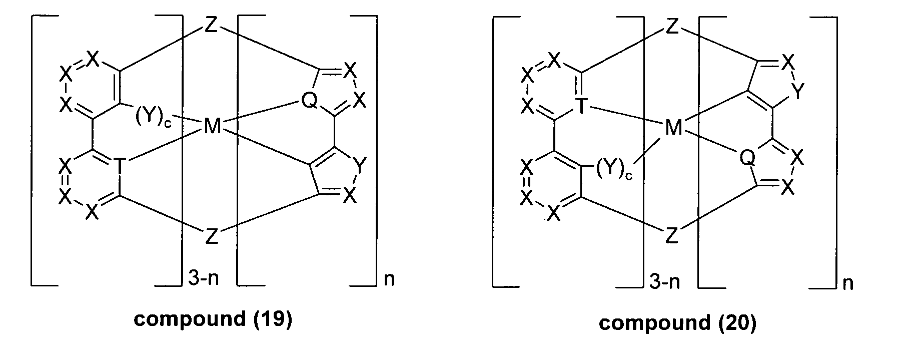 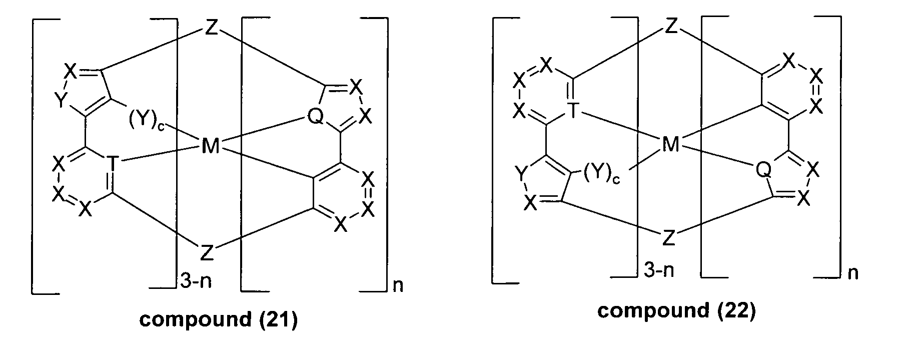 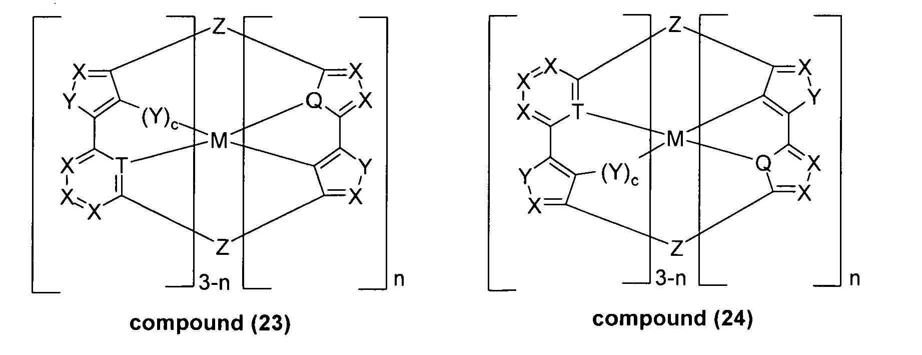 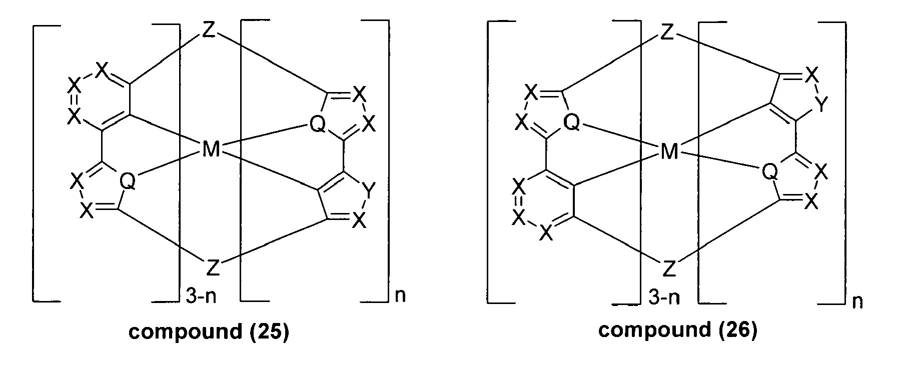 where the symbols and indices M, Q, T, X, Y, Z, R, R¹, c and n have the meanings indicated under Claims 9 and 10.

12. Organometallic cryptates according to one or more of Claims 9 to 11, **characterised in that** M on each occurrence, identically or differently, represents a transition-metal ion.

13. Organometallic cryptates according to one or more of Claims 9 to 12, **characterised in that** Q on each occurrence, identically or differently, represents O, S or Se.

14. Organometallic cryptates according to one or more of Claims 9 to 13, **characterised in that** T on each occurrence, identically or differently, represents N or P.

15. Organometallic cryptates according to one or more of Claims 9 to 14, **characterised in that** X on each occurrence, identically or differently, represents CR or N.

16. Organometallic cryptates according to one or more of Claims 9 to 15, **characterised in that** Z on each occurrence, identically or differently, represents B, BR⁻, B(CR₂)₃, RB(CR₂)₃⁻, B(O)₃, RB(O)₃⁻, B(OCR₂)₃, RB(OCR₂)₃, Al(O)₃, RAl(O)₃⁻, Al(OCR₂)₃, RAl(OCR₂)₃⁻, CR, CNR¹₂, RC(CR₂)₃, RC(O)₃, RC(CR₂CR₂)₃, RC(CR₂O)₃, RC(OCR₂)₃, SiR, RSi(CR₂)₃, RSi(O)₃, RSi(CR₂CR₂)₃, RSi(OCR₂)₃, RSi(CR₂O)₃, N, NO, NR⁺, N(CR₂)₃, RN(CR₂)₃⁺, N(C=O)₃, N(CR₂CR₂)₃, RN(CR₂CR₂)⁺, P, PO, P(O)₃, PO(O)₃, P(OCR₂)₃, PO(OCR₂)₃, S⁺, S(CR₂)₃⁺, S(CR₂CR₂)₃⁺.

17. Organometallic cryptates according to one or more of Claims 9 to 16, **characterised in that** Y on each occurrence, identically or differently, represents O, S or NR¹.

18. Organometallic cryptates according to one or more of Claims 9 to 17, **characterised in that** the index c on each occurrence is equal to 0.

19. Conjugated, partially conjugated or non-conjugated polymers and dendrimers comprising one or more organometallic cryptates according to one or more of Claims 1 to 18, where one or more of the substituents R represent a bond to the polymer or dendrimer.

20. Polymers according to Claim 19, **characterised in that** they are soluble polyfluorenes, polyspirobifluorenes, poly-para-phenylenes, polycarbazoles, polydihydrophenanthrenes, polyphenanthrenes, polyvinylcarbazoles, polythiophenes, silane-containing polymers or copolymers comprising a plurality of these units.

21. Cryptands as described by compounds (27) to (52), which represent the ligands of the cryptates (1) to (26) according to Claims 9 to 18: 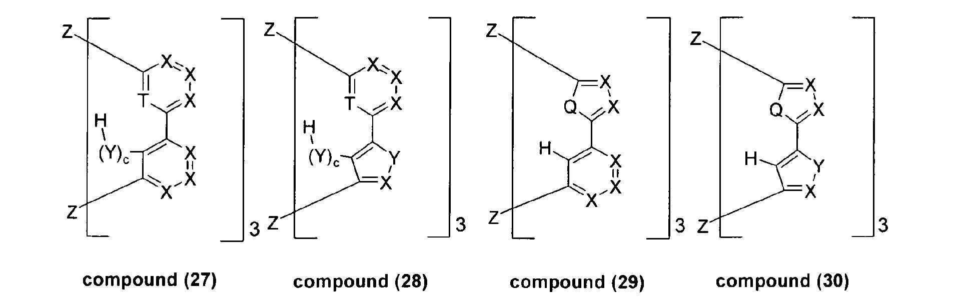 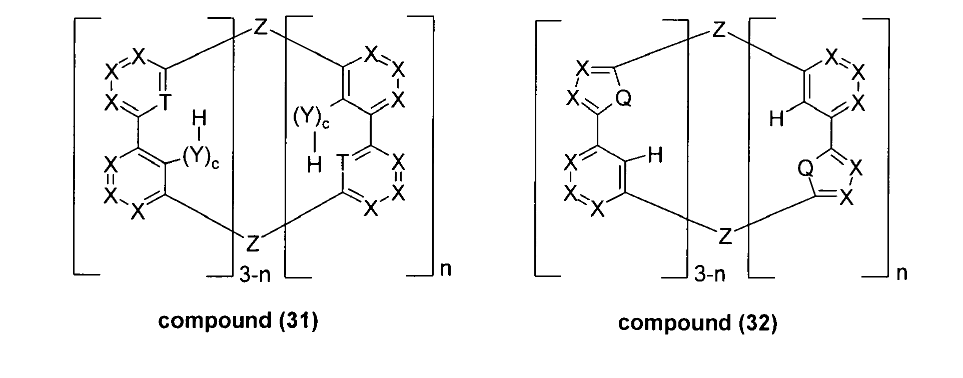 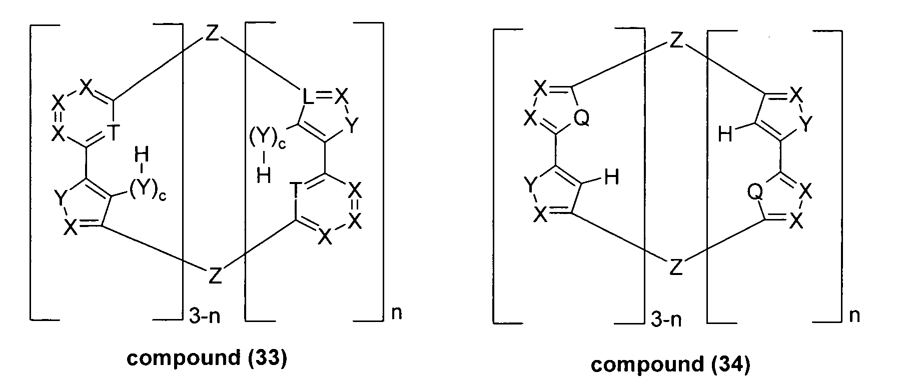 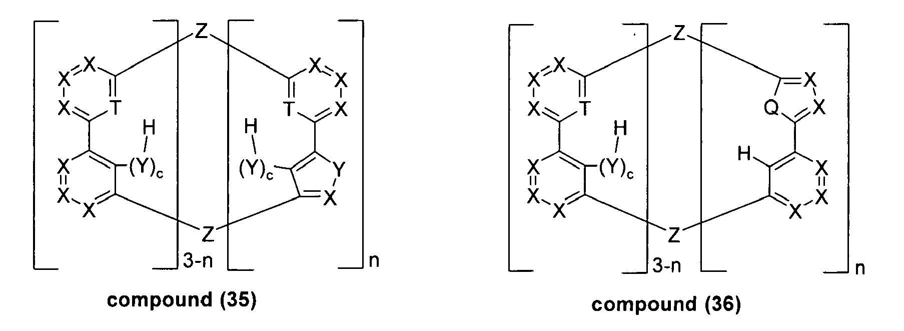 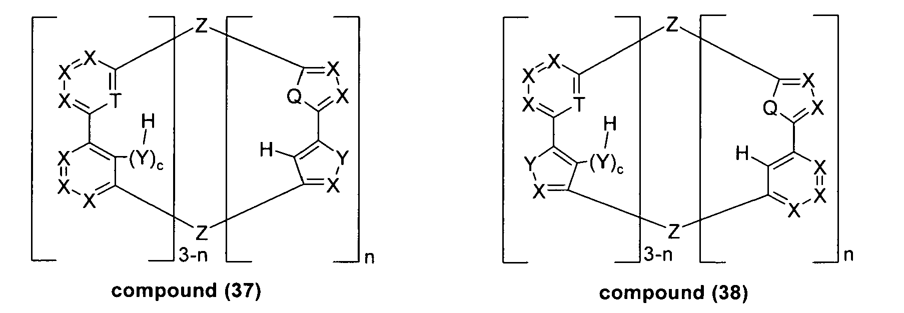 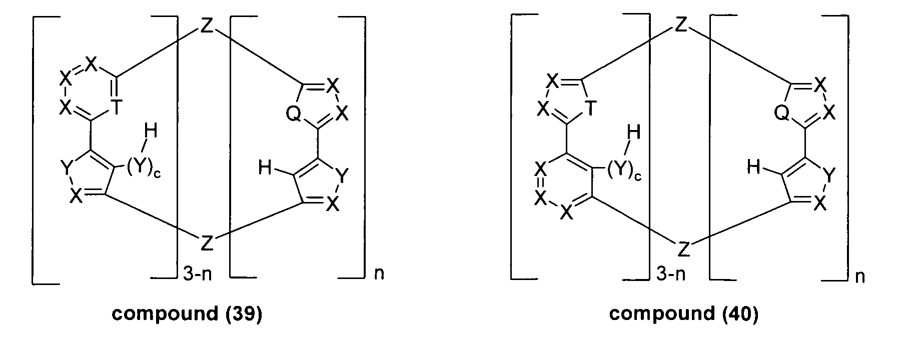 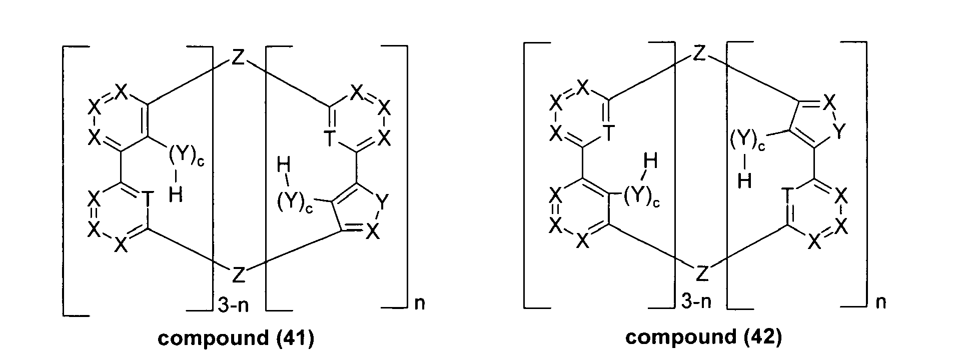 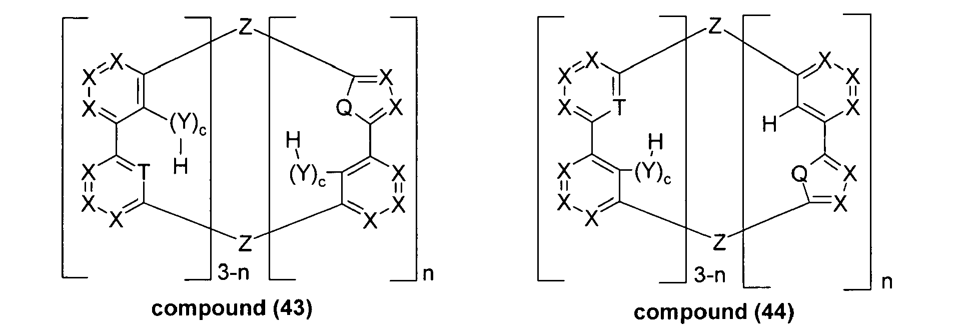 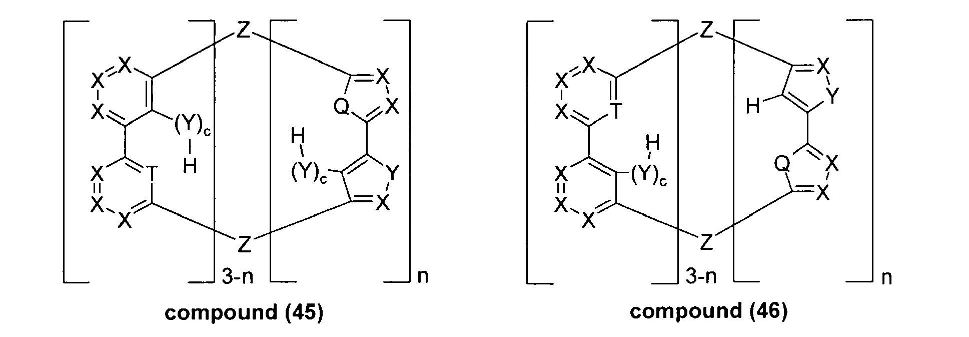 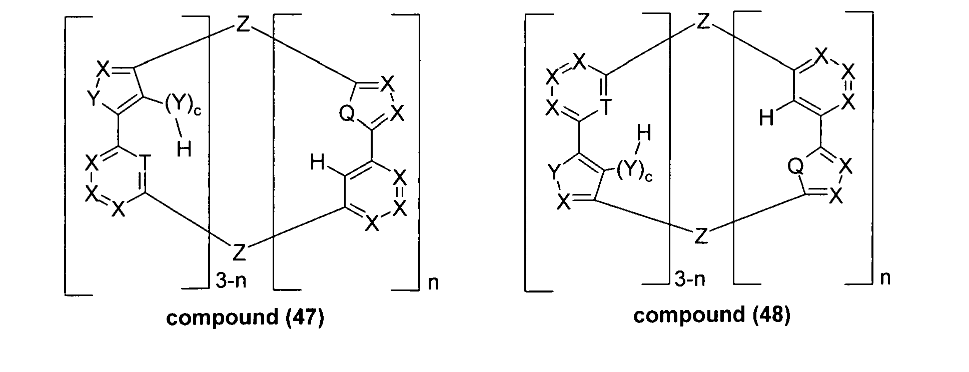 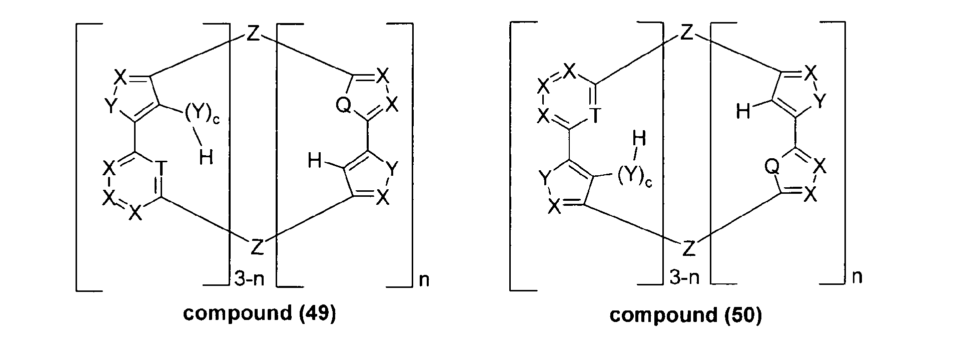 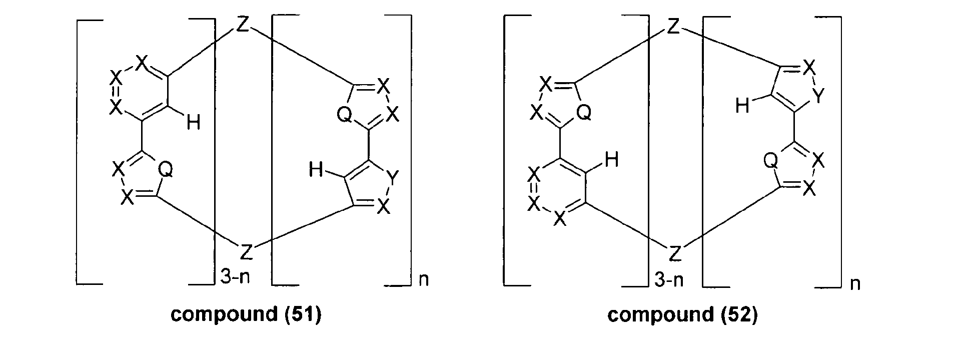 where the symbols and indices Q, T, X, Y, Z, R, R¹, c, n have the meanings indicated under Claims 9 and 10.

22. Process for the preparation of organometallic cryptates according to one or more of Claims 1 to 18 by reaction of the cryptands according to Claim 21 or precursors of these cryptands with metal alkoxides as described by compound (53), with metal ketoketonates as described by compound (54) or metal halides as described by compound (55) 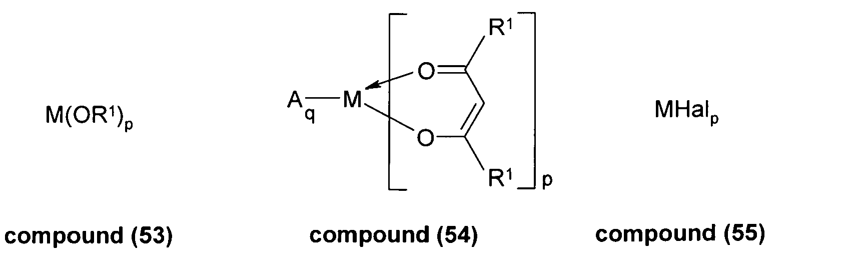 where the following applies to the symbols and indices:
M is on each occurrence, identically or differently, a main-group metal ion, a transition-metal ion or a lanthanoid ion;
Hal is on each occurrence, identically or differently, F, Cl, Br or I;
A is on each occurrence, identically or differently, a neutral or monoanionic, monodentate or bidentate ligand;
p is on each occurrence, identically or differently, 1, 2, 3, 4 or 5, where p in compounds (53) and (55) indicates the valency of the metal M;
q is on each occurrence, identically or differently, 0, 1, 2, 3 or 4;
compound (54) here may also be charged and may also contain a counterion; the other symbols and indices have the same meaning as indicated under Claims 9 and 10.

23. Process according to Claim 22, **characterised in that** a polypodal precursor of the cryptand is employed in the complexing step, and the second bridging unit V or Z is introduced in a second synthesis step: 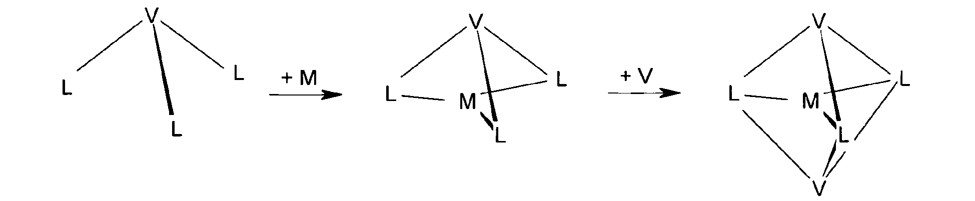 or **in that** a simple precursor of the cryptand is employed, and both bridging units V and Z are formed: 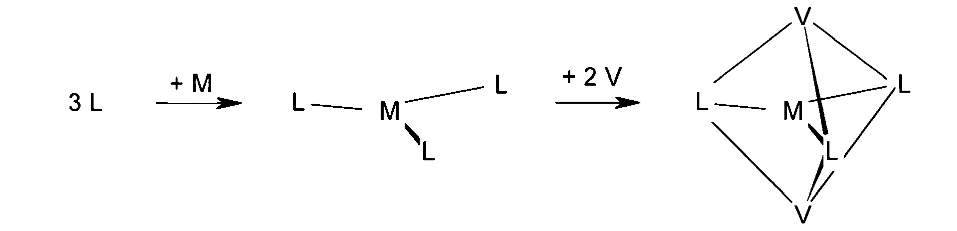 or **in that** a macrocyclic precursor of the cryptand is employed, and the third part-ligand L is introduced and linked to the bridging units V or Z:

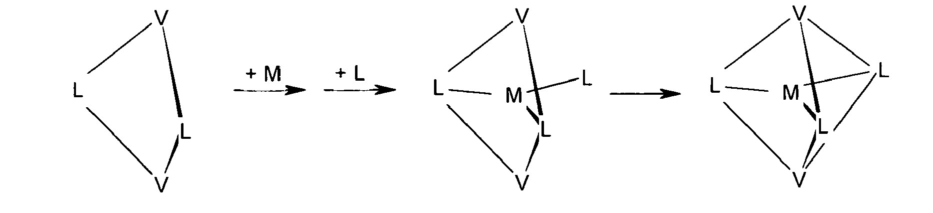

24. Use of cryptates in electronic components.

25. Use of cryptates, polymers or dendrimers according to one or more of Claims 1 to 20 in organic electronic components.

26. Organic electronic components comprising one or more cryptates, **characterised in that** the cryptates are described by one or more of Claims 1 to 20.

27. Organic electronic components according to Claim 26, **characterised in that** they are organic light-emitting diodes (OLEDs), organic integrated circuits (O-ICs), organic field-effect transistors (OFETs), organic thin-film transistors (OTFTs), organic solar cells (O-SCs), organic optical detectors or organic laser diodes (O-lasers).

## Revendications

1. Cryptates organométalliques de la formule (1) 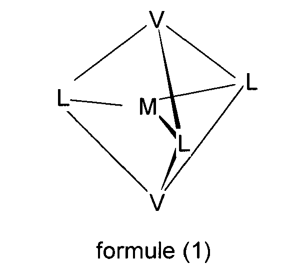 contenant au moins un métal M coordonné à un cryptand K de la formule (2) 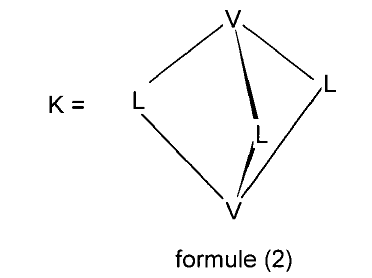 où V est une unité de pontage, de façon identique ou différente à chaque occurrence, contenant 1 à 80 atomes qui lie de façon covalente les trois ligands partiels L, qui peuvent être identiques ou différents à chaque occurrence, l'un à l'autre ; les trois ligands partiels L sont décrites par la formule (3) 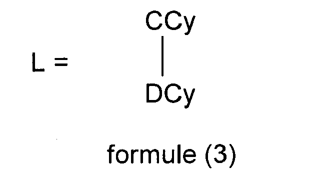 où DCy est un groupe cyclique substitué ou non substitué qui contient au moins un atome donneur dans le cycle ou lié exocycliquement, et via cet atome, le groupe cyclique DCy est lié au métal, et CCy est un groupe cyclique substitué ou non substitué qui contient au moins un atome de carbone, et via cet atome, le groupe cyclique CCy est lié au métal, les groupes DCy et CCy sont liés l'un à l'autre via une liaison covalente et peuvent additionnellement être liés l'un à l'autre via des substituants et définissent ainsi un système de cycle polycyclique, aliphatique ou aromatique.

2. Cryptates organométalliques selon la revendication 1, **caractérisés en ce qu'**ils sont électriquement neutres.

3. Cryptates organométalliques selon la revendication 1 et/ou 2, **caractérisés en ce que** tous les trois ligands partiels L dans le complexe sont chargés uniquement négativement.

4. Cryptates organométalliques selon une ou plusieurs des revendications 1 à 3, **caractérisés en ce que** tous les trois ligands partiels L à l'intérieur d'un cryptand K sont identiques.

5. Cryptates organométalliques selon une ou plusieurs des revendications 1 à 3, **caractérisés en ce qu'**au moins deux ligands partiels L sont différents l'un de l'autre.

6. Cryptates organométalliques selon une ou plusieurs des revendications 1 à 5, **caractérisés en ce que** l'unité de pontage V contient, comme atome de liaison, un élément à partir du groupe principal 3, 4, 5 ou 6 ou un homo- ou hétérocycle membré 3 à 6 et est neutre, chargé uniquement négativement ou chargé uniquement positivement.

7. Cryptates organométalliques selon une ou plusieurs des revendications 1 à 6, **caractérisés en ce que** le cryptand K de la formule (4) produit une coordination faciale au métal M:

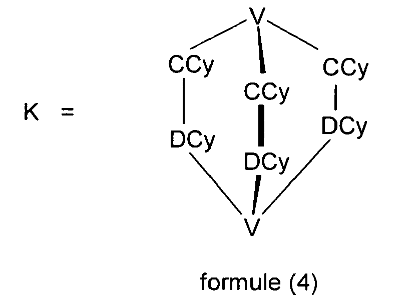

8. Cryptates organométalliques selon une ou plusieurs des revendications 1 à 6, **caractérisés en ce que** le cryptand K de la formule (5) produit une coordination méridionale au métal M:

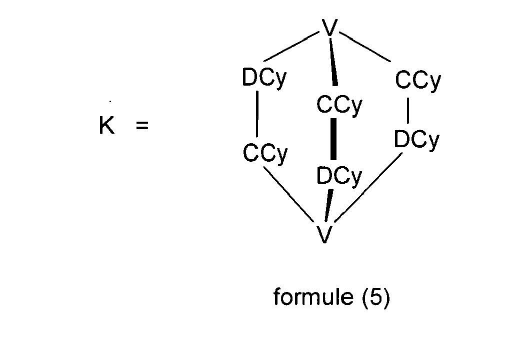

9. Cryptates organométalliques selon une ou plusieurs des revendications 1 à 8 avec une géométrie de coordination faciale au métal comme décrits par les composés (1) à (4) 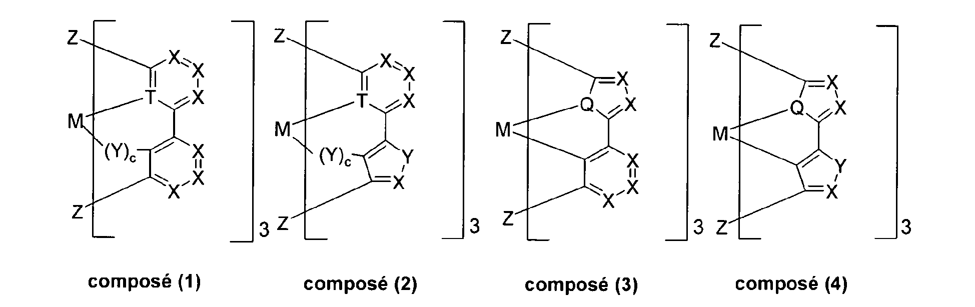 où les symboles et indices ont la signification suivante g:
M est à chaque occurrence, de façon identique ou différente, un ion de métal de groupe principal, un ion de métal de transition ou un ion de lanthano- ïdes;
Q est, de façon identique ou différente à chaque occurrence, O, S, Se, Te ou N ;
T est, de façon identique ou différente à chaque occurrence, N, P ou C ;
X est, de façon identique ou différente à chaque occurrence, CR, N ou P ;
Y est, de façon identique ou différente à chaque occurrence, NR¹, O, S, Se, Te, SO, SeO, TeO, SO₂, SeO₂, TeO₂, R¹PO ;
Z est, de façon identique ou différente à chaque occurrence, B, BR⁻, B(CR₂)₃, RB(CR₂)₃⁻, B(O)₃, RB(O)₃⁻, B(CR₂CR₂)₃, RB(CR₂CR₂)₃⁻, B(CR₂O)₃, RB(CR₂O)₃⁻, B(OCR₂)₃, RB(OCR₂)₃⁻, Al(O)₃, RAl(O)₃⁻, Al(OCR₂)₃, RAl(OCR₂)₃⁻, CR, CO⁻, CNR¹₂, RC(CR₂)₃, RC(O)₃, RC(CR₂CR₂)₃, RC(CR₂O)₃, RC(OCR₂)₃, RC(SiR₂)₃, RC(SiR₂CR₂)₃, RC(CR₂SiR₂)₃, RC(SiR₂SiR₂)₃, cis,cis-1,3,5-cyclohexyle, 1,3,5-(CR₂)₃C₆H_{3,} SiR, RSi(CR₂)₃, RSi(O)₃, RSi(CR₂CR₂)₃, RSi(OCR₂)₃, RSi(CR₂O)₃, RSi(SiR₂)₃, RSi(SiR₂CR₂)₃, RSi(CR₂SiR₂)₃, RSi(SiR₂SiR₂)₃, N, NO, NR⁺, N(CR₂)₃, RN(CR₂)₃⁺, N(C=O)₃, N(CR₂CR₂)₃, RN(CR₂CR₂)⁺, P, PO, PS, PSe, PTe, P(O)₃, PO(O)₃, P(OCR₂)₃, PO(OCR₂)₃, P(CR₂)₃, PO(CR₂)₃, P(CR₂CR₂)₃, PO(CR₂CR₂)₃, As, AsO, AsS, AsSe, AsTe, As(O)₃, AsO(O)₃, As(OCR₂)₃, AsO(OCR₂)₃, As(CR₂)₃, AsO(CR₂)₃, As(CR₂CR₂)₃, AsO(CR₂CR₂)₃, Sb, SbO, SbS, SbSe, SbTe, Sb(O)₃, SbO(O)₃, Sb(OCR₂)₃, SbO(OCR₂)₃, Sb(CR₂)₃, SbO(CR₂)₃, Sb(CR₂CR₂)₃, SbO(CR₂CR₂)₃, Bi, BiO, BiS, BiSe, BiTe, Bi(O)₃, BiO(O)₃, Bi(OCR₂)₃, BiO(OCR₂)₃, Bi(CR₂)₃, BiO(CR₂)₃, Bi(CR₂CR₂)₃, BiO(CR₂CR₂)₃, S⁺, S(CR₂)₃⁺, S(CR₂CR₂)₃⁺, Se⁺, Se(CR₂)₃⁺, Se(CR₂CR₂)₃⁺, Te⁺, Te(CR₂)₃⁺, Te(CR₂CR₂)₃⁺;
R est, de façon identique ou différente à chaque occurrence, H, F, Cl, Br, I, OH, NO₂, CN, un groupe alkyle ou alcoxy en chaîne droite, ramifié ou cyclique ayant 1 à 20 atomes de C, dans lequel un ou plusieurs groupes CH₂ non adjacents peuvent être remplacés par -R¹C=CR¹-, -C≡C-, Si(R¹)₂, Ge(R¹)₂, Sn(R¹)₂, C=O, C=S, C=Se, C=NR¹, -O-, -S-, -NR¹- ou -CONR¹- et dans lequel un ou plusieurs atomes de H peuvent être remplacés par F, ou un système de cycle aromatique ou hétéroaromatique ayant 1 à 14 atomes de C, qui peuvent être substitués par un ou plusieurs radicaux non aromatiques R, où deux substituants R ou plus, tous sur le même cycle et également sur les deux cycles différents, peuvent ensemble à leur tour définir un autre système de cycle aliphatique, aromatique et/ou benzo- fusionné nono- ou polycyclique ;
R¹ est, de façon identique ou différente à chaque occurrence, H ou un radical hydrocarbure aliphatique ou aromatique ayant 1 à 20 atomes de C ;
c est, de façon identique ou différente à chaque occurrence, 0 ou 1, sous réserve que c = 0 si le symbole T dans le ligand partiel correspondant représente N ou P.

10. Cryptates organométalliques selon une ou plusieurs des revendications 1 à 8 avec une géométrie de coordination méridionale au métal comme décrits par les composés (5) à (8) 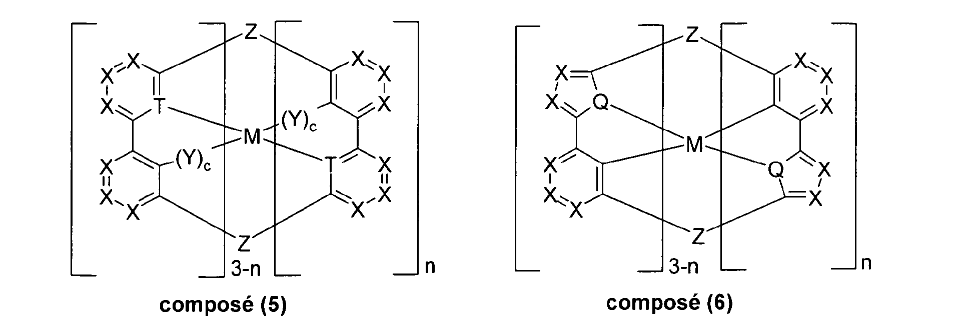 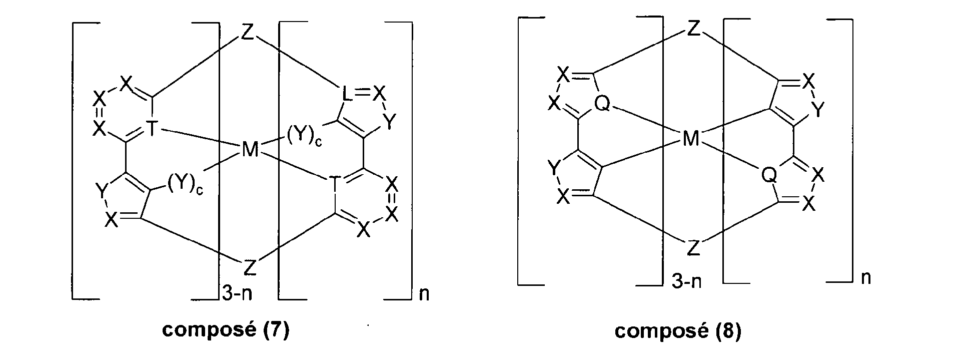 où les symboles et indices M, Q, T, X, Y, Z, R, R¹ et c ont les significations indiquées sous la revendication 9, et n est égal à 1 ou 2.

11. Cryptates organométalliques selon une ou plusieurs des revendications 1 à 8 comme décrits par les composés (9) à (26): 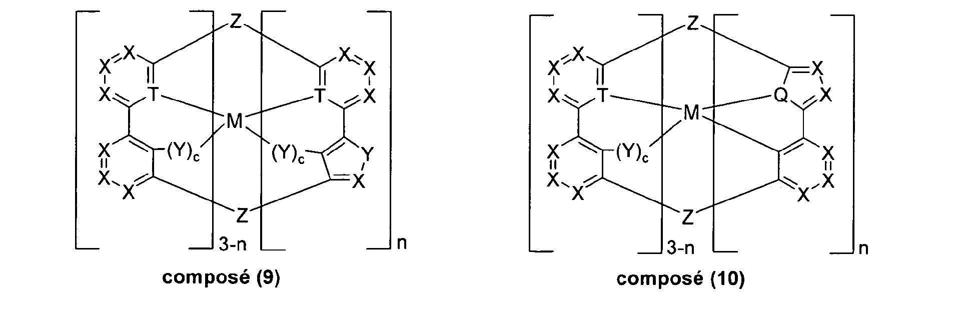 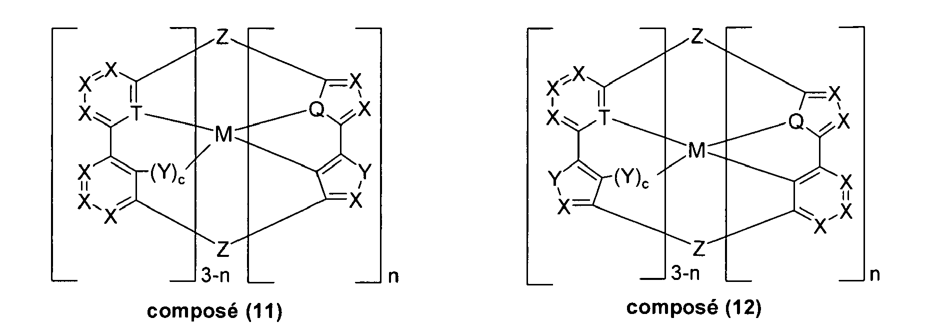 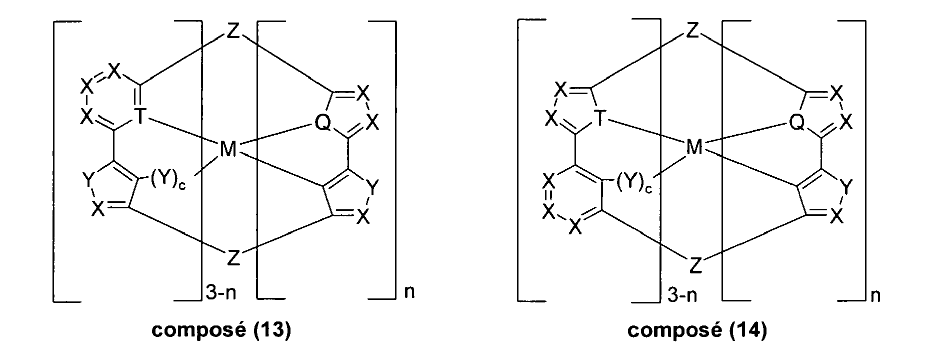 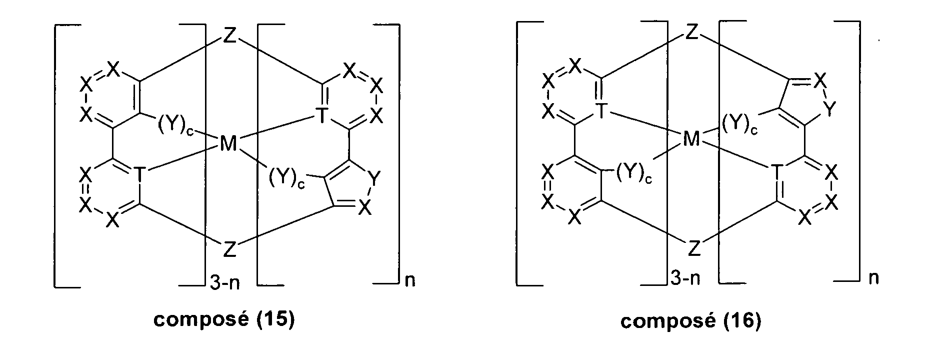 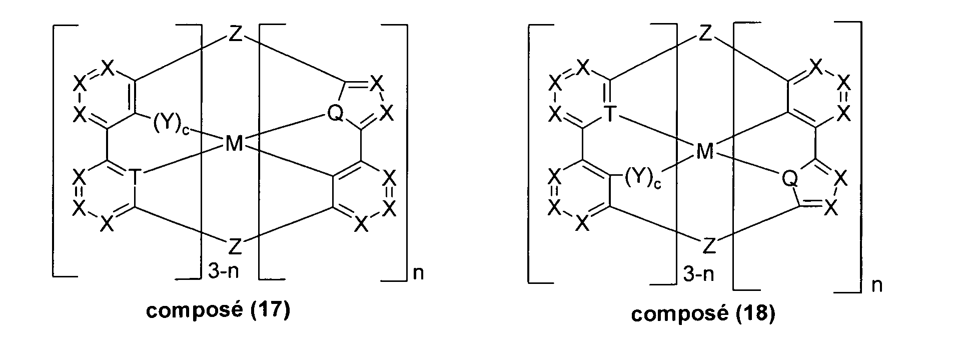 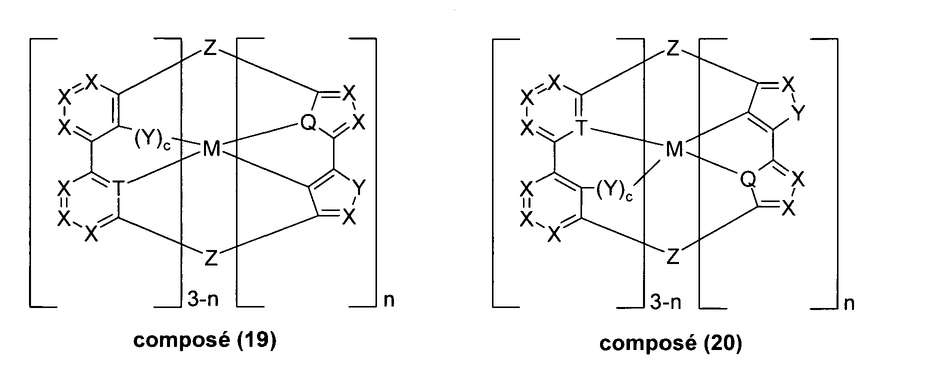 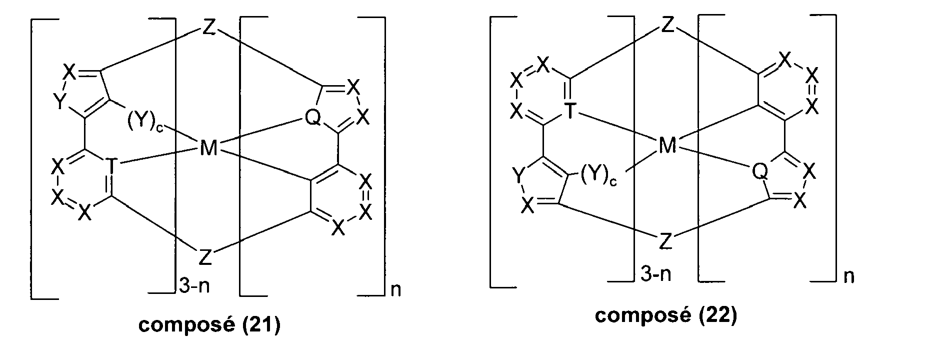 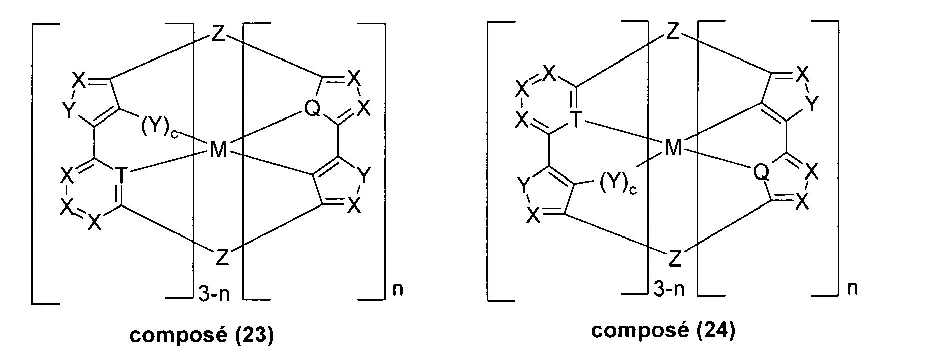 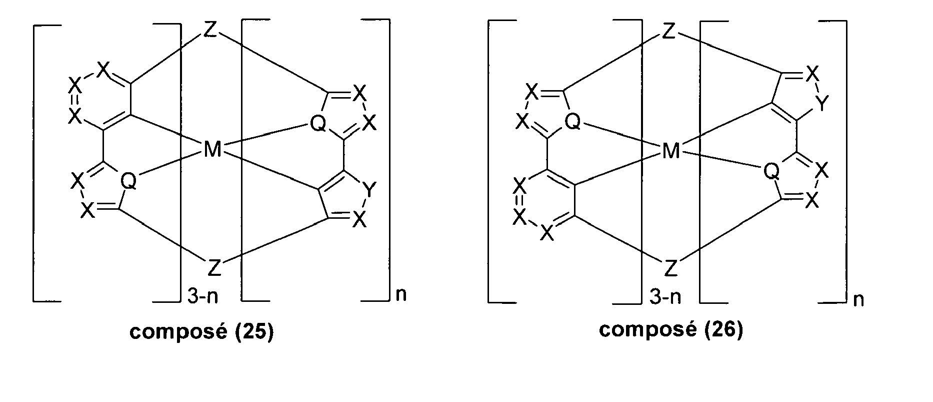 où les symboles et indices M, Q, T, X, Y, Z, R, R¹, c et n ont les significations indiquées sous les revendications 9 et 10.

12. Cryptates organométalliques selon une ou plusieurs des revendications 9 à 11, **caractérisés en ce que** M à chaque occurrence, de façon identique ou différente, représente un ion de métal de transition.

13. Cryptates organométalliques selon une ou plusieurs des revendications 9 à 12, **caractérisés en ce que** Q à chaque occurrence, de façon identique ou différente, représente O, S ou Se.

14. Cryptates organométalliques selon une ou plusieurs des revendications 9 à 13, **caractérisés en ce que** T à chaque occurrence, de façon identique ou différente, représente N ou P.

15. Cryptates organométalliques selon une ou plusieurs des revendications 9 à 14, **caractérisés en ce que** X à chaque occurrence, de façon identique ou différente, représente CR ou N.

16. Cryptates organométalliques selon une ou plusieurs des revendications 9 à 15, **caractérisés en ce que** Z à chaque occurrence, de façon identique ou différente, représente B, BR⁻, B(CR₂)₃, RB(CR₂)₃⁻, B(O)₃, RB(O)₃⁻, B(OCR₂)₃, RB(OCR₂)₃⁻, Al(O)₃, RAl(O)₃⁻, Al(OCR₂)₃, RAl(OCR₂)₃⁻ , CR, CNR¹₂, RC(CR₂)₃, RC(O)₃, RC(CR₂CR₂)₃, RC(CR₂O)₃, RC(OCR₂)₃, SiR, RSi(CR₂)₃, RSi(O)₃, RSi(CR₂CR₂)₃, RSi(OCR₂)₃, RSi(CR₂O)₃, N, NO, NR⁺, N(CR₂)₃, RN(CR₂)₃⁺, N(C=O)₃, N(CR₂CR₂)₃, RN(CR₂CR₂)⁺, P, PO, P(O)₃, PO(O)₃, P(OCR₂)₃, PO(OCR₂)₃, S⁺, S(CR₂)₃⁺, S(CR₂CR₂)₃⁺.

17. Cryptates organométalliques selon une ou plusieurs des revendications 9 à 16, **caractérisés en ce que** Y à chaque occurrence, de façon identique ou différente, représente O, S ou NR¹.

18. Cryptates organométalliques selon une ou plusieurs des revendications 9 à 17, **caractérisés en ce que** l'indice c à chaque occurrence est égal à 0.

19. Polymères et dendrimères conjugués, partiellement conjugués ou non conjugués comprenant un ou plusieurs cryptates organométalliques selon une ou plusieurs des revendications 1 à 18, où un ou plusieurs des substituants R représentent une liaison au polymère ou dendrimère.

20. Polymères selon la revendication 19, **caractérisés en ce qu'**ils sont des polyfluorènes, polyspirobifluorènes, poly-para-phénylènes, polycarbazoles, polydihydrophénanthrènes, polyphénanthrènes, polyvinylcarbazoles, polythiophènes, polymères contenant du silane ou copolymères comprenant une pluralité de ces unités.

21. Cryptands comme décrits par les composés (27) à (52), qui représentent les ligands des cryptates (1) à (26) selon les revendications 9 à 18: 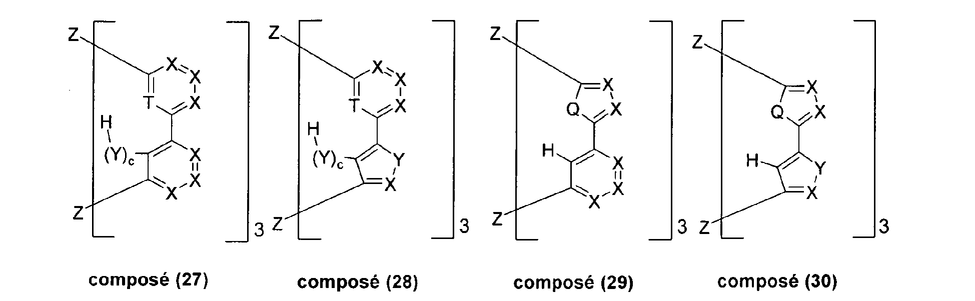 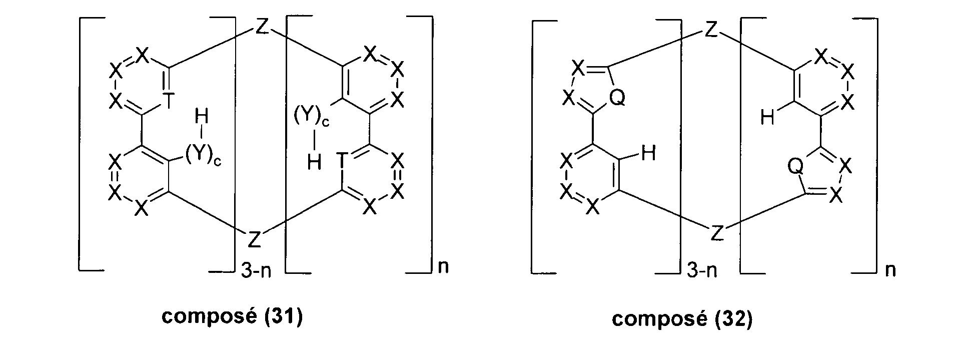 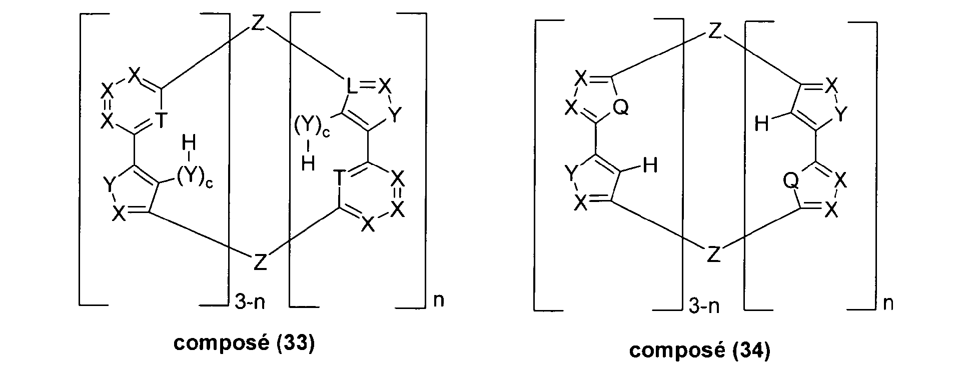 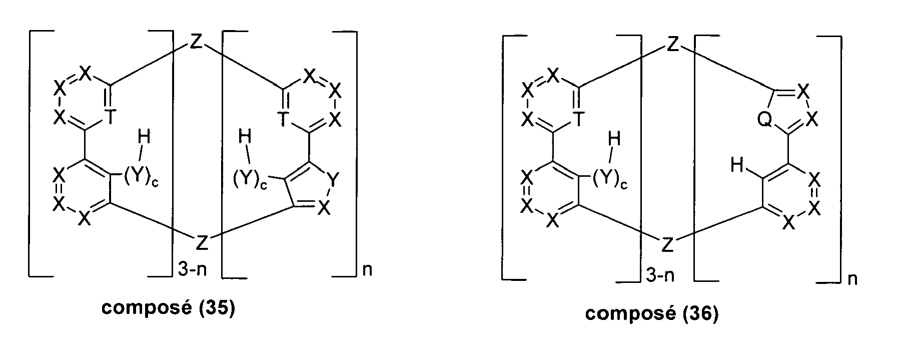 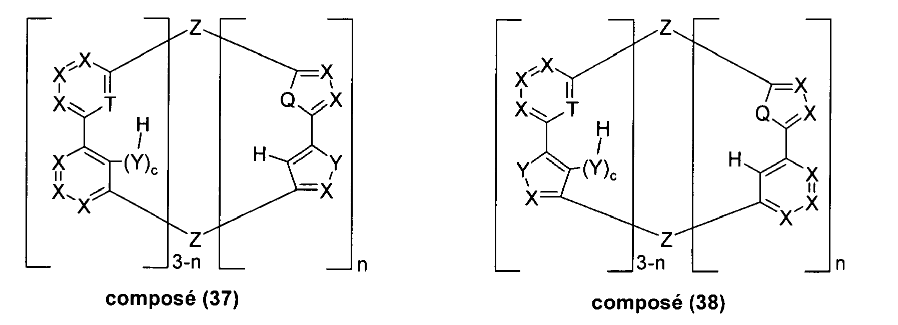 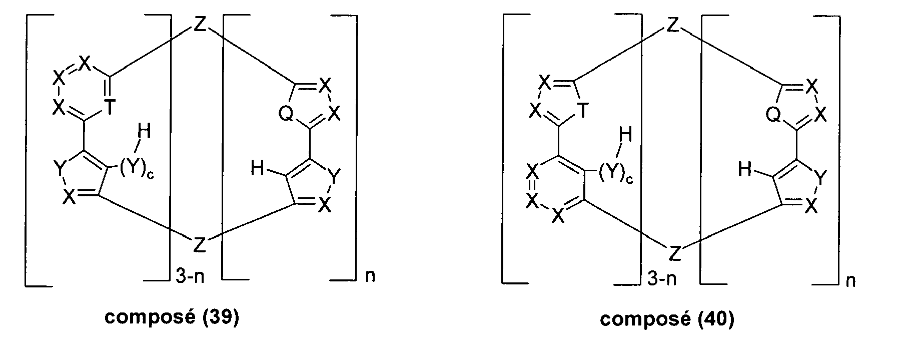 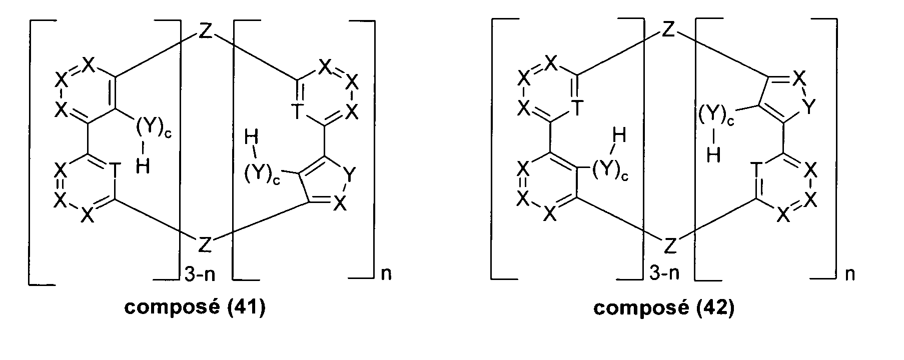 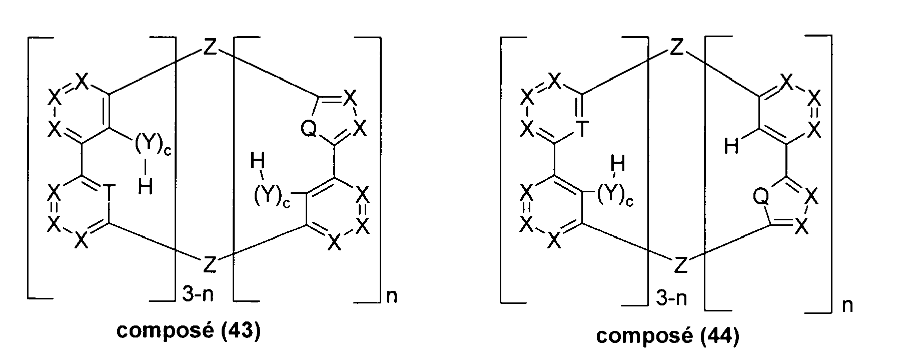 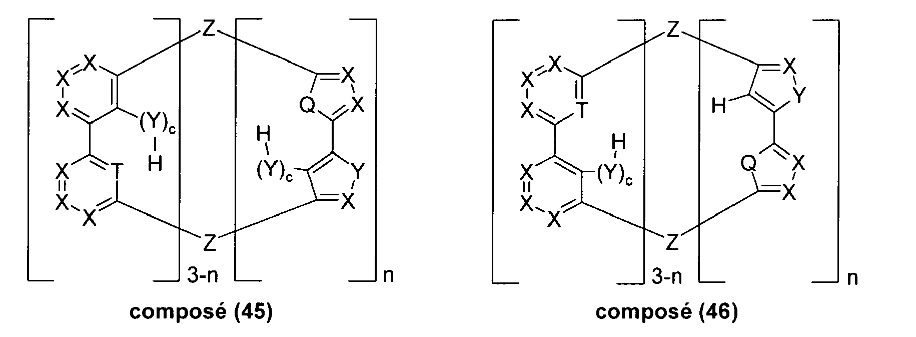 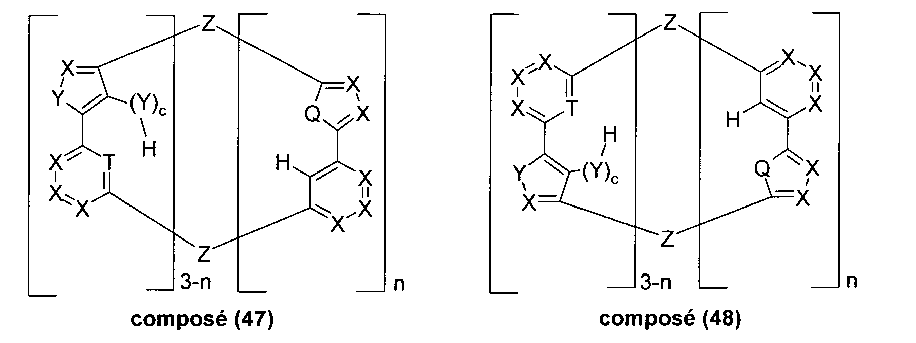 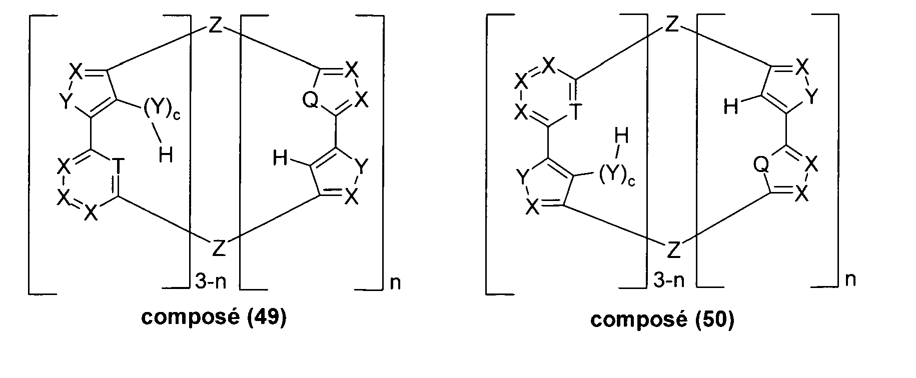 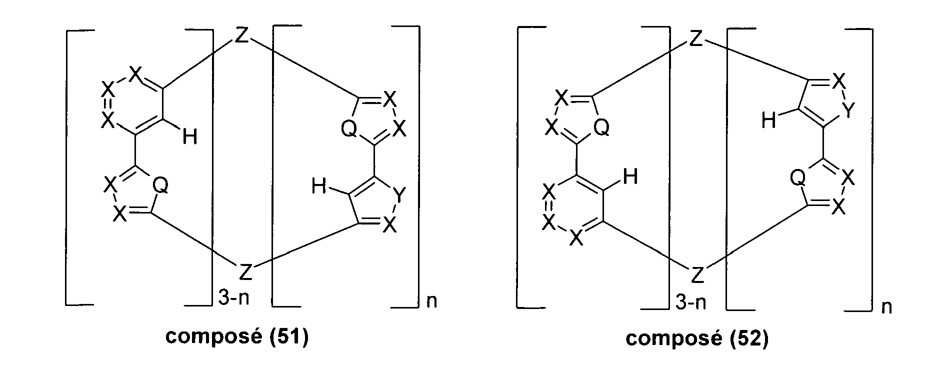 où les symboles et indices Q, T, X, Y, Z, R, R¹, c, n ont les significations indiquées sous les revendications 9 et 10.

22. Procédé pour la préparation de cryptates organométalliques selon une ou plusieurs des revendications 1 à 18 par réaction des cryptands selon la revendication 21 ou précurseurs de ces cryptands avec des alcoxydes de métal comme décrits par le composé (53), avec des cétocétonates de métal comme décrits par le composé (54) ou halogénures de métal comme décrits par le composé (55) 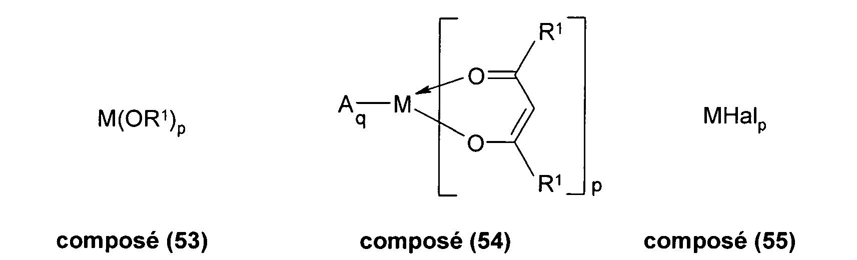 où ce qui suit s'applique aux symboles et indices :
M est à chaque occurrence, de façon identique ou différente, un ion de métal de groupe principal, un ion de métal de transition ou un ion de lantha- noïde;
Hal est à chaque occurrence, de façon identique ou différente, F, CI, Br ou I;
A est à chaque occurrence, de façon identique ou différente, un ligand monodental ou bidental neutre ou monoanionique ;
p est à chaque occurrence, de façon identique ou différente, 1, 2, 3, 4 ou 5, où p dans les composés (53) et (55) indique la valence du métal M ;
q est à chaque occurrence, de façon identique ou différente, 0, 1, 2, 3 ou 4 ;
le composé (54) peut ici également être chargé et peut également contenir un contre-ion ; les autres symboles et indices ont la même signification que celle indiquée sous les revendications 9 et 10.

23. Procédé selon la revendication 22, **caractérisé en ce qu'**un précurseur polypodal du cryptand est employé dans l'étape de complexification, et la seconde unité de pontage V ou Z est introduite dans une seconde étape de synthèse : 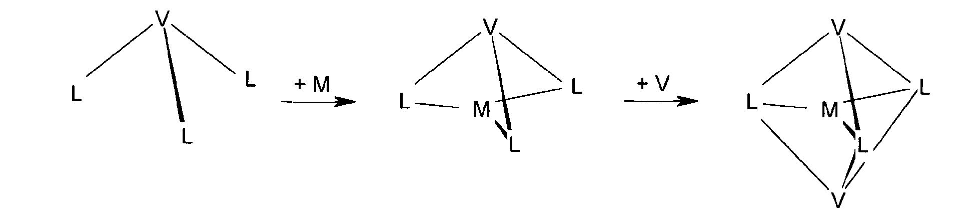 ou **en ce qu'**un précurseur simple du cryptand est employé, et toutes les unités de pontage V et Z sont formées : 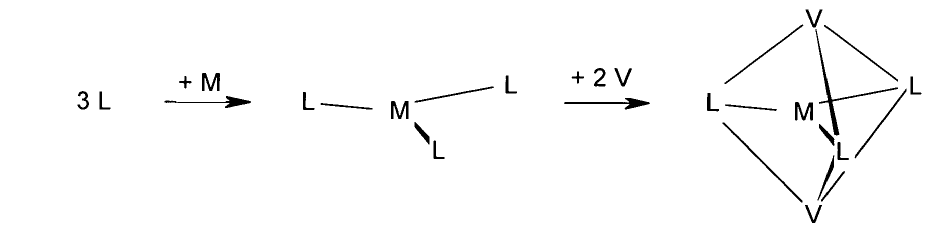 ou **en ce qu'**un précurseur macrocyclique du cryptand est employé, et la troisième ligand partiel L est introduit et lié aux unités de pontage V ou Z :

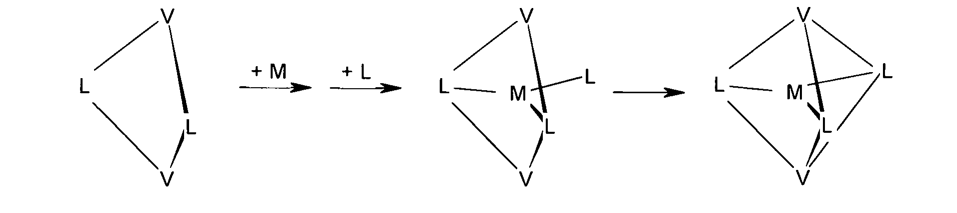

24. Utilisation de cryptates dans des composants électroniques.

25. Utilisation de cryptates , polymères ou dendrimères selon une ou plusieurs des revendications 1 à 20 dans des composants électroniques organiques.

26. Composants électroniques organiques comprenant un ou plusieurs cryptates, **caractérisés en ce que** les cryptates sont décrits par une ou plusieurs des revendications 1 à 20.

27. Composants électroniques organiques selon la revendication 26, **caractérisés en ce qu'**ils sont des diodes émettrices de lumière organiques (OLEDs), des circuits intégrés organiques (O-ICs), des transistors à effet de champ organiques (OFETs), des transistors à film mince organiques (OTFTs), des cellules solaires organiques (O-SCs), des détecteurs optiques organiques ou des diodes laser organiques (O-lasers).
